# EUROPEAN PATENT APPLICATION

(11) **EP 2 293 302 A1**
(43) Date of publication of application: **09.03.2011**
(21) Application number: 09773126.9
(22) Date of filing: 23.06.2009
(51) Int. Cl.: G11B 27/034, G11B 20/10, H04N 5/765, H04N 5/85

(54) **RECORDING DEVICE, RECORDING METHOD, REPRODUCTION DEVICE, AND REPRODUCTION METHOD**

(30) Priority: 30.06.2008 JP 2008170071
(71) Applicant: Panasonic Corporation, Kadoma-shi Osaka 571-8501 (JP)
(72) Inventor: MASAFUMI, Okubo, Osaka 540-6207 (JP); TOMOKAZU, Kanamaru, Osaka 540-6207 (JP)
(74) Representative: Grünecker, Kinkeldey, Stockmair & Schwanhäusser Anwaltssozietät
(86) International application number: PCT/JP2009/002871
(87) International publication number: WO 2010/001548

(57) **Abstract**

Original data is copied from a read-only recording medium to a rewritable portable recording medium. A data storage unit stores therein updated data and mapping information indicating a path of the updated data in the virtual package. A determination unit determines, from the mapping information, a match between a path on the portable recording medium of first stream data included in the original data and a path in the virtual package of second stream data included in the updated data. When the match is determined, the recording control unit instructs that the first stream data be deleted from the portable recording medium. The recording control unit further instructs that the updated data be written on the portable recording medium. The data recording unit further writes and deletes data in response to the instructions from the recording control unit.

## Description

### [Technical Field]

The present invention relates to technology for recording stream data such as a video stream or an audio stream on a recording medium, and playing back the stream data from the recording medium.

### [Background Art]

In conventional data playback technology, when updating original data recorded on a recording medium such as a CD, a DVD, or a semiconductor memory, it is assumed that the original data is to be replaced by the updated data on the recording medium. However, in recent years, technology has been developed, for example, Blu-Ray Disc (hereinafter abbreviated as BD) data playback technology, in which original stream data is virtually updated by playing back stream data from updated data together with original data. In this technology, first, a playback apparatus is connected to a network such as the Internet, and thus caused to download updated data from a server apparatus on the network to an internal HDD or semiconductor memory device. Next, the recording apparatus is caused to play back stream data from original data recorded on a playback medium such as a BD, and to play back stream data from updated data stored on the internal HDD, etc. at the same time. By doing this, a portion of video/audio/subtitles reproduced from the original data can be replaced with video/audio/subtitles from the updated data, or can be displayed so that video images, etc. from the updated data is superimposed over video images, etc. from the original data. For example, even when a movie content recorded on the recording medium only includes English subtitle data, Japanese subtitle data can be downloaded from the server apparatus to the playback apparatus, and the Japanese subtitle data can be displayed to replace the English subtitle data when playing back the content.

When the original stream data is virtually updated as described above, the updated data is required to be stored on the playback apparatus. However, continuously storing the updated data on the playback apparatus causes difficulty in improving the use efficiency of the storage/memory device by the playback apparatus. Meanwhile, downloading updated data from the server apparatus to the playback apparatus each time original stream data is played back causes difficulty in shortening the time between insertion of the recording medium into the playback apparatus and the start of a playback process. To solve the above problems, the following technology is known, for example. In this technology, the original data and the updated data are recorded on one recording medium, and when that recording medium is inserted in the playback apparatus, the updated data is transferred from the recording medium to an internal HDD, etc. (for example, see Patent Literature 1).

### [Citation List]

### [Patent Literature]

Patent Literature 1: Japanese Patent Application Publication No.2007-257047

### [Summary of Invention]

### [Problem to be Solved by the Invention]

The technology for recording original data and updated data on one recording medium and transferring the updated data from the recording medium to an HDD, etc. in the playback apparatus has the advantage of facilitating reading of updated data even on a playback apparatus that cannot easily be connected to an external network, such as a car navigation system. Additionally, this technology has the advantage of facilitating parallel playback of different stream data from the original data and updated data. However, in the conventional technology, the entirety of original data and the entirety of updated data are both recorded, as is, on one recording medium. Accordingly, a total amount of data to be recorded readily exceeds a data capacity of the recording medium. As a result, it is difficult to reliably store the original data and the updated data on one recording medium.

The present invention has been achieved in view of the above problems, and an aim thereof is to provide a recording apparatus that can improve reliability of a process of storing original data and updated data on one recording medium.

### [Solution to Problem]

The recording apparatus according to an embodiment of the present invention is an apparatus for recording updated data onto a rewritable portable recording medium. Here, original data has been copied from a read-only recording medium to the portable recording medium, the original data including first stream data, and the updated data including second stream data. Also, the updated data is to be combined virtually with the original data to form a virtual package. This recording apparatus includes a data storage unit, a determination unit, a recording control unit, and a data recording unit. The data storage unit stores therein the updated data and mapping information indicating a path of the updated data in the virtual package. The determination unit performs path collation. To perform the path collation, a determination is made from the mapping information whether a path to the second stream data in the virtual package matches a path to the first stream data on the portable recording medium. The recording control unit issues an instruction to write the updated data onto the portable recording medium. The recording control unit further, when the result of the path collation is affirmative, issues an instruction to delete the first stream data from the portable recording medium. The data recording unit writes and deletes data in response to the instructions from the recording control unit. This enables the first stream data to be deleted from the portable recording medium when the first stream data is to be replaced with the second stream data during construction of the virtual package. Accordingly, this enables a reduction in the amount of data recorded onto the portable recording medium.

The mapping information may include information indicating whether the second stream data is missing data. Here, missing data means a portion of the second stream data that is to be downloaded during or before playback of the portion from a server apparatus on a network. In this case, the determination unit may perform a missing data determination. To perform the missing data determination, a determination is made from the mapping information whether the second stream data is missing data. Meanwhile, when the result of the missing data determination is affirmative, the recording control unit disables the instruction to write the second stream data onto the portable recording medium. This enables the recording apparatus to avoid writing the second stream data onto the portable recording medium when the second stream data is missing data. Accordingly, the total amount of data written onto the portable recording medium can be reduced.

Additionally, in a case that the recording apparatus according to an embodiment of the present invention further includes a communication unit that performs communication with a server apparatus, when the result of the missing data determination is affirmative, the determination unit may check whether the second stream data is currently stored in the data storage unit, and when the result of the missing data determination is affirmative and the second stream data is not currently stored in the data storage unit, the recording control unit may instruct the communication unit to download the second stream data from the server apparatus to the data storage unit. By doing this, the second stream data can be written on the portable recording medium even when the second stream data is missing data. Accordingly, the second stream data can be reliably read from the portable recording medium even by a recording apparatus that is not connected to a network, or a recording apparatus that cannot easily maintain a connection with the network.

The original data may further include first playback path information, and the updated data may further include second playback path information and clip information. Here, the first playback path information indicates a playback path of first stream data, and the second playback path information is updated from the first playback path information with information indicating a playback path of the second stream data. The clip information indicates a correspondence between a playback path of the second stream data and an address thereof. In this case, the recording control unit may assign the path on the portable recording medium, as a path of a destination to write each portion of the updated data other than the second stream data and the clip information; the path on the portable recording medium is equivalent to a path in the virtual package to a portion of the updated data. The recording control unit may assign predetermined paths on the portable recording medium as the paths of destinations to write the identification information of the updated data and the mapping information. This enables the deletion of the original data corresponding to the updated data other than the second stream data and the clip information. Accordingly, the total amount of data written on the portable recording medium can be reduced. Also, when constructing the virtual package from the portable recording medium, the mapping information can be corrected with use of the identification information, and thus the playback apparatus can correctly construct the virtual package. Additionally, the recording control unit may delete information indicating a path in the virtual package to the portion of the updated data other than the second stream data and the clip information from the mapping information, and then issue an instruction to write the mapping information. Since this enables the mapping information written on the portable recording apparatus to be already corrected, the playback apparatus can correctly construct the virtual package from the portable recording medium.

When the result of the path collation is negative, the determination unit may further perform a parallel playback determination. To perform the parallel playback determination, a determination is made from the second playback path information whether the first stream data is to be played back by the playback apparatus in parallel with the second stream data. When the result of the parallel playback determination is affirmative, the recording control unit may assign predetermined paths in the portable recording medium as paths of destinations to write the second stream data, the clip information, and the mapping information. Meanwhile, when the result of the parallel playback determination is negative, the recording control unit may assign a path of the second stream data and the clip information in the virtual package as a destination to write the second stream data and the clip information. By doing this, when the second stream data need not be played back in parallel with the first stream data, the second stream data can be directly played back from the portable recording medium by the playback apparatus. Accordingly, a smaller memory capacity in the playback apparatus is required for a process of playing back the stream data from the portable recording medium. Furthermore, a shorter time is required between insertion of the portable recording medium in the playback apparatus and the start of playing back the stream data.

The playback apparatus of an embodiment of the present invention is an apparatus for playing back data from a rewritable portable recording medium. Here, original data, updated data, mapping information, and identification information are recorded on the portable recording medium. The original data is copied from the read-only recording medium. The updated data is combined with the original data to form a virtual package. The mapping information indicates a path to the updated data in the virtual package. The identification information indicates data specified as a portion of the updated data in the mapping information. This playback apparatus includes a data reading unit, an updated data transfer unit, a data storage unit, a mapping information rewriting unit, a virtual file system, a playback target instruction unit, and a playback unit. The data reading unit reads data from the portable recording medium in response to an instruction. The updated data transfer unit detects mapping information from the portable recording medium and issues the instruction to the data reading unit to read the updated data and the mapping information from the portable recording unit. The data storage unit stores therein the updated data and the mapping information read from the portable recording medium. The mapping information rewriting unit detects the identification information from the portable recording medium, and deletes, from the mapping information, information indicating the paths in the virtual package to the data indicated in the identification information. The virtual file system constructs the virtual package according to the mapping information. When instructed to read, from the virtual package, the data included in the original data, the virtual file system further instructs the data reading unit to read the data from the portable recording medium; and when instructed to read the data included in the updated data, the virtual file system reads the data from the data storage unit. The playback target instruction unit selects stream data to be played back from at least one of the original data and the updated data, and instructs the virtual file system to read from the virtual package the stream data to be played back. The playback unit plays back the stream data. By doing this, even when the mapping information indicates a path in the virtual package to data not actually included in the updated data, the playback apparatus can correct the mapping information with use of the identification information. Accordingly, the playback apparatus can correctly construct the virtual package.

### [Advantageous Effects of Invention]

The playback apparatus according to an embodiment of the present invention deletes the first stream data from the portable recording medium when the path of the second stream data in the virtual package matches the path of the first stream data on the portable recording medium. By doing this, the recording apparatus according to the embodiment of the present invention can improve reliability of a process of storing original data and updated data on one recording medium.

### [Brief Description of Drawings]

Fig.1 shows a schematic view of a usage configuration of a recording/playback apparatus pertaining to embodiment 1 of the present invention;
Fig.2 shows a schematic view of a structure of data recorded on a BD-ROM disc;
Fig.3 shows a schematic view of a structure of data recorded on a BD-RE disc;
Figs.4A and 4B show schematic views of a video displayed on a display in two different operation modes of the recording/playback apparatus shown in Fig.1, Fig.4A showing one scene of the video being played back in HDMV mode, and Fig.4B showing the one scene of the video being played back in BD-J mode;
Figs.5A, 5B, and 5C show schematic views of elementary streams that constitute AV stream files, in order according to playback time;
Fig.6 shows a schematic view of an arrangement of TS packets of elementary streams included in the AV stream files;
Fig.7 shows a schematic view of a data structure of a clip information file;
Fig.8 shows a schematic view of a data structure of a playlist file;
Fig.9 shows a schematic view of a data structure of playitem information;
Fig. 10 shows a schematic view of portions of AV stream files played back according to a main path and two sub-paths indicated by the playlist information shown in Fig.8;
Fig. 11 is a block diagram showing a hardware structure of the recording/playback apparatus shown in Fig.1;
Fig. 12 shows a schematic view of a directory structure of a binding unit stored in a local storage shown in Fig.11;
Fig.13 shows a schematic view of a data structure of mapping information file;

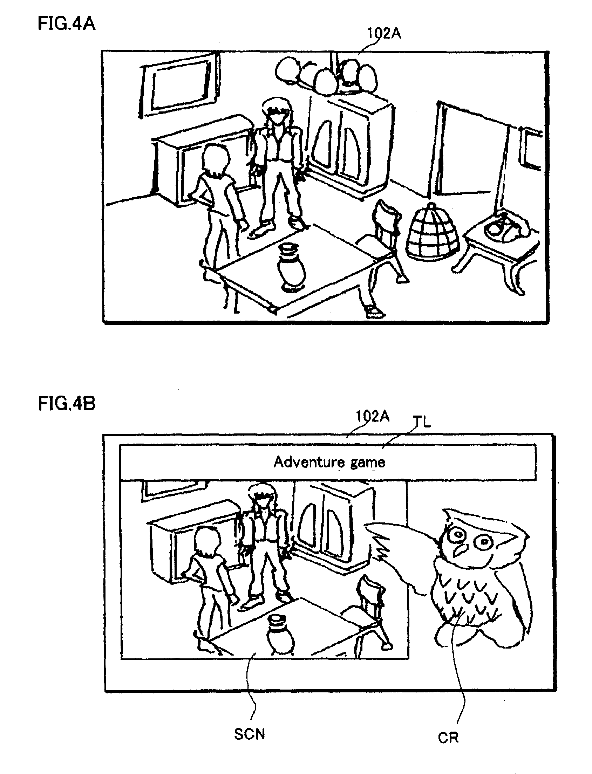

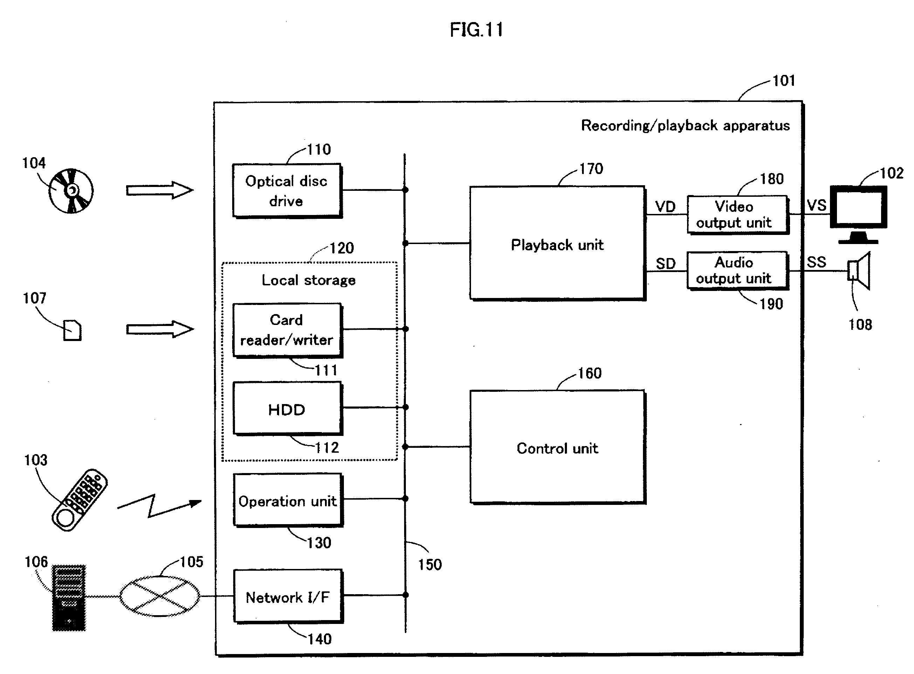

Fig.4 is a functional block diagram of a control unit shown in Fig.11;

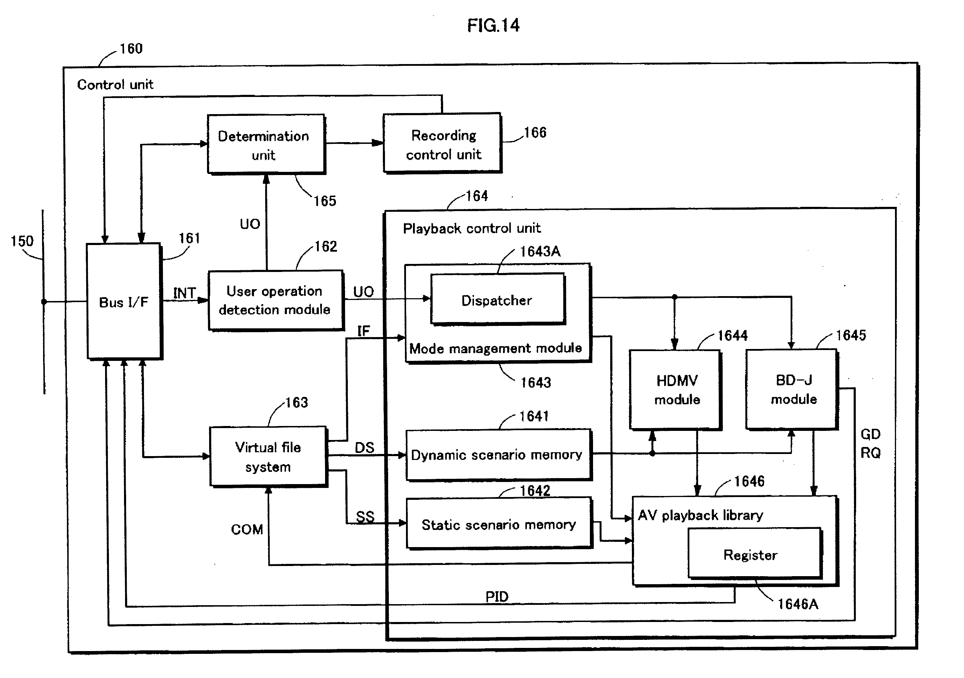

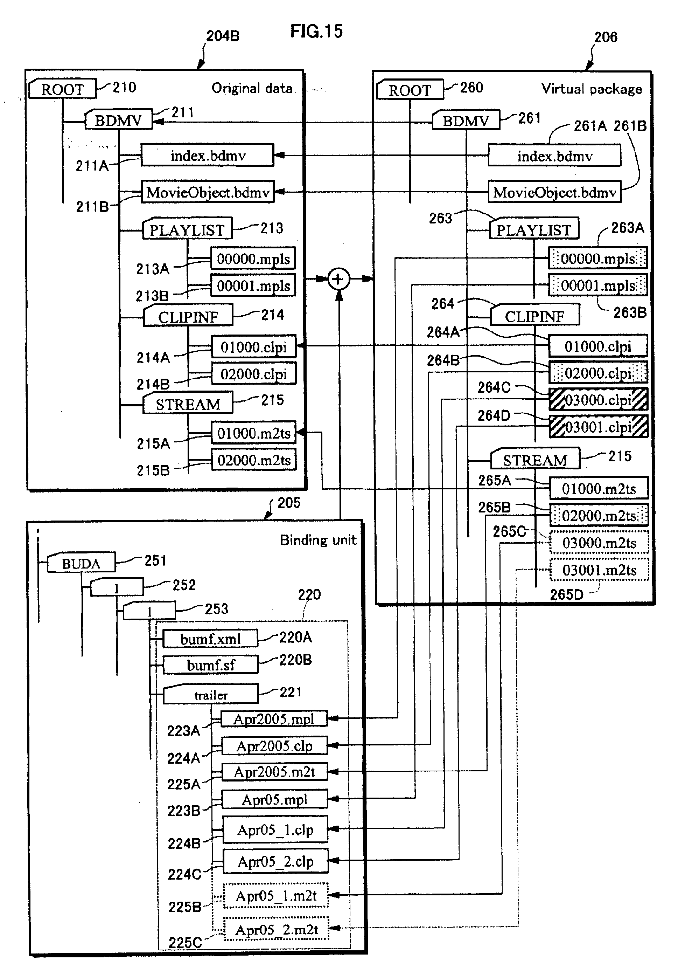

Fig.15 shows a schematic view of a process to construct a virtual package by a virtual file system shown in Fig.14;

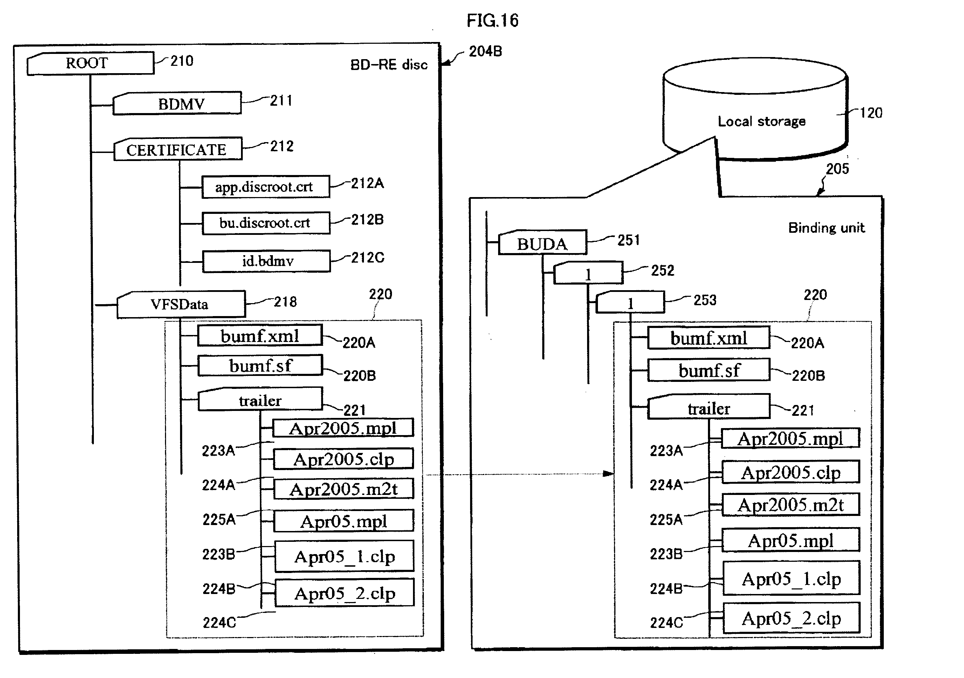

Fig.16 shows a schematic view of a process to transfer a binding unit by a recording/playback apparatus shown in Fig.11;

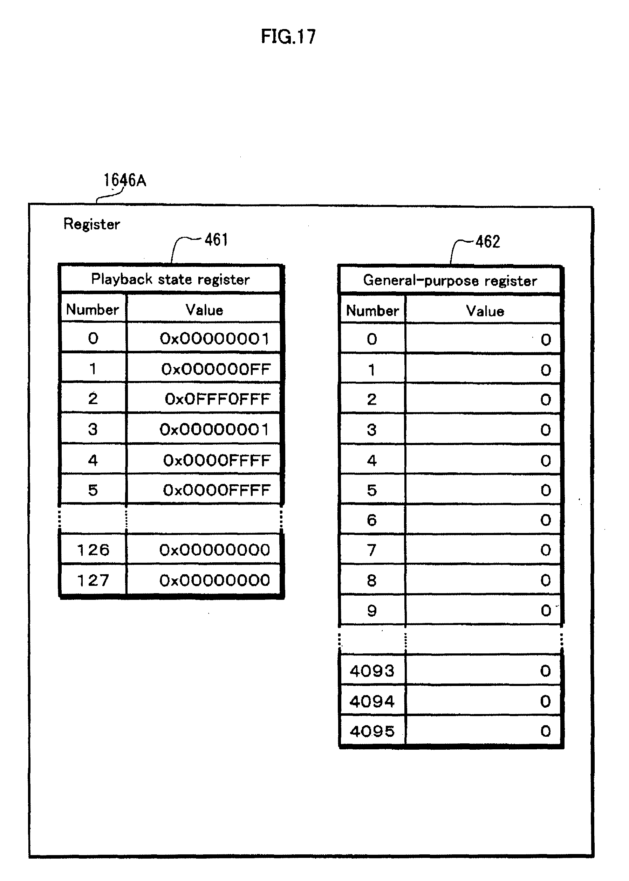

Fig.17 shows a schematic view of values stored in registers shown in Fig.14;

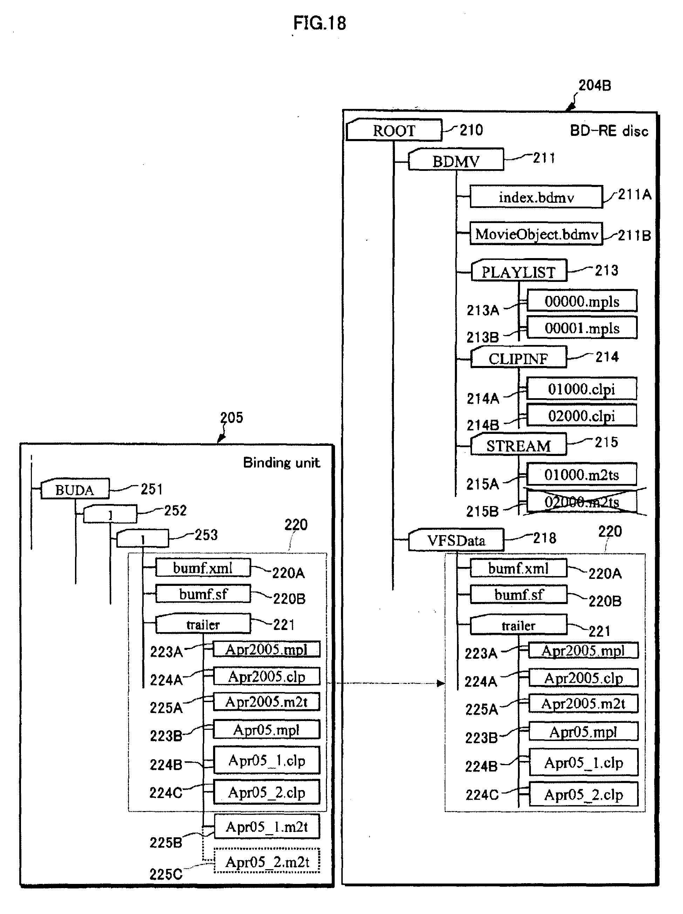

Fig.18 shows a schematic view of a process to append the binding unit by the recording control unit shown in Fig.14;

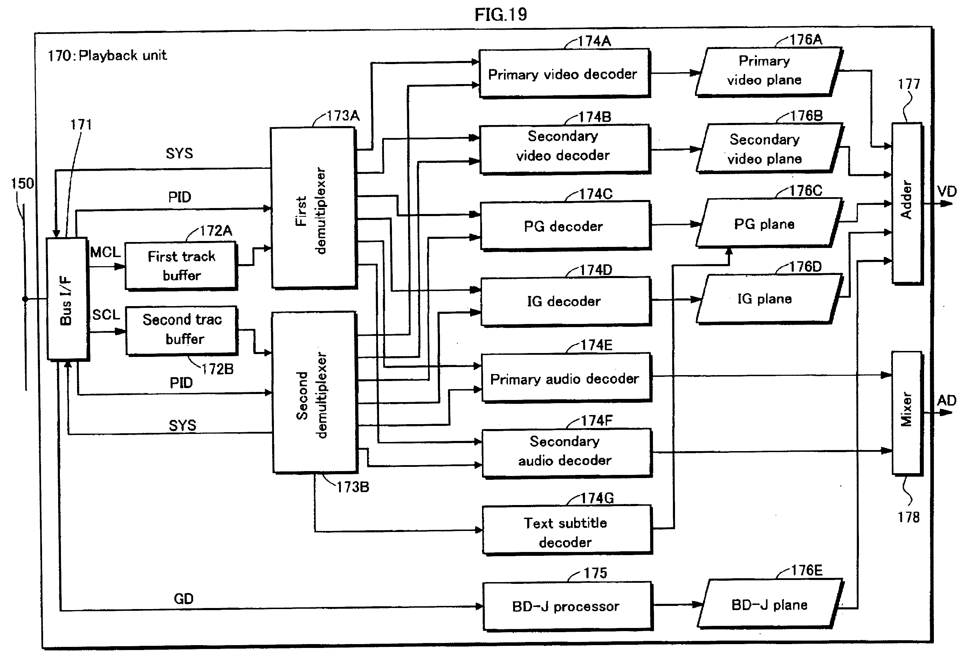

Fig.19 is a functional block diagram of a playback unit shown in Fig.11;

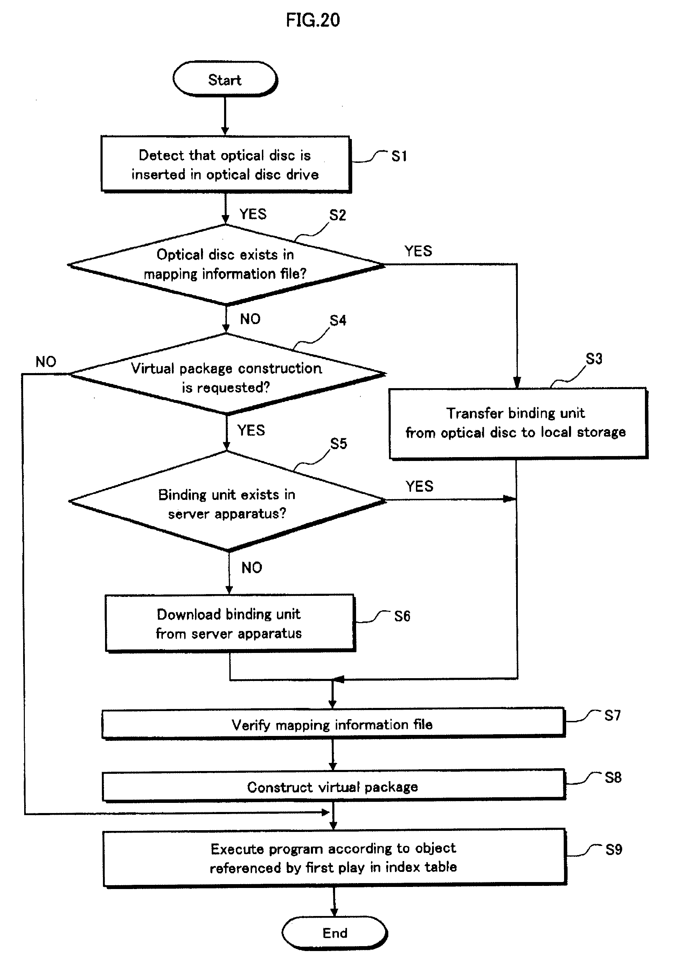

Fig.20 is a flowchart of a playlist playback process executed by the recording/playback apparatus shown in Fig.11, immediately after an optical disc is inserted into an optical disc drive;

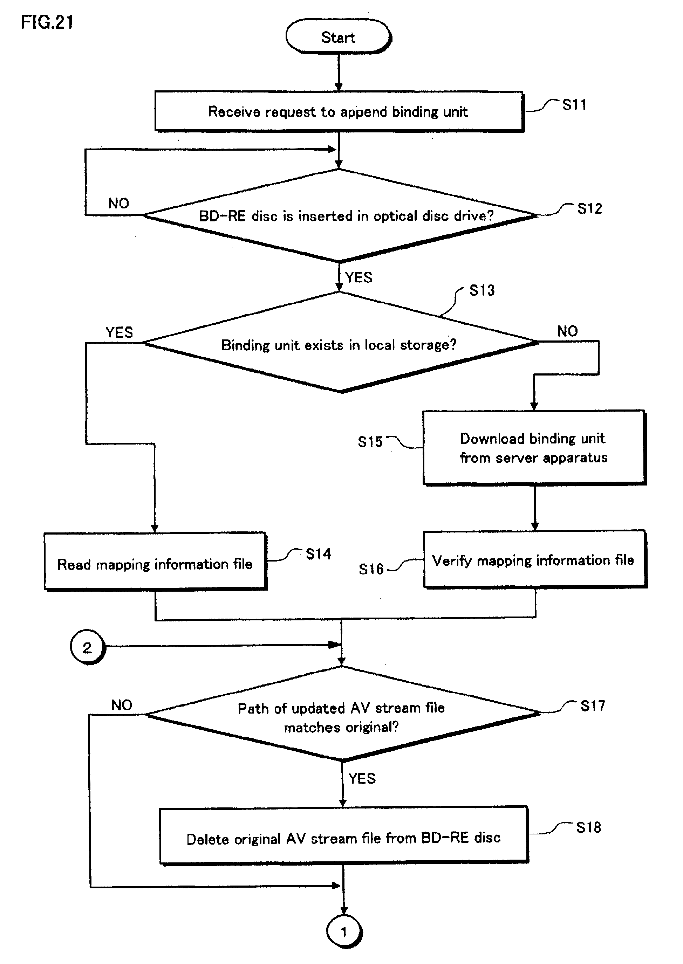

Fig.21 is the first half of a flowchart of a process to append the binding unit to the BD-RE disc by the recording/playback apparatus shown in Fig.11;

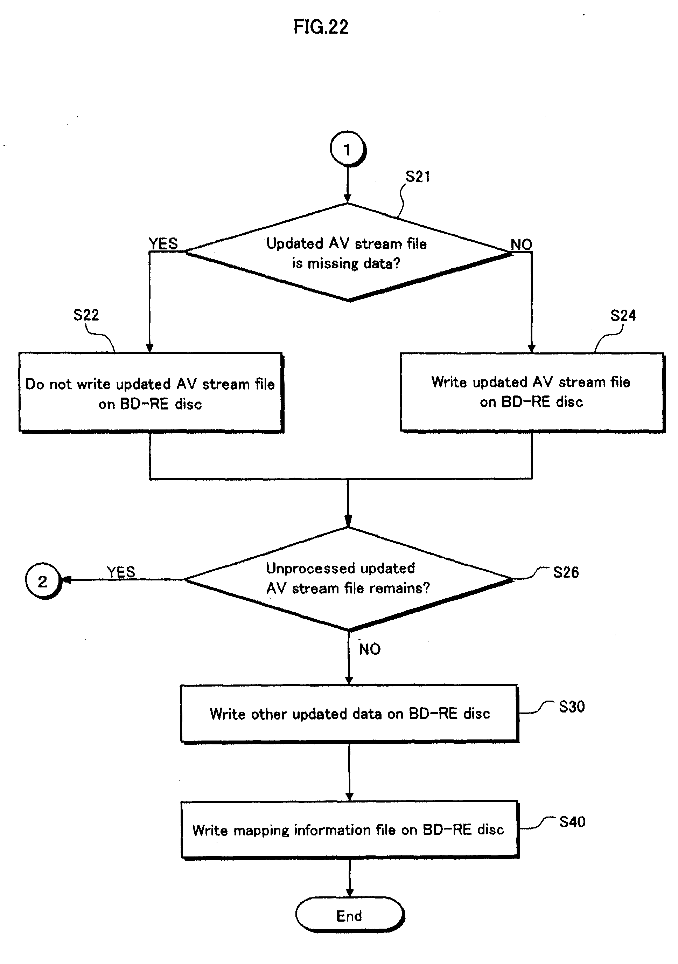

Fig.22 is the second half of the flowchart of the process to append the binding unit to the BD-RE disc by the recording/playback apparatus shown in Fig.11;

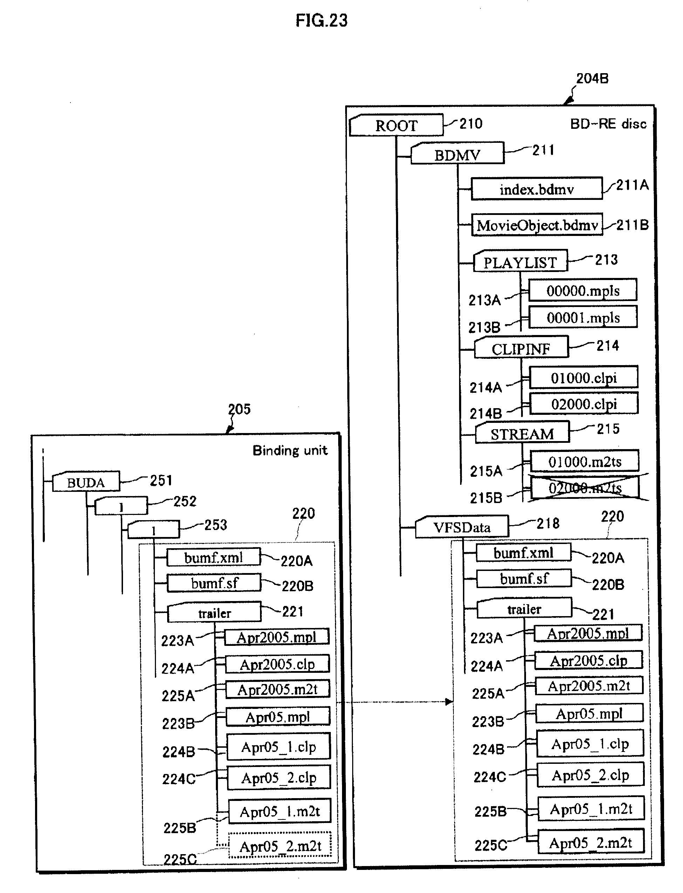

Fig.23 shows a schematic view of a process to append a binding unit by the recording control unit shown in Fig.11;

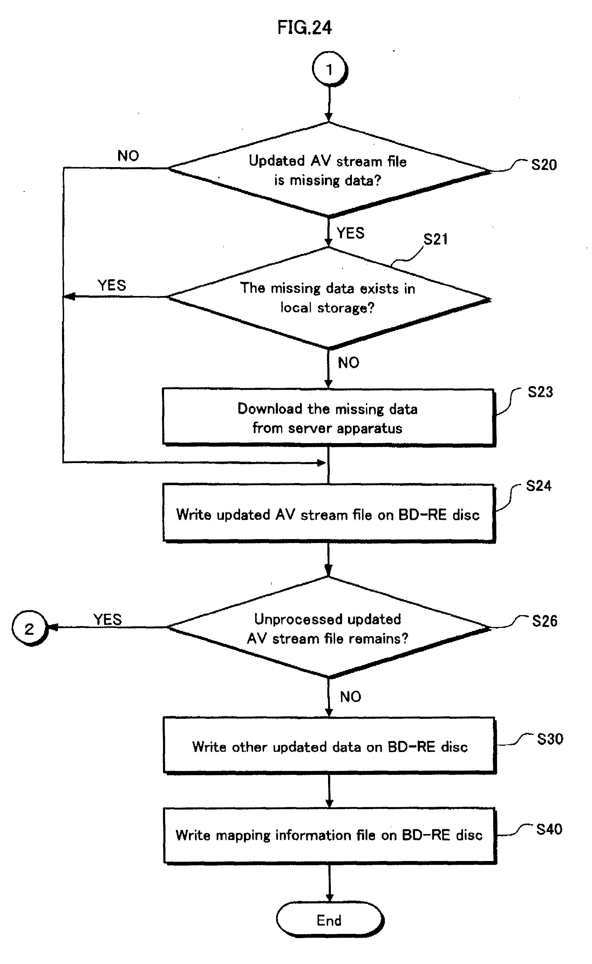

Fig.24 is a flowchart of a portion of the process to append the binding unit to the BD-RE disc by the recording/playback apparatus shown in Fig.11, the portion indicating a missing data determination and steps thereafter;

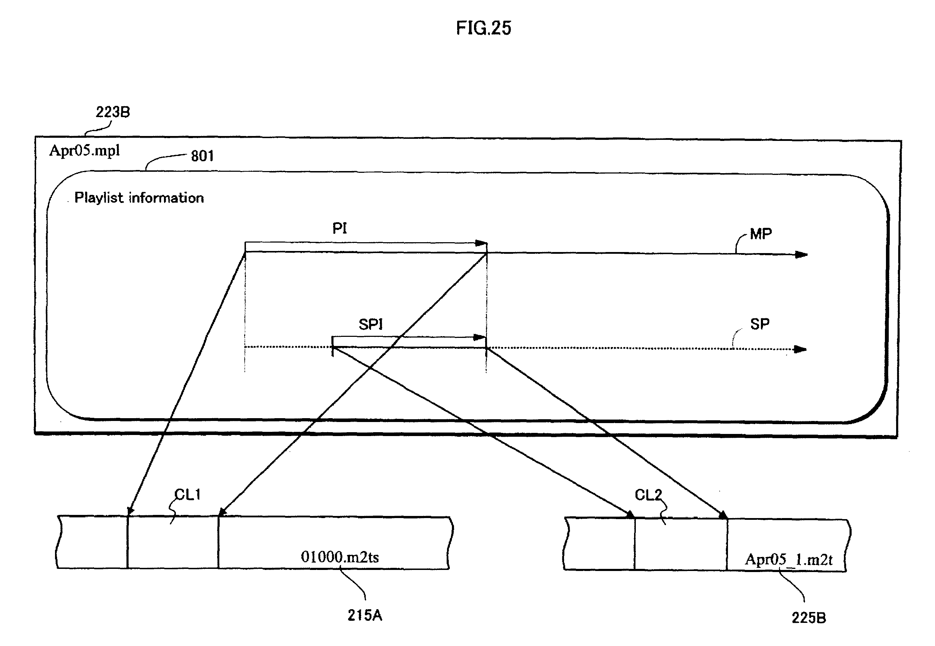

Fig.25 shows a schematic view of a case when a playback section of an updated AV stream file is parallel to a playback section of an original AV stream file;

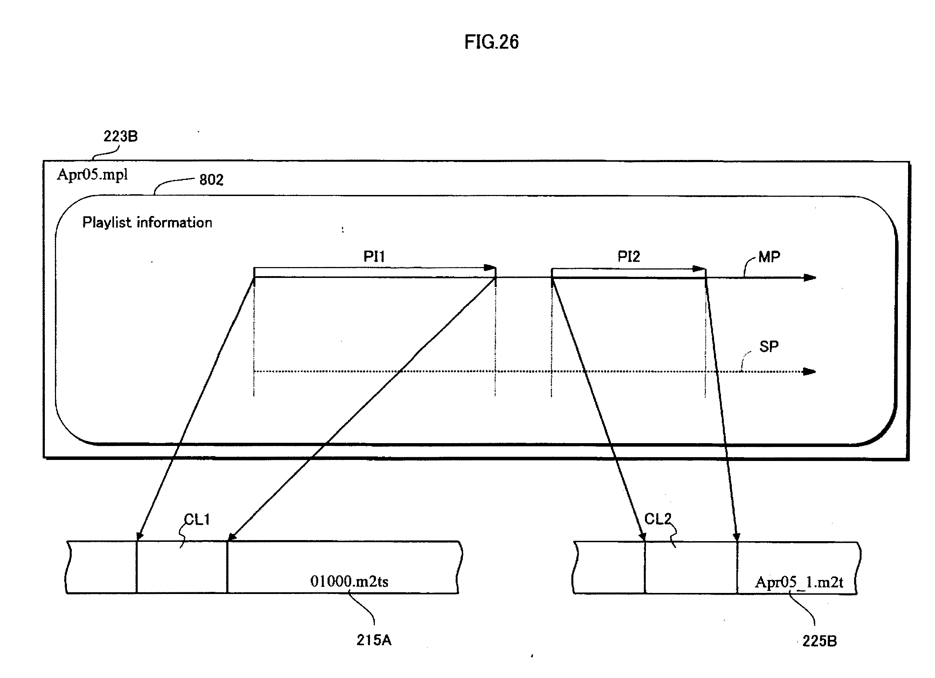

Fig.26 shows a schematic view of a case when a playback section of an updated AV stream file is separated from a playback section of the original AV stream file;

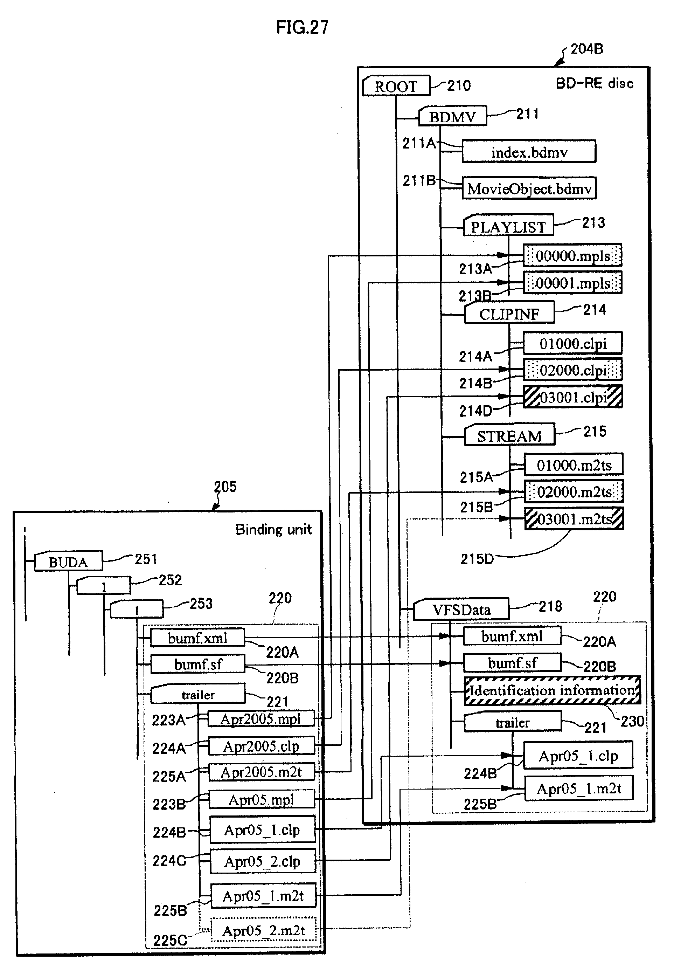

Fig.27 shows a schematic view of a process to append a binding unit by the recording control unit in a case that updated data is included in the updated AV stream file shown in Fig.25;

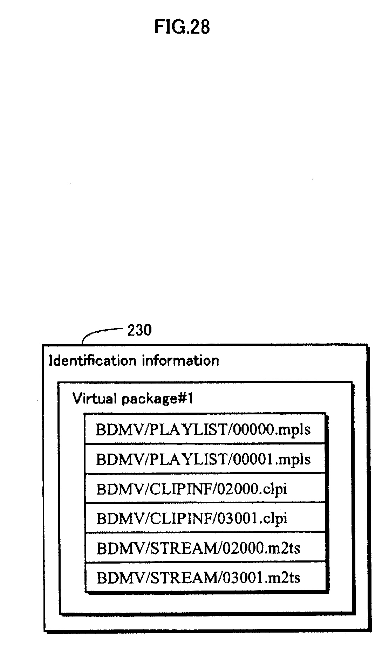

Fig.28 shows a schematic view of a data structure of an identification information file shown in Fig.27;

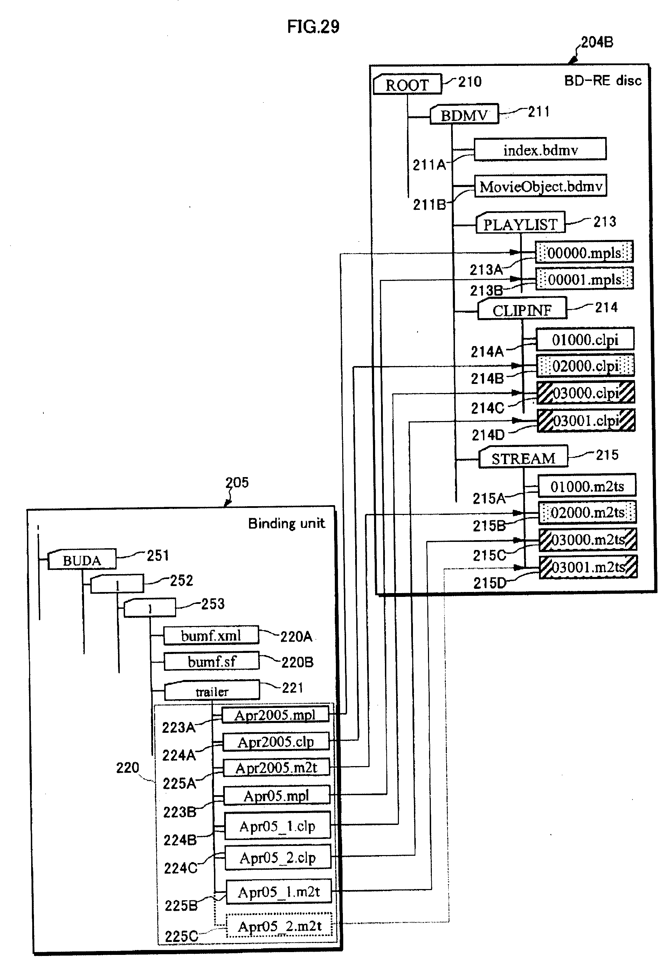

Fig.29 shows a schematic view of a process to append the binding unit by the recording control unit when all updated AV stream files included in updated data are similar to those shown in Fig.26;

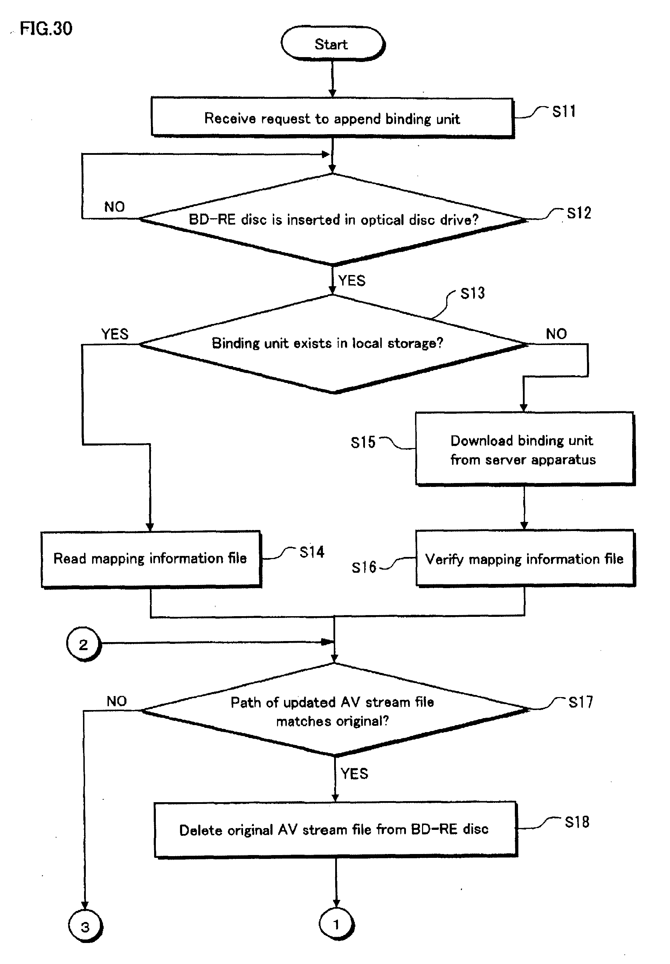

Fig.30 is the first of three portions of a flowchart of a process to append a binding unit according to embodiment 3 of the present invention, the three portions showing a path collation and steps thereafter;

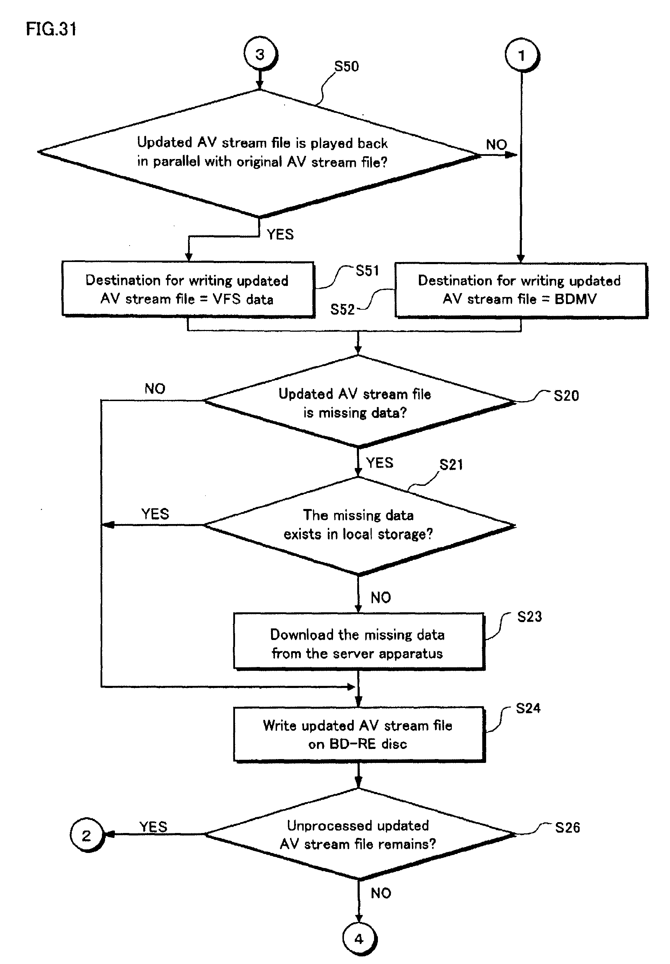

Fig.31 is the second of the three portions of the flowchart of the process to append the binding unit according to embodiment 3 of the present invention;

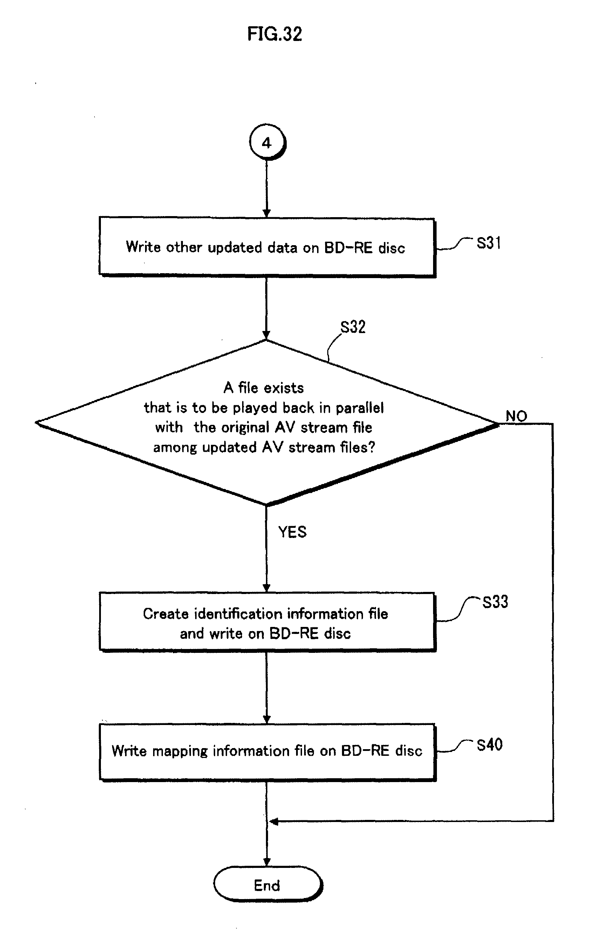

Fig.32 is the third of the three portions of the flowchart of the process to append the binding unit according to embodiment 3 of the present invention;

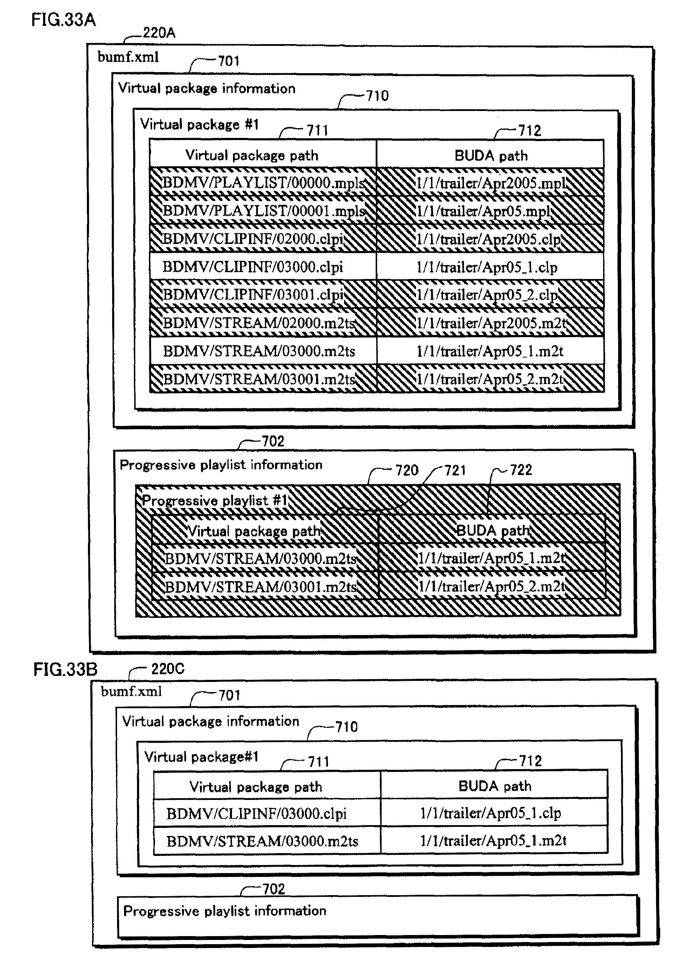

Fig.33 shows a schematic view of a process to rewrite a mapping information file by the recording control unit according to embodiment 3 of the present invention, Figs.33A and 33B showing the mapping information file before and after being rewritten, respectively;

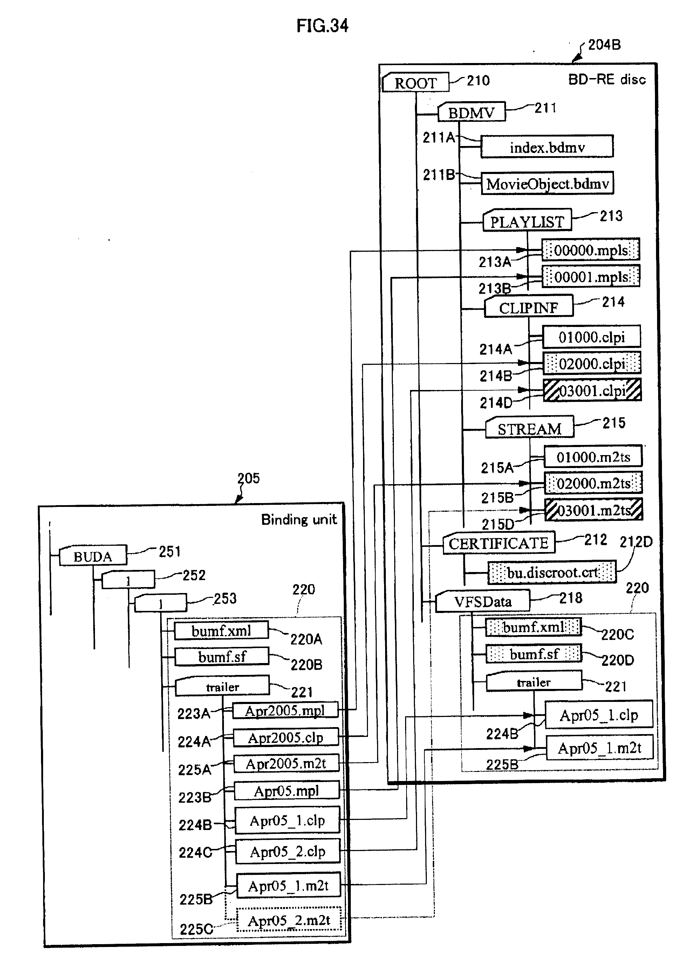

Fig.34 shows a schematic view of a process to append a binding unit by the recording control unit when updated data includes the updated AV stream file shown in Fig.25;

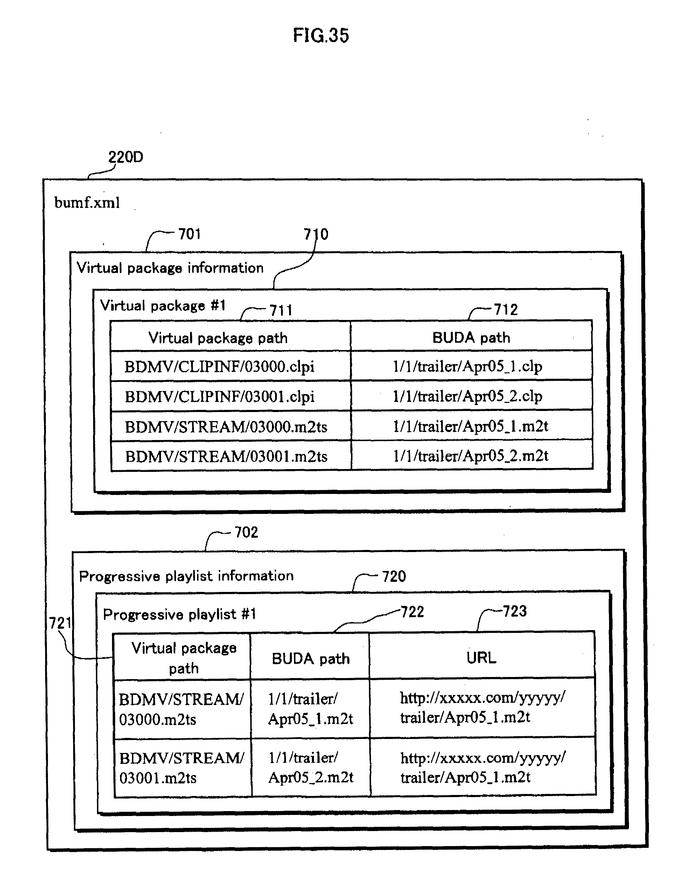

Fig.35 shows a schematic view of a rewritten mapping information file;

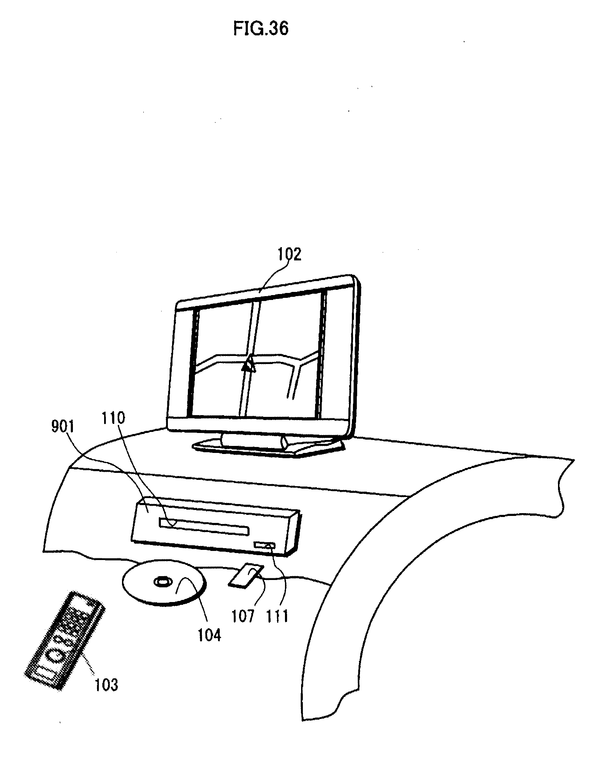

Fig.36 shows a schematic view of a usage configuration of a playback apparatus according to embodiment 4 of the present invention;

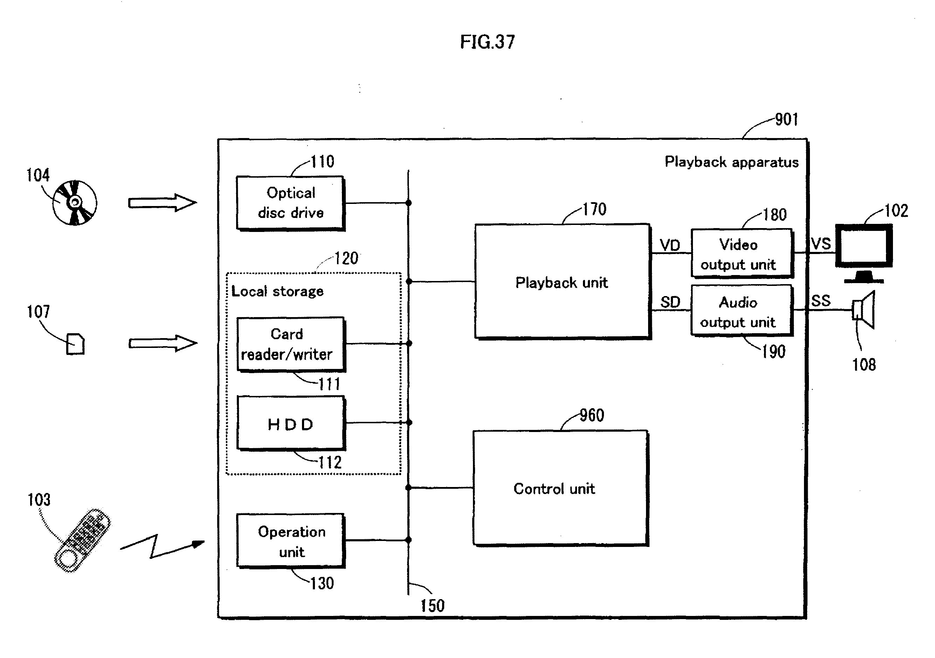

Fig.37 is a block diagram showing a hardware structure of the playback apparatus shown in Fig.36;

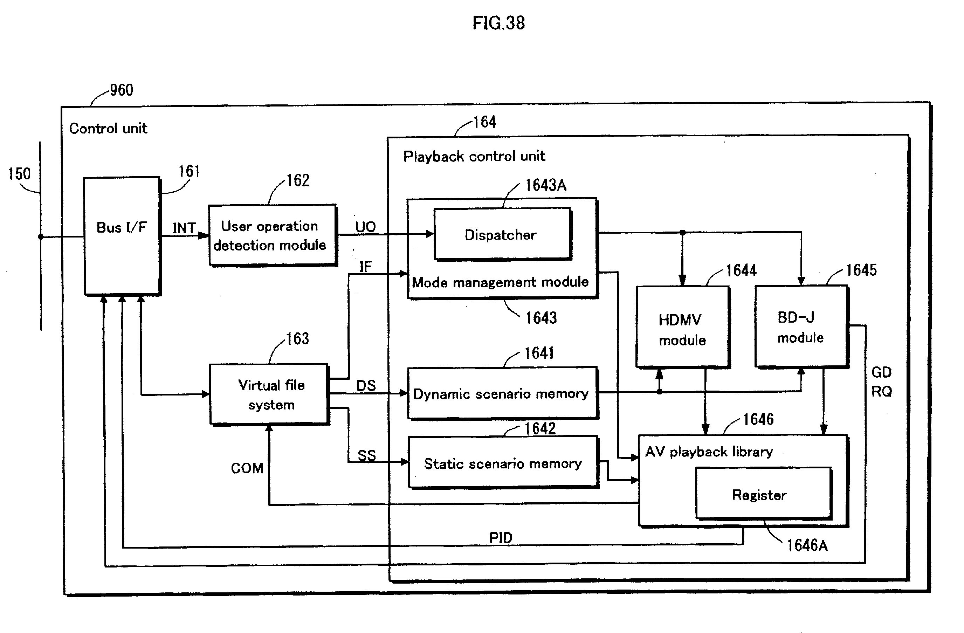

Fig.38 is a functional block diagram of a control unit shown in Fig.27;

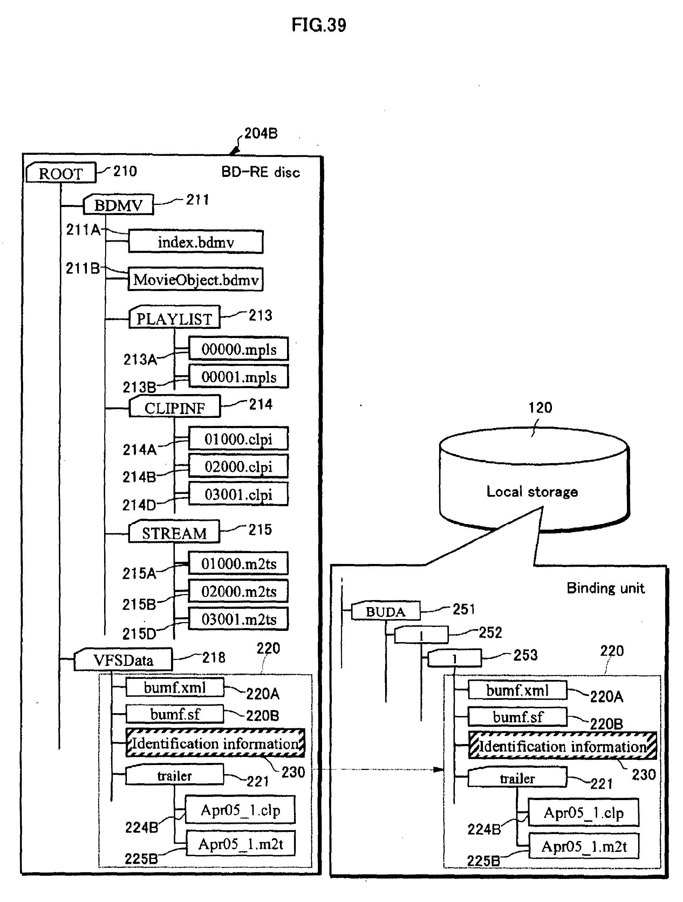

Fig.39 shows a schematic view of a process to transfer a binding unit by the playback apparatus shown in Fig.36; and

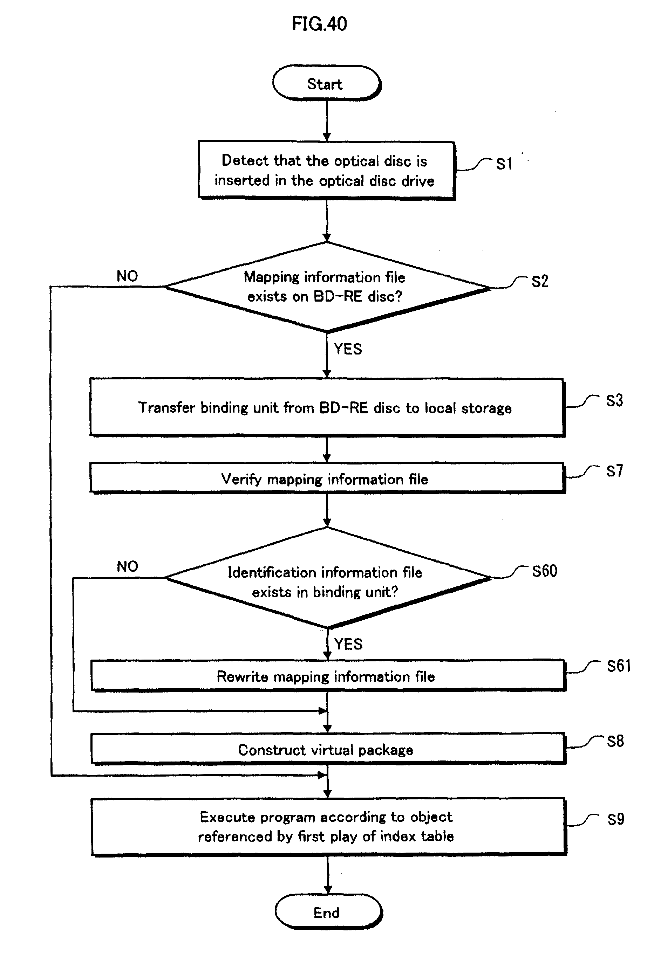

Fig.40 is a flowchart of a process of playing back a playlist by the playback apparatus shown in Fig.36 immediately after the BD-RE disc is inserted in the disc drive.

### [Description of Embodiments]

The following describes a preferred embodiment of the present invention with reference to the drawings.

### [Embodiment 1]

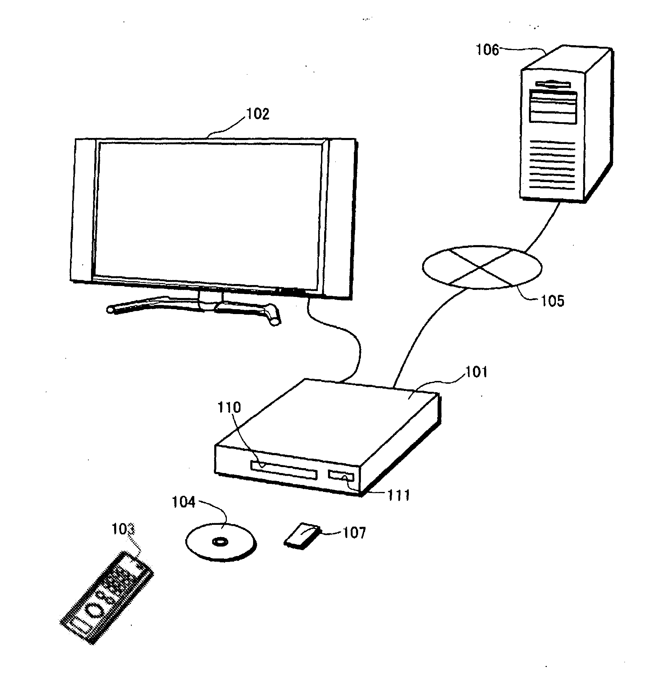

Fig.1 shows a schematic view of a usage configuration of a recording/playback apparatus pertaining to embodiment 1 of the present invention. In Fig.1, a recording/playback apparatus 101, a display apparatus 102, and a remote control 103 together form one home theater system. The recording/playback apparatus 101 is capable of playing back data from a read-only BD (BD-ROM disc) and a rewritable BD (BD-RE disc), and also is capable of recording data to the BD-RE disc. An optical disc 104 is a BD-ROM disc or a BD-RE disc. For example, to cause a movie recorded on the optical disc 104 to be played back on the display 102, a user inserts the optical disc 104 in an optical disc drive 110 of the recording/playback apparatus 101, and remotely operates the recording/playback apparatus 101 and the display apparatus 102 with use of the remote control 103. The recording/playback apparatus 101 plays back stream data from the optical disc 104 and provides the stream data to the display apparatus 102 in accordance with the operation by the user.

The recording/playback apparatus 101 can communicate with a server apparatus 106 on a network 105 such as the Internet via the network 105. Additionally, the recording/playback apparatus 101 may include a card reader/writer 111. The card reader/writer 111 is capable of reading and writing data to a memory card 107 inserted in the recording/playback apparatus 101. The memory card 107 is, for example, an SD memory card, a Memory Stick (registered trademark), CompactFlash (registered trademark), SmartMedia (registered trademark), a multimedia card, or a removable HDD. Although not shown in Fig.1, the recording/playback apparatus 101 includes a local storage. For example, the local storage is an HDD inside the recording/playback apparatus. In addition, a semiconductor memory apparatus held inside the recording/playback apparatus 101, an HDD external to the recording/playback apparatus 101, or the memory card 107 inserted in the card reader/writer 111 may be used as the local storage.

The recording/playback apparatus 101 reads a binding unit from the optical disc 104, the server apparatus 106, or the memory card 107, and stores the binding unit in the local storage. The binding unit includes updated data of the original data recorded on the optical disc 104. When the recording/playback apparatus 101 plays back stream data from the original data on the optical disc 104, stream data is also played back from the updated data in the local storage. By doing this, the original stream data is virtually updated. That is to say, the video, audio, and subtitles actually played back on the display apparatus 102 include video, audio and subtitles of the updated data in addition to, or instead of, the video, audio and subtitles of the original data. The details of this playback process will be described later.

If the optical disc 104 is a BD-RE disc, and the binding unit corresponding to the original data recorded on the optical disc 104 is stored in the local storage, the recording/playback apparatus 101 can append the binding unit to the optical disc 104 from the local storage. At this time, the recording/playback apparatus 101 can delete, from the optical disc 104, data virtually replaced as new stream data from among the stream data included in the original data. This enables the space available for writing on the optical disc 104 to be expanded, thereby enabling improvement in the reliability of the process to append the binding unit. The details of the appending process will be described later.

### [Data Structure when Optical Disc is BD-ROM Disc]

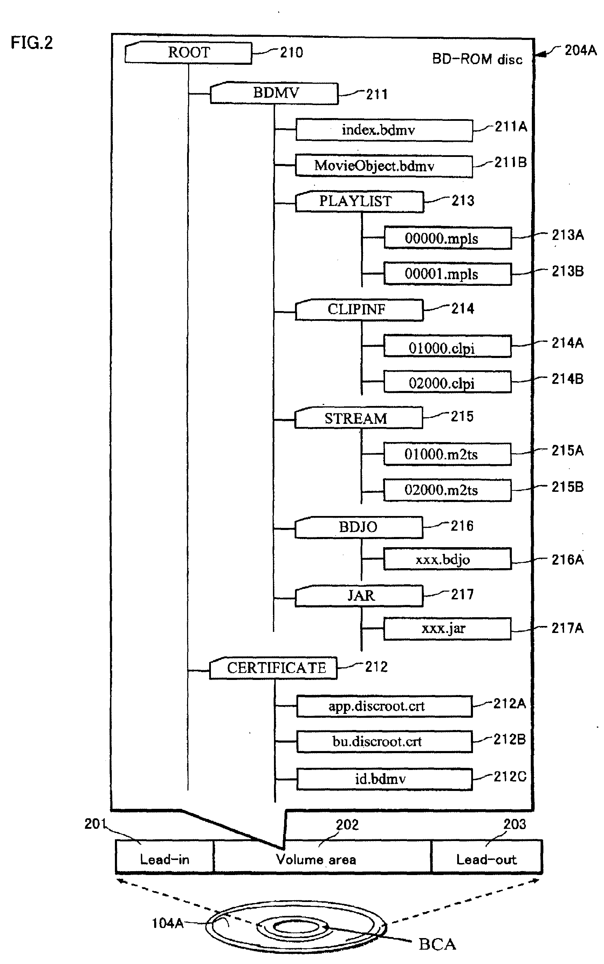

Fig.2 shows a schematic view of a structure of data recorded on the BD-ROM disc 104A. As shown in Fig.2, a BCA (Burst Cutting Area) is provided in the innermost circumference of the data recording area on the BD-ROM disc 104A. Only the optical disc drive 110 of the recording/playback apparatus 101 is permitted to access the BCA, and access by applications and programs is prohibited. Accordingly, BCA is used as copyright protection technology, for example. The data recording areas farther outward than BCA are, in order from the inside, a lead-in area 201, a volume area 202, and a lead-out area 203. These areas are formed as a continuous spiral from the inner circumference of the BD-ROM disc 104A to the outer circumference thereof. In Fig.2, these data recording areas are drawn stretched out horizontally so that an inner circumference of the BD-ROM disc 104A is disposed on the left, and an outer circumference thereof is disposed on the right. The lead-in area 201 is provided immediately outward from the BCA. Information required for access to the volume area 202, such as sizes and physical addresses of data recorded in the volume area 202, is recorded in the lead-in area 201. The lead-out area 203 is provided on the outermost circumference of the BD-ROM disc 104A, and indicates a terminal end of the volume area 202. The volume area 202 is provided between the lead-in area 201 and the lead-out area 203. Application data such as video and audio are recorded in the volume area 202.

UDF (Universal Disc Format) or ISO9660, for example, is used as a file system for the volume area 202. The volume area 202 is managed as one logical address space. Furthermore, data recorded in the volume area 202 is arranged in directories and files. This enables access to such data directory by directory or file by file.

Fig.2 further shows a directory structure 204A of data recorded on the volume area 202. In the directory structure 204A, a BD movie (BDMV) directory 211 and a certificate (CERTIFICATE) directory 212 are arranged immediately under the root (ROOT) directory 210. The BDMV directory 210 is for storing stream data such as video streams and audio streams. The CERTIFICATE directory 212 is for storing certification information of the stream data.

An index file (index.bdmv) 211A and a movie object file (MovieObject.bdmv) 211B are arranged in the BDMV directory 211. Furthermore, a playlist (PLAYLIST) directory 213, a clip information (CLIPINF) directory 214, a stream (STREAM) directory 216, and a Java (registered trademark) archive (JAR) directory 217 are arranged in the BDMV directory 211. Playlist files (00000.mpls, 00001.mpls) 213A and 213B are arranged in the playlist directory 213. Clip information files (01000.clpi, 02000.clpi) 214A and 214B are arranged in the CLIPINF directory 214. AV stream files (01000.m2ts, 02000.m2ts) 215A and 215B are arranged in the STREAM directory 215. A BDJO object file (xxx.bdjo) 216A is provided in the BDJO directory 216. A JAR file (xxx.jar) 217A is provided in the JAR directory 217. The details of these files 211A, 211B, and 213A to 217A are described later.

An application certificate (app.discroot.crt) 212A, a merge certificate (bu.discroot.crt) 212B, and an ID file (id.bdmv) 212C are arranged in a CERTIFICATE directory 212. These files 212A to 212C are unique to providers of content recorded on the BD-ROM disc 104A (hereinafter referred to as content providers). The application certificate (app.discroot.crt) 212A is used for verification of the Java application program. Instead of executing the verification on the playback apparatus, for example, the apparatus can be configured so that only a Java application program permitted by the provider can be activated, or an access authority to the local storage can be selectively given to Java application programs. The merge certificate 212B includes a public key unique to the content provider. The ID file 212C includes an organization ID (orgID) and a disc ID (discID). The orgID is a 32-bit identifier assigned uniquely to the content provider. The disc ID is a 128-bit identifier uniquely assigned to the BD-ROM disc 104A.

### [Data Structure when the Optical Disc is a BD-RE Disc]

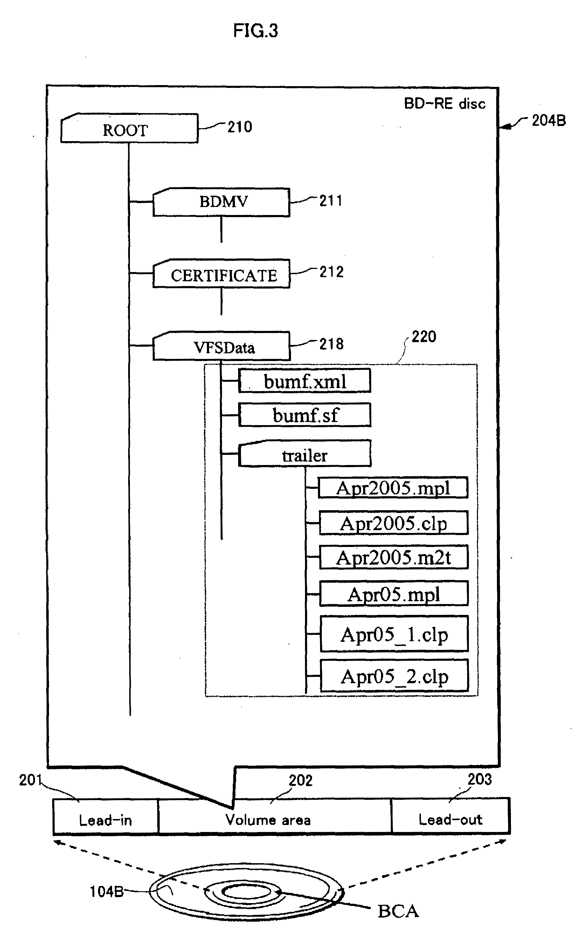

Fig.3 shows a schematic view of a structure of data recorded on a BD-RE disc 104B when an optical disc 104 is the BD-RE disc 104B. As shown in Figs.2 and 3, the data recording area of the BD-RE disc 104B, similarly to the data recording area of the BD-ROM disc 104A, includes a BCA, a lead-in area 201, a volume area 202, and a lead-out area 203. The above description of the areas on the BD-ROM disc 104A is also applicable to the details of the areas on the BD-RE disc 104B.

Furthermore, a directory structure 204B of data recorded in the volume area 202 is shown in Fig.3. In this directory structure 204B, a BDMV directory 211, a CERTIFICATE directory 212, and a virtual file system data (VFSData) directory 218 exist directly under a ROOT directory 210. The BDMV directory 211 and the CERTIFICATE directory 212 have been copied from the BD-ROM disc 104A, and the respective inner structures thereof are the same as shown in Fig.2. Accordingly, depiction of such inner structures is omitted in Fig.3. Meanwhile, a binding unit 220 is recorded in the VFSData directory 218. The binding unit 220 includes updated data for updating the original data in the BDMV directory 211. The recording/playback apparatus 101 reads the binding unit 220 into the local storage, and plays back the updated data from the local storage together with the original data from the BD-RE disc 104B. Details of the files included in the binding unit 220 are described later.

### [Details of Files Included in the BDMV Directory]

The following describes the details of the BDMV directory 211 and the files 211 A, 211 B, and 213A to 217A that exist in the sub-directories 213 to 217 thereof.

### [Index File (Index.bdmv) 211A]

The index file 211A includes an index table and a content ID. The index table includes the items of "first play," "top menu" and "title". Each item corresponds to either a movie object or a BD-J object. Each time a title or a menu is invoked by an operation of the user or an application program, the control unit of the recording/playback apparatus 101 references the item corresponding to the index table, and the object corresponding to that item is invoked. The control unit further executes the program according to the invoked object. Specifically, an object to be invoked when the optical disc 104 is inserted in the optical disc drive 110 is specified by the item "first play". The item "top menu" specifies, for example, an object for causing a menu to be displayed on the display apparatus 102 when the command "return to menu" is input by a user operation. The item "title" specifies, for example, when a title to be played back is selected by an operation of the user, an object for playing back the selected title from the optical disc 104. The content ID is an identifier unique to the content recorded on the optical disc 104.

### [Movie Object File (MovieObject.bdmv) 211B]

The movie object file 211 B generally includes a plurality of movie objects. Each movie object includes a sequence of navigation commands. The navigation commands are commands for causing the recording/playback apparatus 101 to execute a playback process similar to that by a general DVD player, such as a process of playing back a title, a process to change titles, etc. For example, in response to an operation by the user, the control unit of the recording/playback apparatus 101 invokes a movie object, and executes the navigation commands included in the movie object in order of the sequence. Similarly to a general DVD player, by doing this, the recording/playback apparatus 101 displays a menu on the display apparatus 102 allowing the user to select a command, and interactively changes the progression of the video being played back by starting or stopping playback of a title, changing to another title, etc. in response to the selected command. An operation mode of the recording/playback apparatus 101 according to movie objects in this way is called HDMV (High Definition Movie) mode.

### [JAR File (xxx.jar) 217A]

The JAR file 217A stores therein a BD-J application program executed according to a BD-J object. The BD-J application program is a byte code program, and in particular is an application program compliant with Java (registered trademark). BD-J application programs include, for example, programs for causing the recording/playback apparatus 101 to execute a process of accessing to the network 106, a process of displaying computer graphics (CG) images on the display apparatus 102 independently of video images of a title, etc., in addition to programs for causing the apparatus 101 to execute a process of playing back titles.

### [BD-J Object File (xxx.bdjo) 216A]

The BD-J object file 216A includes one BD-J object. The BD-J object is an application management table. The application management table includes an application ID and an application control code. The application ID indicates an identifier of a BD-J application program to be played back. Here, the application control code indicates a control condition used when starting up the BD-J application program indicated by the application ID. The control unit of the recording/playback apparatus 101 invokes the BD-J objects according to an operation of the user or an application program, and executes signaling of a BD-J application program according to the application management table included in the BD-J object. This causes interactively changing the progression of the playback video of the title, access to the network 106, and displaying the CG video on the display apparatus 102 independently from the video of the title. The operation mode of the recording/playback apparatus 101 according to the BD-J object in this way is referred to as BD-J mode.

Figs.4A and 4B show schematic views of a video displayed on the display in two different operation modes of the recording/playback apparatus shown in Fig. 1, Fig.4A showing one scene of the video being played back in HDMV mode. In a playback video in HDMV mode, similarly to a video played back from a DVD, a video of one content is displayed on an entire screen 102A of the display 102. Meanwhile, Fig.4B shows the one scene of the video being played back in BD-J mode. In BD-J mode, a CG video can be drawn on a Java virtual machine in the recording/playback apparatus 101 together with the video played back from the optical disc 104. For example, as shown in Fig.4B, the screen 102A of the display apparatus 102 can simultaneously display an image SCN, a title TL of the image SCN, and an animated owl image CR that provides commentary on the movie.

### [AV Stream Files (01000.m2ts, 02000.m2ts) 215A, 215B]

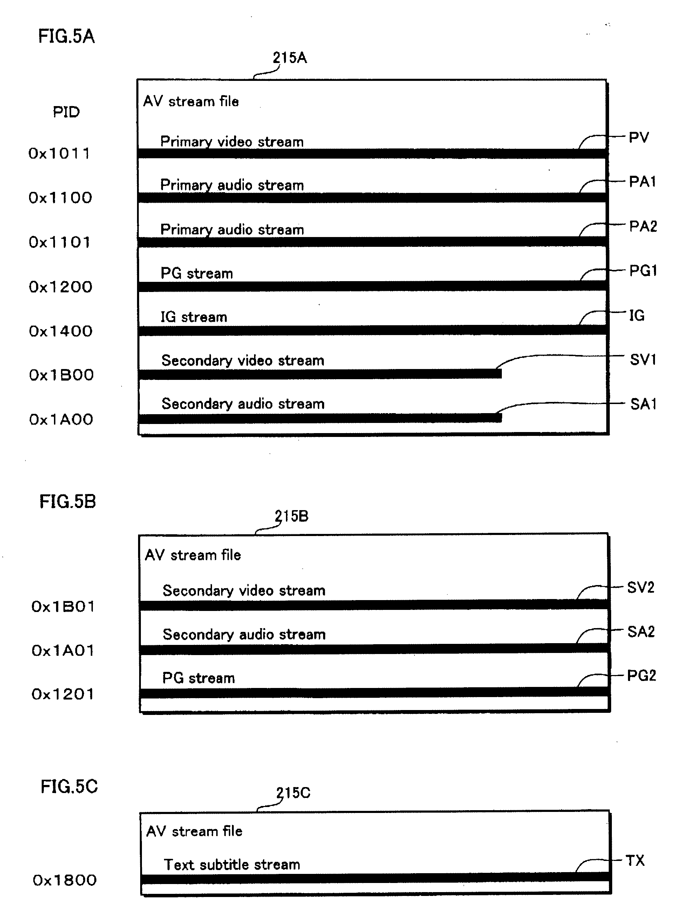

The AV stream files 215A and 215B contain the actual data of stream data such as video streams, audio streams, etc., and a plurality of elementary streams are multiplexed inside. Fig.5A shows a schematic view of a plurality of elementary streams included in a one-way AV stream file 215A in order according to playback time. Fig.5B shows a schematic view of a plurality of elementary streams included in another AV stream file 215B in order according to playback time. Fig.5C shows a schematic view of text subtitle streams included in a further AV stream file 215C in order according to playback time. The AV stream files 215A-C shown in Figs.5A, 5B, and 5C represent, for example, video, audio and subtitles of a movie.

The AV stream file 215A shown in Fig.5A includes a primary video stream PV, primary audio streams PA1 and PA2, a presentation graphics (PG) stream PG1, an interactive graphics (1G) stream 1G, a secondary video stream SV1, and a secondary audio stream SA1. The primary video stream PV represents primary video images of a movie. The primary audio streams PA1 and PA2 represent primary sound of the movie. Here, a language or output method of the sound is different between the two primary audio streams PA1 and PA2, for example. The PG stream PG1 and the IG stream IG each represent graphics to be displayed along with the video images of the movie. The PG stream PG1 represents, for example, graphics images of Japanese subtitles of the movie. The IG stream IG represents an interactive screen such as an operation screen, etc., that is to say, a graphics element or a group thereof for GU1 to be arranged on the screen of the display apparatus 102. The secondary video stream SV1 represents secondary video images to be displayed with the primary video images superimposed thereon by a Picture-in-Picture process. The secondary audio stream SA1 represents secondary sound to be mixed with the primary sound. As shown in Fig.5A, a plurality of elementary streams in the AV stream file 215A can be played back in parallel.

The AV stream file 215B shown in Fig.5B includes a secondary video stream SV2, a secondary audio stream SA2, and a PG stream PG2. The secondary video stream SV2, similarly to the secondary video stream SV1 shown in Fig.5A, represents a secondary video composited with the main video represented by the primary video stream, and displayed. The secondary audio stream SA2, similarly to the secondary audio stream SA2 shown in Fig.5A, represents secondary audio mixed with the main audio represented by the primary audio streams PA1 and PA2. The PG stream PG2 represents a graphics image of a subtitle in the movie written in a different language from PG1, for example English. As shown in Fig.5B, the plurality of elementary streams in the AV stream file 215B can be played back in parallel. Also, the elementary streams can be played back in parallel. Elementary streams to be played back together with the primary video stream in this way may be multiplexed with another AV stream file that is different from the primary video stream.

The AV stream file 215C shown in Fig.5C includes a text subtitle stream TX. The text subtitle stream TX represents a text character string of a movie subtitle written in a predetermined language. As shown in Fig.5C, the text subtitle stream TX is included independently in one AV stream file 215C. However, the text subtitle stream TX can be played back in parallel with the elementary stream shown in Fig.5A.

In the AV stream files 215A to 215C, a MPEG-2 transport stream (TS) format is used as a method of multiplexing a plurality of elementary streams. That is to say, in the AV stream files 215A to 215C, the elementary streams are divided into a plurality of TS packets. Since a different packet ID (PID) is assigned to the TS packets for each elementary stream, elementary streams belonging to the same TS packet are identified by the PID. For example, in the case of Fig.5, 0x1011 is assigned to the primary video stream PV as the PID, one of 0x1100 to 0x111F is assigned to the primary audio streams PA1 and PA2 as the PID, one of 0x1200 to 0x121F is assigned as the PID to the primary audio streams PG1 and PG2, one of 0x1400 to 0x141F is assigned as the PID to the IG stream IG, one of 0x1B00 to 0x1B1F is assigned to the secondary video streams SV1 and SV2, one of 0x1A00 to 0x1A1F is assigned to the secondary audio streams SA1 and SA2, and 0x1800 is assigned as the PID to the text subtitle stream TX.

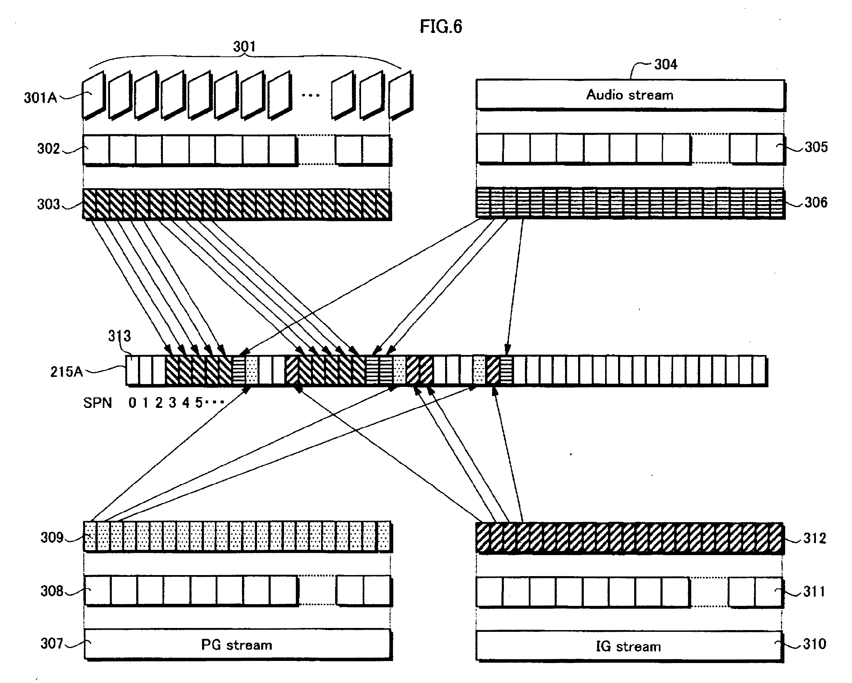

Fig.6 shows a schematic view of an arrangement of TS packets of elementary streams included in the AV stream file 215A. The video stream 301, the audio stream 304, the PG stream 307, and the IG stream 310 are respectively converted into, respectively, first, sequences 302, 305, 308, and 311 of PES (Packetized Elementary Stream) packets, and next sequences 303, 306, 309, and 312 of TS packets. Furthermore, headers are added to the TS packets separately. A TS packet to which a header is added is called a source packet. Lastly, source packets 313 obtained from the elementary streams are arranged in order, and are included in one AV clip file 215A. Here, as shown in Fig.6, the source packets 313 are numbered sequentially from the start. These numbers are called source packet numbers (SPN: Source Packet Number). SPNs are used as addresses of TS packets in the AV clip file 215A.

For example, TS packets are obtained from a video stream 301 in the following way. First, the video frames 301A in the video stream 301 are converted to PES (Packetized Elementary Stream) packets 302. Each of the PES packets 302 includes a PES header and a PES payload. The video frames 601A are compressed picture by picture according to encoding methods such as MPEG-2, MPEG-4, AVC, and VC-1, and are stored in the PES payloads. Meanwhile, the PES headers store a presentation time (PTS: Presentation Time-Stamp) of a picture stored in the PES payload of the same PES packet. The PTS is a time at which data of one frame decoded by the decoder in the recording/playback apparatus 101 from the elementary stream is to be output from the decoder. Next, the PES packet 302 generally converts the data into a plurality of TS packets 303. The TS packet 303 is a fixed length packet, and includes a TS header and a TS payload. The TS header includes the PID of a video stream 301. The PES packets 302 are generally divided and stored in a plurality of TS payloads. Lastly, a header is given to each TS packet 303, and the TS packets are converted into the source packets 313.

Similarly, in the PES packets 305 converted from the audio stream 304, LPCM (Linear Pulse Code Modulation) audio data is compressed with use of a predetermined encoding method and stored in PES payloads, and the PTSs of the data are stored in PES headers. Here, AC-3, Dolby Digital Plus ("Dolby Digital" is a registered trademark), DTS (Digital Theater System: registered trademark), and DTS-HD LBR are used as the encoding method for the audio stream 304. In the PES packets 308 and 311 respectively converted from the PG stream 307 and the IG stream 310, graphics data is compressed with use of a predetermined encoding method and stored in the PES payloads, and the PTS of the data is stored in the PES headers. In the PES packets converted from the text subtitle stream, the text character sequences are stored in the PES payloads.

### [Clip Information Files (01000.clpi, 02000.clpi) 214A, 214B]

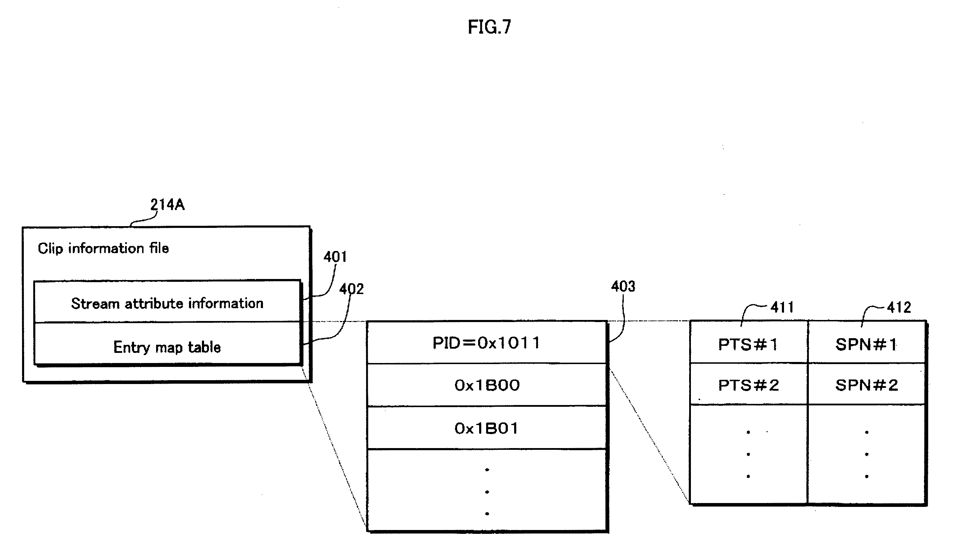

Fig.7 shows a schematic view of the data structure of the clip information file 214A. The clip information files 214A and 214B are in one-to-one correspondence with the AV stream files 215A and 215B in the STREAM directory 215. The clip information files 214A and 214B specify correspondences between SPNs and PTSs of corresponding AV stream files 215A and 215B. The clip information files 214A and 214B further indicate attributes of elementary streams multiplexed in corresponding AV stream files 215A and 215B. The following describes an example of a clip information file 214A corresponding to an AV stream file 215A included in a primary video stream. Note that this description also applies to the clip information file 214B.

As shown in Fig.7, the clip information file 214A includes stream attribute information 401 and an entry map table 402. In the stream attribute information 401, attribute information pertaining to the elementary streams shown in Fig.5A are correlated to the PIDs of the elementary streams. The details of the attribute information are different between the video streams, audio streams, PG streams, and IG streams. For example, attribute information correlated to the PID of a video stream includes codec identification information used for compression, a resolution and an aspect ratio of each picture, and a frame rate. Meanwhile, the attribute information correlated to the PID of an audio stream includes codec identification information used for compression, a number of channels, a language, and a sampling frequency. Such attribute information is used when initializing a decoder in the recording/playback apparatus 101.

The entry map table 402 specifies correspondences between an SPN and a PTS for each elementary stream. For example, as shown in Fig.7, the entry map table 402 includes an entry map 403 for each PID of a video stream. The entry map 403 shows correspondences between the head of each GOP in the video stream, that is, the PTS 411 of each I picture, and the SPN 412 of a source packet including the I picture. By referencing the entry map 403, the recording/playback apparatus 101 can specify, among the frames included in the video streams, a source packet including a frame at an arbitrary PTS from inside the AV stream file 215A. For example, when performing special playback operations such as fast-forwarding and rewinding, the recording/playback apparatus 101 selects the source packets of the SPNs 412 written in the entry map 403 from the AV stream file 215A and transmits the source packets to the decoder. This enables I pictures to be selectively played back.

In the entry map table 402, similarly to elementary streams other than video streams, an entry map is correlated to a PTS and an SPN of a specific data portion. Accordingly, by referencing the entry map, the recording/playback apparatus 101 can specify a source packet in the AV stream file corresponding to the arbitrary PTS in each elementary stream.

### [Playlist files (00000.mpls, 0000.mpls) 213A, 213B]

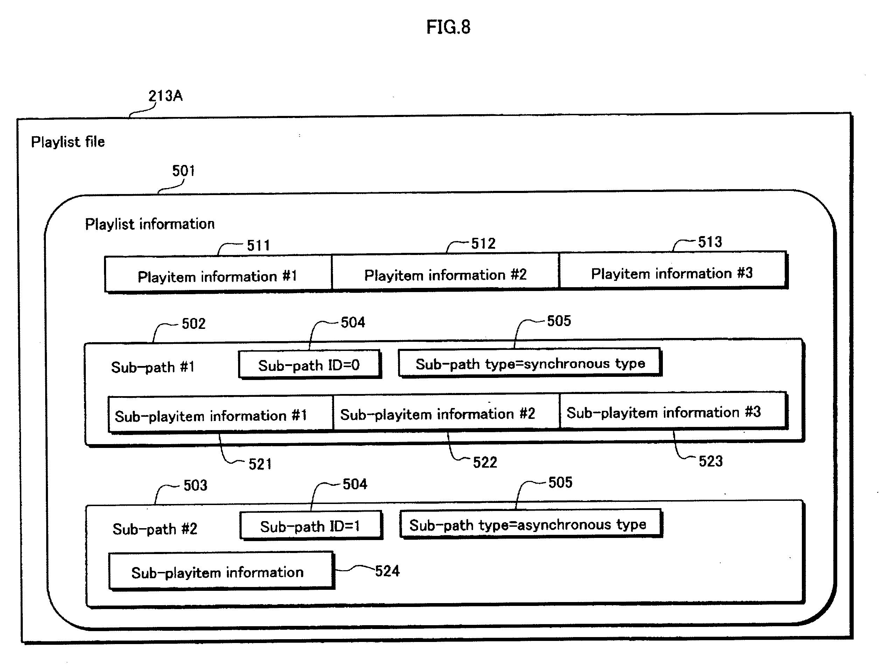

Fig.8 shows a schematic view of the data structure of the playlist file 213A. Note that the data structure of the playlist file 213B is also similar. As shown in Fig.8, the playlist file 213A includes playlist information 501. The playlist information 501 specifies a portion of the AV stream files 215A and 215B to be played back by specifying a playback time thereof, that is to say by specifying a PTS. In particular, the playlist information 501 includes one or more of playitem information pieces 511, 512, and 513. The playitem information pieces 511, 512, and 513 specify which portion to continuously play back of the AV stream files 215A including the primary video streams by specifying playback sections thereof, that is to say, by specifying pairs of a playback start time and a playback end time. Serial numbers have been assigned to playitem information pieces 511, 512, and 513. These serial numbers represent a playback order of portions of the AV stream file 215A specified by the playitem information pieces 511, 512, and 513. These serial numbers are also used as identifiers, that is, as playitem IDs, for the playitem information pieces 511, 512, and 513.

As shown in Fig.8, the playlist information 501 may further include one or more sub-paths 502 or 503, The sub-paths 502 and 503 specify another playback pathway of the AV stream file 215A to be played back along with the portion of the AV stream file 215A indicated by the playitem information pieces 511, 512, and 513, or a playback pathway of another AV stream file 215B or 215C. Note that in contrast to the sub-paths 502 and 503, the AV stream files 215A indicated by the playitem information pieces 511, 512 and 513 are referred to as main paths. In particular, the AV stream file 215C including the text subtitle stream TX is referenced by a sub-path, not a main path. The sub-paths 502 and 503 include a sub-path ID 504, a sub-path type 505, and at least one of sub-playitem information pieces 521, 522, and 523. The sub-path ID 504 is an identifier that is unique to each of the sub-paths 502 and 503. The sub-path type 505 represents a type of each of the sub-paths 502 and 503. The types of sub-path include a "synchronous type" and an "asynchronous type". "Synchronous type" means that playback thereof is required to be synchronized with playback of the main path, and "asynchronous type" means that the playback is not required to be synchronized. The sub-playitem information pieces 521, 522, 523, and 524 specify portions of the AV stream files to be continuously played back by specifying the playback sections thereof, that is, by specifying pairs of a playback start time and a playback end time. In general, the number of sub-playitem information pieces is different for each sub-path. Serial numbers are assigned to the sub-playitem information pieces 521, 522, 523, and 524 of the sub-paths 502 and 503. These serial numbers represent a playback order of the portions of AV stream files specified by the sub-playitem information pieces 521, 522, 523 and 524.

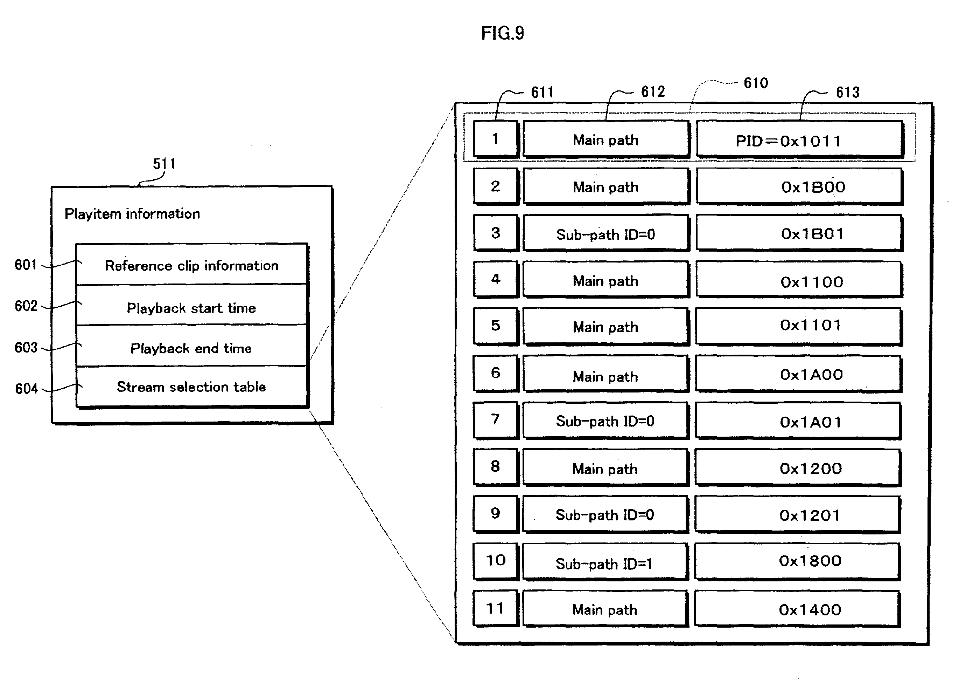

Fig.9 shows a schematic view of the data structure of the playitem information piece 511. The data structures of the other playitem information pieces 512 and 513 are similar. As shown in Fig.9, the playitem information piece 51 includes reference clip information 601, a playback start time 602, a playback end time 603, and a stream selection table 604. The reference clip information 601 is information for identifying the clip information file 214A required for reference by the AV stream file 215A. The playback start time 602 and the playback end time 603 indicate PTSs of a start and end of portions to be played back among the AV stream files 215A. The stream selection table 604 represents a list of elementary streams that can be selected from among the stream files 215A by the decoder in the recording playback apparatus 101 from the playback start time 602 to the playback end time 603.

As shown in Fig.9, the stream selection table 604 includes a plurality of stream entries 610. The stream entries 610 include a stream selection number 611, a stream path information piece 612, and a stream identification information piece 613. The stream selection number 611 is a serial number assigned to each stream entry 610 included in the stream selection table 604. The stream path information 612 is information for specifying an AV stream file to be played back. For example, when the stream path information 607 indicates a "main path", the AV stream file to be played back is the AV stream file 215A corresponding to the clip information file 214A indicated by the reference clip information 601. Meanwhile, when the stream path information 612 indicates "sub-path ID=0", the AV stream file to be played back is the AV stream file indicating one of the sub-playitem information pieces 521, 522, and 523 included in the sub-path 502 of sub-path ID=0. Here, the playback information indicating the sub-playitem information has been generated by duplicating a section from the playback start time 602 to the playback end time 603. The stream identification information 613 indicates a PID of one of the elementary streams that have been multiplexed with the AV stream file specified by the stream path information 612. The elementary stream indicated by this PID can be selected from among the AV stream files to be played back by the recording/playback apparatus 101 between the playback start time 602 and the playback end time 603.

The sub-playitem information pieces 521, 522, 523, and 524, similarly to the playitem information pieces 511 shown in Fig.9, include reference clip information, a playback start time, and a playback end time. In the sub-path 502 having the sub-path type 505 indicating an asynchronous type, the sub-playitem information pieces 521, 522, and 523 further include one playitem ID. The playback start time and playback end time of the sub-playitem information are included in playback sections indicated by playitem information of that playitem ID.

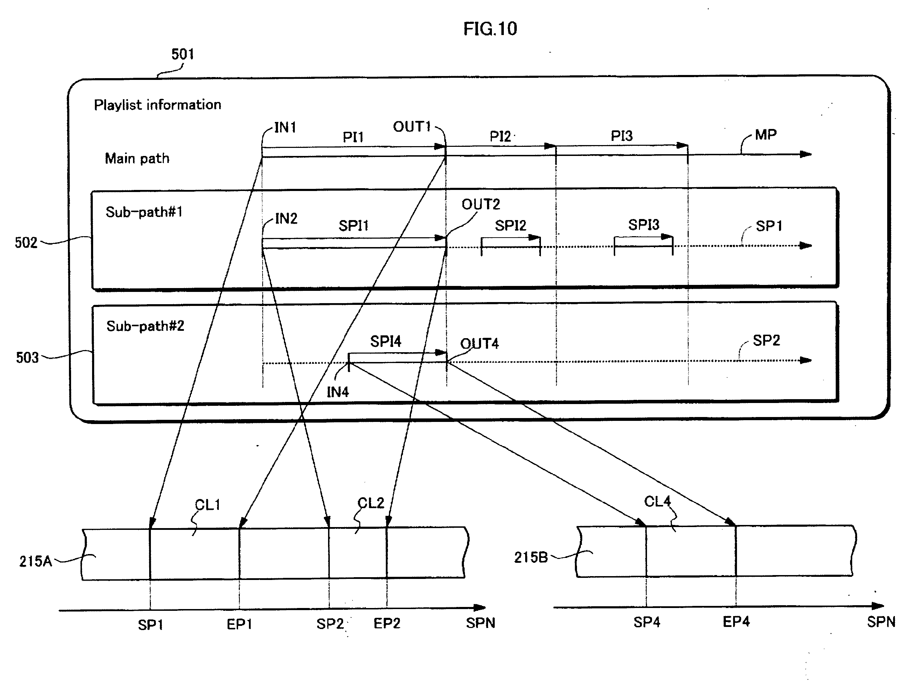

Fig. 10 shows a schematic view of portions CL1, CL2, and CL3 of AV stream files 215A and 215B played back according to a main path and two sub-paths 502 and 503 indicated by the playlist information 501 shown in Fig.8. Three time axes MP, SP1, and SP2 shown in Fig.10 represent playback times of playing back the stream according to a main path, a sub-path #1 502, and a sub-path #2 503, respectively. Here, assume that the sub-path ID of the sub-path #1 is 0, and the sub-path ID of the subpath #2 is 1.

In the playback process according to the main path MP, the recording playback apparatus 101 references, from among the playlist information 501, playitem information #1 511, playitem information #2 512, and playitem information #3 513 in order of playitem ID. For example, when referencing the playitem information #1 511, first, a PTS #1 411 corresponding to a playback start time IN1 is obtained from the entry map table 402 (see Fig.7) of the clip information file 214A shown by the reference clip information 601 (see Fig.9). Next, an SPN #1 412 corresponding to the PTS #1 411 is specified as the start address SP1. Similarly, an SPN corresponding to the playback end time OUT1 is specified as the end address EP1. Next, elementary streams that can be played back by both the recording/playback apparatus 101 and the display apparatus 102 are detected using the stream attribute information 401 (see Fig.7) of the clip information file 214A, from among the elementary streams registered in the stream selection table 604 (see Fig.9). Furthermore, among the detected elementary streams, an elementary stream having the smallest stream selection number 611 is selected, and a PID written in the stream identification information 613 of the selected elementary stream is set in the decoder. As a result, among the portion CL1 from the start address SP1 to the end address EP1 of the AV stream file 215A, a source packet having the PID is processed by the decoder. In this way, a process is performed to play back, among the main path MP, a playback section P11 from the playback start time IN1 to the playback end time OUT1.

When the stream path information 612 indicates "sub-path ID=0" and the stream identification information 613 indicates the PID of the PG stream "0x1200" by indicating one stream entry 610 registered in a stream selection table 604 (see Fig.9) of the playitem information #1 511, first, the sub-playitem information #1 521 is referenced from the sub-path #1 502. Here, the sub-playitem information #1 521 is information that is included in both the playback start time IN2 and the playback end time OUT2 indicated by the sub-playitem information #1 521, and the playback section P11 indicated by the playitem information #1. Next, by the same process as specifying the portion CL1 of the AV stream file 215A from the playback section PI1 indicated by the playitem information #1 511, a start address SP2 and an end address EP2 of the portion CL2 of the AV stream file 215A to be played back at the playback section SPI1 indicated by the sub-playitem information #1 521 is specified. As a result, in the playback section SPI1 of the sub-path #1, a PG stream from among the portion CL2 of the AV stream file 215A is synchronously played back with the playback section PI1 of the main path. Similarly, when the stream path information 612 indicates "subpath ID=1" and the stream identification information 613 indicates the PID "0x1201" of another PG stream of the stream identification information 613, by indicating another stream entry 610 registered in the stream selection table 604 of the playitem information #1 511, from one piece of sub-playitem information included in the sub-path #2 503, a start address SP4 and end address EP4 of the portion CL4 of the AV stream file 215B to be played back is specified. As a result, in the playback section SP12 of the second sub-path, the text subtitle stream from the portion CL4 is synchronously played back with the playback section PI1 of the main path.

As described above, a combination of a playlist information piece, a clip information file, and an AV stream file is used to play back the content. The "playlist" refers to this combination of files. Also, the "playitem" refers to a portion that is combined with one playitem information piece.

### [Hardware Structure of the Recording/Playback Apparatus 101]

Fig.11 is a block diagram showing a hardware structure of the recording/playback apparatus 101. As shown in Fig.11, the recording/playback apparatus 101 includes an optical disc drive 110, a local storage 120, an operation unit 130, a network interface 140, a bus 150, a control unit 160, a playback unit 170, a video output unit 180, and an audio output unit 190. The optical disc drive 110, the local storage 120, the operation unit 130, and the network interface 140 are capable of communicating with the control unit 160 and the playback unit 170 via the bus 150. Also, the control unit 160 and the playback unit 170 are capable of communicating with each other via the bus 150.

The optical disc drive 110 emits a laser beam to the optical disc 104 inserted in the optical disc drive 110, and based on changes in the light reflected therefrom, reads data recorded on the optical disc 104. In particular, the optical disc drive 110 is capable of handling BD-ROM discs and BD-RE discs. Upon receiving an instruction to read data from the control unit 160, the optical disc drive 110 0 reads the data from the volume area 202 of the optical disc 104 (see Figs.2 and 3), and transfers the read data to the local storage 120, the control unit 160, or the playback unit 170. Upon receiving an instruction to write the data from the control unit 160, the optical disc drive 110 receives the data from the local storage 120, the network interface 140, or the control unit 160, and writes the data in the volume area 202 of the optical disc 104. Upon receiving an instruction from the control unit 160 to delete data, the optical disc drive 110 deletes the data from the volume area 202. Note that when the optical disc 104 is the BD-ROM disc 104A, if an instruction to write data or to delete data is received from the control unit 160, the optical disc drive 110 does not follow this instruction.

The local storage 120 is a rewritable large-capacity storage apparatus, and mainly stores binding units downloaded from the server apparatus 106. The local storage 120 may additionally store parameters, tables, etc. used by the control unit 160 in accordance with the application program. Binding units are stored in different areas of the local storage 120 depending on the discID of the BD-ROM disc on which the original data to be updated is stored. Also, areas that can be used by the control unit 160 for storing parameters, etc. are secured according to the type of application program. In Fig.11, the local storage 120 includes a card reader/writer 111 and a HDD 112. The card reader/writer 111 can read data from the memory card 107 inserted in the card reader/writer 111, and write data to the card reader/writer 111. The HDD 112 is inside the recording playback apparatus 101. Additionally, although not shown in Fig.11, an external HDD may be connected to the bus 150 via a predetermined interface, and may be used as the local storage 120.

The operation unit 130 receives a command wirelessly transmitted from the remote control 103 by infrared rays or the like, decodes the command, and notifies the content of the command to the control unit 160. The operation unit additionally detects if a button provided on a front panel of the recording/playback apparatus 101 has been pressed, and in that case notifies the control unit 160 to that effect.

The network interface 140 connects between the external network 105 and the bus 150 so as to allow them to communicate with each other. This enables the control unit 160 to communicate with the server apparatus 106 on the network 105 via the network interface 140.

The control unit 160 executes an internal firmware, or an application program read from the optical disc 104, and controls other elements of the recording/playback apparatus 101 according to the firmware or the application program. In particular, the control unit 160 controls a process to play back a playlist from the optical disc 104, and a process to append a binding unit to the BD-RE disc when the optical disc 104 is a BD-RE disc.

In the process to play back the playlist, the control unit 160 mainly performs the following control processes. First, the control unit 160 performs control on the optical disc drive 110 or the network interface 140 to transfer the binding unit from the optical disc 104 or the server apparatus 106 to the local storage 120. Next, the control unit 160 constructs a virtual package by virtually combining updated data in the binding unit and original data on the optical disc 104. Here, the "virtual package" means a directory structure of a virtual BD-ROM disc constructed in an internal memory of the control unit 160. Specifically, the "virtual package" specifies mapping from access paths of original data on the optical disc 104 and updated data in the local storage 120, to access paths thereof on one BD-ROM disc. Access to the original data and the updated data can be specified by the application program as paths in the virtual package instead of the actual paths.

To control the playlist playback process, the control unit 160 furthermore reads playlist information from the original data or the updated data, and in accordance with the playlist information, selects an AV stream file to be played back. Next, the control unit 160 instructs the optical disc drive 110 or the local storage 120 to read the AV stream file to be played back and to provide the read AV stream file to the playback unit 170. Meanwhile, the control unit 160 specifies, to the playback unit 170, the PID of an elementary stream to be demultiplexed from the AV stream file to be played back.

In the process to append a binding unit, the control unit 160 mainly performs the following control processes. First, the control unit 160 detects that the optical disc 104 is the BD-RE disc 104B and the directory structure 204B shown in Fig.3 is recorded on the BD-RE disc 104B. Upon detection, the control unit 160 confirms whether the binding unit including updated data corresponding to the original data on the BD-RE disc 104B is stored in the local storage 120. If the binding unit is not stored in the local storage 120, the control unit 160 instructs the network interface 140 to download the binding unit from the server apparatus 106 to the local storage 120. If the binding unit is stored in the local storage 120, the control unit 160 instructs the local storage 120 to provide the binding unit to the optical disc drive 110, and instructs the optical disc drive 110 to write the binding unit in a VFSData directory 218 on the BD-RE disc 104B. Meanwhile, the control unit 160 collates a path on the BD-RE disc 104B to the AV stream files included in the original data with a path in the virtual package to the AV stream files included in the updated data. When both paths match, the control unit 160 instructs the optical disc drive 110 to delete the original AV stream files from the BD-RE disc 104B.

The playback unit 170 reads AV stream files to be played back from the optical disc drive 110 0 or the local storage 120, and demultiplexes the elementary streams having the PID specified in advance by the control unit 160 from the AV stream files. The playback unit 170, furthermore, separately decodes the demultiplexed elementary streams corresponding to different PIDs, and reproduces video data VD and audio data AD from the decoded elementary streams.

The control unit 160 and the playback unit 170 may be implemented on separate chips. Additionally, both may be implemented on a single chip. Note that the details of the functions of the control unit 160 and the playback unit 170 are described later.

The video control unit 180 converts the video data VD reproduced by the playback unit 170 into a video signal VS that is an output type supported by the display 102, and transmits the video signal VS to the display 102. Note that the video output unit 180 may be incorporated in the playback unit 170.

The audio output unit 190 converts the audio data AD reproduced by the playback unit 170 into an audio signal AS that is an output type supported by the external speaker 108, and transmits the audio signal AS to the speaker 108. Note that the audio output unit 190 may be incorporated in the playback unit 170. The speaker 108 is inside the display 102. Additionally, the speaker 108 may be a speaker such as a surround system that is external to the display 102.

### [Data Structure of the Binding Unit]

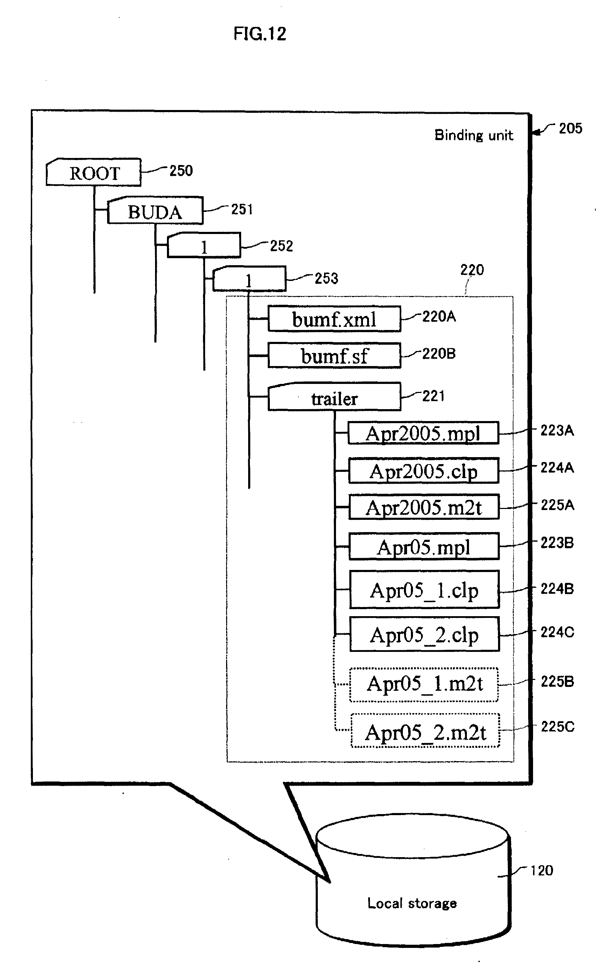

Fig.12 shows a schematic view of a directory structure 205 of a binding unit stored in the local storage 120. As shown in Fig.12, a binding unit data area (BUDA) directory 251 exists directly under the ROOT directory 250 of the local storage 120, and an orgID directory 252 exists immediately under the BUDA directory 251. The directory name of the orgID directory 252 represents an orgID assigned to the provider of the original data to be updated. In Fig.12, the orgID is "1". A discID directory 253 exists immediately under the orgID directory 252. The directory name of the discID directory 253 represents a discID of the BD-ROM on which the original data is recorded. In Fig.12, the disc ID is "1". A file group 220 that contains the actual data of a binding unit exists in the discID directory 252. A mapping information file (bumf.xml) 220A, a signature information file (bumf.sf) 220B, and a trailer directory 221 exist immediately under the discID directory. File groups 223A to 225C of updated data exist immediately under the trailer directory 221.

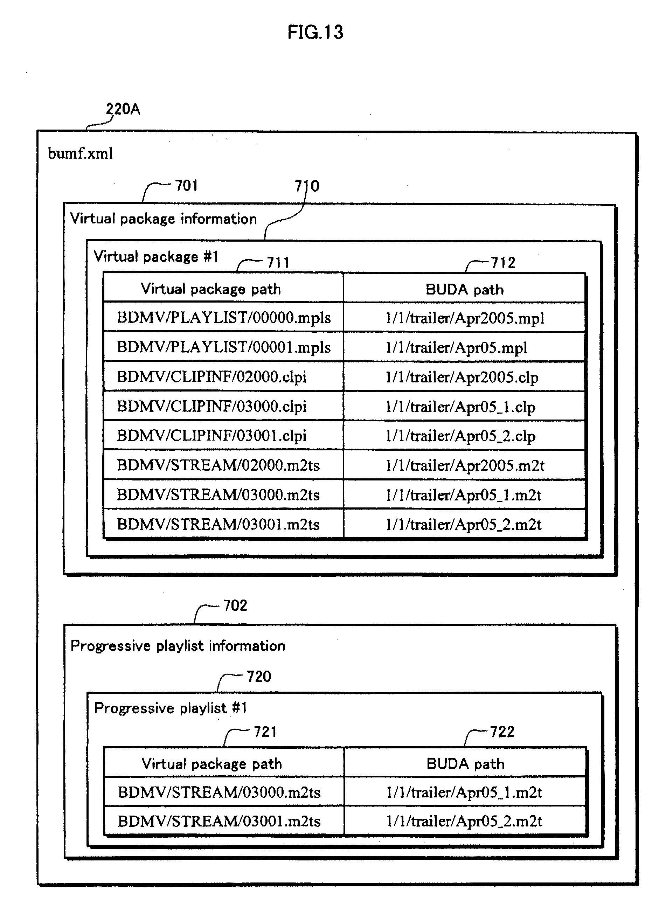

Fig.13 shows a schematic view of a data structure of the mapping information file (bumf.xml) 220A. As shown in Fig.13, the mapping information file 220A includes a piece of virtual package information 701 and a piece of progressive playlist information 702. The virtual package information 701 includes mapping information 710 classified by type of virtual package. The mapping information 710 indicates correspondences between a virtual package path 711 to each file of updated data and a BUDA path 712 thereto. The virtual package path 711 represents the path of the file in the virtual package. The BUDA path 712 represents the path of the file in the local storage 120. The progressive playlist information 702 includes mapping information 720 pertaining to at least one progressive playlist. Here, "progressive playlist" refers to a playlist capable of pseudo-streaming playback. Some AV stream files included in a progressive playlist can be downloaded from the server apparatus 106 on the network 105, and need not be stored in the local storage 120 at the time of constructing the virtual package. This type of AV stream file is called "missing data". The control unit 160 may download the missing data from the server apparatus 106 to the local storage 120 at or before the time when the missing data is actually processed by the playback unit 170. The mapping information 720 related to the progressive playlist indicates correspondences between the virtual package path 721 and the BUDA path 722 to each piece of missing data in the playlist.

The signature information file 220B includes a digital signature of the provider of the original data. This digital signature is a hash value of the mapping information file 220A, the value encrypted with use of a predetermined private key. The private key forms a pair with a public key included in the merge certificate 212B indicated in Fig.2. That is to say, the digital signature can be decrypted with use of the public key.

The files 223A to 225C of the updated data are added to the files of the original data in the virtual package, or replace them. In Fig.12, the updated data includes two types of updated playlist.

The first updated playlist includes a first updated playlist file (Apr2005.mpl) 223A, a first updated clip information file (Apr2005.clp) 224A, and a first updated AV stream file (Apr2005.m2t) 225A. The first updated playlist file 223A includes playlist information, similarly to the playlist file 213A shown in Fig.8. The playlist information specifies a playback pathway of a first AV stream file 225A, in addition to or separate from a playback pathway of an original AV stream file. The first updated clip information file 224A specifies correspondences between the SPNs and the PTSs in the first updated AV stream file 225A.

The second updated playlist includes a second updated playlist file (Apr05.mpl) 223B, a second updated clip information file (Apr05_1.clp) 224B, a third updated clip information file (Apr05_ 2.clp) 224C, a second updated AV stream file (Apr05_1.m2t) 225B, and a third updated AV stream file (Apr05_2.m2t) 225C. The second updated playlist file 223B includes playlist information, similarly to the playlist file 213A shown in Fig.8. The playlist information specifies the playback pathway of the original AV stream file, and additionally or separately specifies playback pathways of the second updated AV stream file 225B and the third updated AV stream file 225C. The second updated clip information file 224B specifies correspondences between the SPNs and the PTSs in the second updated AV stream file 225B. The third updated clip information file 224C specifies correspondences between the SPN and the PTS in the third updated AV stream file 225C. Here, the mapping information file 220A shown in Fig.13 specifies the second updated AV stream file 225B and the third updated AV stream file 225C in the progressive playlist information 702. This indicates that the second updated playlist is a progressive playlist and the updated AV stream files 225B and 225C are both missing data. Accordingly, at the time of constructing the virtual package, neither of the updated AV stream files 225B and 225C need be stored in the local storage 120, as shown by the broken lines in Fig.12.

### [Details of the Internal Structure of the Control Unit 160]

Fig. 14 is a functional block diagram of the control unit 160. As shown in Fig. 14, the control unit 160 includes a bus interface 161, a user operation detection module 162, a virtual file system 163, a playback control unit 164, a determination unit 165, and a recording control unit 166. The control unit 160 realizes the functional parts 161 to 166 by executing firmware incorporated in an interior thereof. Among such functional parts, the virtual file system 163 and the playback control unit 164 are used for controlling the process of playing back the playlist, and the determination unit 165 and the recording control unit 166 are used for controlling the additional writing of binding units.

The bus interface 161 connects the functional parts in the control unit 160, via the bus 150, so as to be capable of communication with the elements 110, 120, 130, 140, and 170 shown in Fig. 11. In particular, the bus interface 161, following an instruction from the virtual file system 163, reads original data from the optical disc drive 110 to the optical disc 104, and reads updated data in the binding unit 220 from the local storage 120.

The user operation detection module 162 receives a notification INT from the operation unit 130, and determines the type of a user operation from the notification INT. The user operation detection module 162 furthermore transmits an operation signal UO indicating the operation content to the playback control unit 1644 and the determination unit 165. Here, the operation content is, for example, insertion/removal of the optical disc 104 from the optical disc drive 110, and includes pressing buttons such as play/stop/fast forward/rewind on the remote control 103 or the front panel of the recording/playback apparatus 101.

The virtual file system 163 manages file access of the optical disc 104 and the local storage 120 by the playback control unit 164. In particular, the virtual file system 163, upon receiving an instruction by a command COM from the playback control unit 164, reads the mapping information file 220A from the binding unit 220 (see Fig.13). The virtual file system 163 furthermore, with use of the mapping information file 220A, constructs a virtual package from the original data on the optical disc 104 and the updated data in the binding unit 220.

### [Process to Construct Virtual Package by Virtual File System]

Fig.15 shows a schematic view of constructing a virtual package 206 by the virtual file system 163. As shown in Fig.15, the directories of the virtual package 206 are equivalent to the directories on the BD-ROM disc shown in Fig.2. However, some files that exist in the directory in the virtual package 206 have their bodies not in the optical disc 104, but in the binding unit 220 in the local storage 120.

The virtual file system 163 constructs the virtual package 206 in the following order. First, the virtual file system 163 reads the ID file 212C from the CERTIFICATE directory 212 on the optical disc 104 (see Fig.2), and acquires an orgID "1" and a discID "1" from the file. Next, the virtual file system 163 searches for the orgID directory 252 of the directory name "1" from the binding unit 205 in the local storage 120, and searches for a discID directory 253 of the directory name "1" in the orgID directory 252. Furthermore, the virtual file system 163 reads the mapping information file (bumf.xml) 220A and the signature information file (bumf.sf) 220B from the discID directory 253, and reads the merge certificate (bu.discroot.crt) 212B from the CERTIFICATE directory 212 on the optical disc 104. The virtual file system 163 decrypts the signature information file 220B with use of the public key included in the merge certificate 212B, and collates the decryption result with the mapping information file 220A. This enables the verification of the mapping information file 220A. After the verification has succeeded, the virtual file system 163 retrieves mapping information 710 corresponding to the virtual package 206 from the virtual package information 701 in the mapping information file 220A. Next, the virtual file system 163, in accordance with the mapping information 710, assigns paths in the local storage 120 to files 223A-225C of updated data existing in a trailer directory 221 as paths to the files in the virtual package 206. In this way, the virtual package 206 is constructed.

For example, in Fig.13, the virtual package path 711 corresponding to the BUDA path 712 of the first updated playlist file (Apr2005.mpl) 223A shows "BDMV/PLAYLIST/00000.mpls". Accordingly, when the first playlist file (00000.mpls) 263A in the PLAYLIST directory 263 in the virtual package 206 is accessed, the first updated playlist file 223A is accessed instead of the original first playlist file (00000.mpls) 213A, as shown by an arrow in Fig.15. Similarly, when the second playlist file (00001.mpls) 263B in the PLAYLIST directory 263 in the virtual package 206 is accessed, the second updated playlist file (APR05.mpl) 223B is accessed instead of the original second playlist file (00001.mpls) 213B. When the second clip information file (02000.clpi) 264B in the CLIPINF directory 264 in the virtual package 206 is accessed, the first updated clip information file (Apr2005.clp) 224A is accessed instead of the original second clip information file (02000.clpi) 214B. When the second AV stream file (02000.m2ts) 265B in the STREAM directory 265 in the virtual package 206 is accessed, the first updated AV stream file (Apr2005.m2t) 225A is accessed instead of the original second AV stream file (02000.m2ts) 215B. In this way, the files of the original data are virtually replaced with the files of updated data.

In Fig.13, the virtual package path 711 corresponding to the BUDA path 712 of the second updated clip information file (Apr05_1.clp) 224B shows "BDMV/CLIPINF/03000.clpi". Accordingly, when the third clip information file (03000.clpi) 264C in the CLIPINF directory 264 in the virtual package 206 is accessed, the second updated clip information file 224B is accessed, as shown by an arrow in Fig.15. Similarly, when the fourth clip information file (03001.clpi) 264D in the CLIPINF directory 264 in the virtual package 206 is accessed, the third updated clip information file (Apr05_2.clp) 224C is accessed. In this way, the files of updated data are virtually added to the files of original data.

The mapping information file 220A shown in Fig.3 indicates that the second updated AV stream file (Apr05_1.m2t) 225B and the third updated AV stream file (Apr05_2.m2t) 225C in the progressive playlist information 702 are both missing data. Accordingly, at the time of constructing the virtual package, both updated AV stream files 225B and 225C still need not be included in the binding unit 220 of the local storage 120, as shown by the broken lines in Fig.15. After constructing the virtual package 206, the updated AV stream files 225B and 225C are downloaded from the server apparatus 106 on the network 105 to the local storage 120 at or before the time when the third AV stream file (03000.m2ts) 265C or the fourth AV stream file (03001.m2ts) 265D in the STREAM directory 265 is accessed.

Note that, among the files included in the original data 204, the file whose path does not match any of the virtual package paths 711 written in the mapping information files 220A, is accessed by using the path thereof in the optical disc 104 as the path thereof in the virtual package 206. For example, in Fig.5, when the index file (index.bdmv) 261A in the virtual package 206 is accessed, the original index file 211A is accessed, as shown by the arrow in Fig.15. The same is true for the movie object file (MovieObject.bdmv) 261B and the first clip information file (01000.clpi) 264A. Also, similar mapping to the paths in the virtual package 206 as described above can be executed for other files such as the BD-J object file 216A and the JAR file 217A shown in Fig.2.

The description returns to Fig.14. After constructing the virtual package, according to the command COM from the playback control unit 164, the virtual file system 163 reads an index file IF from the virtual package, and transfers the index file IF to the playback control unit 164. Thereafter, the virtual file system 163 manages file access to the virtual package according to the command COM from the playback control unit 164 and the operation signal UO from the user operation detection module 162. For example, the virtual file system 163 reads, from the virtual package, scenario information to be played back, that is, current scenario information pieces DS and SS, and transfers the read scenario information to the playback control unit 164. Here, the scenario information includes dynamic scenario information DS and static scenario information SS. The dynamic scenario information DS includes a movie object file, a BD-J object file, and a JAR file. The static scenario information SS includes a playlist file and a clip information file. The virtual file system 163 further, according to the command COM from the playback control unit 164, specifies a portion of an AV stream file included in the playitem to be played back in the optical disc drive 110 or the local storage 120, and provides that portion to the playback unit 170. Meanwhile, the virtual files system 163 specifies, to the playback unit 170, whether the provided AV stream file is to be played back with use of the main path or the sub-path.

The playback control unit 164 executes firmware of the control unit 160 to prepare the execution environment of application programs, and furthermore in this environment, reads an application program from the dynamic scenario information DS and executes the application program. By doing this, the playback control unit 164 controls the processes of playing back stream data by the elements in the recording/playback apparatus 101, according to the application program.

Specifically, when the operation signal UO indicates that the optical disc 104 is inserted in the optical disc drive 110, the playback control unit 164 first checks whether a binding unit corresponding to the original data recorded in the BUMV directory 211 (see Figs.2 and 3) is stored in the local storage 120. If the binding unit is not stored in the local storage 120, the playback control unit 164 performs control on the optical disc drive 110 or the network interface 140, and causes the binding unit to be transferred from the optical disc 104 or the server apparatus 106 to the binding unit. The playback control unit 164 next, with use of the command COM, instructs the virtual file system 163 to construct the virtual package with use of the binding unit. The playback control unit 164 next causes the virtual file system 163 to read the index file IF from the virtual package. Thereafter, the playback control unit 164 selects one item from the index table in the index file according to the operation signal UO from the user operation detection module 162, determines that a file group related to the object specified by that item is a current dynamic scenario information DS, and requests the virtual file system 163 for the dynamic scenario information with use of the command COM. The playback control unit 164 furthermore, according to the dynamic scenario information DS, determines the one playlist file and a clip information file that references the one playlist file to be the static scenario information SS, and requests the dynamic scenario information SS from the virtual file system 163 with use of the command COM. Next, the playback control unit 164 selects a play item to be played back in accordance with the dynamic scenario information SS, and specifies the selection to the virtual file system 163 with use of the command COM. Meanwhile, the playback control unit 164 specifies, to the playback unit 170, the PID of the elementary stream to be demultiplexed from the AV stream file included in the playitem.

As shown in Fig.14, the playback control unit 164 includes a dynamic scenario memory 1641, a static scenario memory 1642, a mode management module 1643, an HDMV module 1644, a BD-J module 1645, and an AV playback library 1646.

The dynamic scenario memory 1641 and the static scenario memory 1642 are both internal memories in the playback control unit 164. The dynamic scenario memory 1641 receives, from the virtual file system 163, the current dynamic scenario information DS, that is, a movie object file, a BD-J object file, or a JAR file indicating a program to be executed, and stores therein the current dynamic scenario information DS. These files are processed by the HDMV module 1644 or the BD-J module 1645. The static scenario memory 1642 receives, from the virtual file system 163, the current static scenario information SS, that is, a playlist file and a grip information file to be played back, and stores therein the current scenario information SS. The static scenario information SS is referenced by the AV playback library 1646.

The mode management module 1643 receives an index file IF from the virtual file system 163 and stores therein the index file IF. The mode management module 1643 further manages the dynamic mode of the recording playback apparatus 101 with use of the index file IF. Specifically, the mode management module 1643 selects one item from the index table in the index file IF according to an operation signal UO from the user operation detection module 162, and assigns the current dynamic scenario information DS to the HDMV module 1644 or the BD-J module 1645 according to the type of object specified by the item. Specifically, when the object is an HDMV object, the current dynamic scenario information DS is assigned to the HDMV module 1644, and when the object is a BD-J object, the current dynamic scenario information DS is assigned to the BD-J module 1645. In the former case, the operation mode is HDMV mode, and in the latter case, the operation mode is BD-J mode. When the operation signal UO indicates switching the operation mode, or an operation mode switch is requested by one of the modules 1644 or 1645, the mode management module 1643 further switches the allocation destination of the dynamic scenario information DS between the modules 1644 and 1645.

The mode management module 1643 includes a dispatcher 1643A. The dispatcher 1643A receives an operation signal UO from the user operation detection module 162, selects the operation signal UO suited to the present operation mode from among the operation signals UO, and transfers the operation signal UO to the module 1644 or 1645 that is the allocation destination of the dynamic scenario information DS. For example when the operation signal UO indicates fast forward playback or rewind playback, the dispatcher 1643A transfers the operation signal UO to the HDMV module 1644 if HDMV mode, and to the BD-J module 1645 if BD-J mode. Meanwhile, when the operation signal UO indicates inserting the optical disc 104 into the optical disc drive 110, the dispatcher 1643A, regardless of the operation mode, notifies the insertion to the BD-J module 1645. In addition, the dispatcher 1643 instructs the virtual file system 163 to read the index file IF via the AV playback library 1646 with use of the command COM.

The HDMV module 1644 is a virtual DVD player. The HDMV module 1644 controls a process to play back a playlist from the optical disc 104 in a manner similar to the playback process by a general DVD player. Specifically, the HDMV module 1644 reads a movie object from the dynamic scenario information DS in the dynamic scenario memory 1641, and executes an navigation command included therein in a sequential order. By doing this, the HDMV module 1644 instructs the AV playback library 1646 to perform the processes indicated by the navigation commands in order.

The BD-J module 1645 is a Java platform. The BD-J module 1645 reads a BD-J object from the dynamic scenario information DS in the dynamic scenario memory 1641, converts the BD-J object to native code of the control unit 160 and transfers the converted BD-J object to the AV playback library 1646. By doing this, the BD-J module 1645 instructs the AV playback library 1646 to perform the process of playing back the playlist indicated by the BD-J object. The BD-J module 1645, according to the BD-J object, communicates with the server apparatus 106 by controlling the network interface 140 with use of a command RQ. In particular, the BD-J module 1645 reads a content ID in the index file IF from the mode management module 1643, and causes the network interface 140 to transmit the content ID to the server apparatus 106. The BD-J module 1645 further, as a reply to the content ID, causes the network interface 140 to download the binding unit 220 from the server apparatus 106 to the local storage 120. Additionally, the BD-J module 1645 can generate graphics data GD representing a GUI interactive screen or an animated video with use of raster data such as JFIF (JPEG) or PNG, and transmit the graphics data GD to the playback unit 170 via the bus interface 161 or the bus 150.

Upon receiving a notification from the dispatcher 1643A that the optical disc 104 has been inserted in the optical disc drive 110, first, the BD-J module 1645 causes the optical disc drive 110 to determine whether the optical disc 104 is the BD-RE disc 104B shown in Fig.3. If the optical disc 104 is the BD-RE disc 104B, the BD-J module 1645 searches for the binding unit 220 in the BD-RE disc 104B. The BD-J module 1645 further transmits a command RQ to the optical disc drive 110, and instructs transferring the binding unit 220 from the optical disc 104 to the local storage 120. Meanwhile, the BD-J module 1645 transmits the command COM to the virtual file system 163 via the AV playback library 1646, and requests construction of the virtual package.

Fig.16 shows a schematic view of a process to transfer the binding unit. The BD-J module 1645 searches for the VFSData directory 218 in the directory structure 204B on the BD-RE disc 1048, and further searches in the directory structure 204B for the mapping information file (bumf.xml) 220A. In this way, the binding unit 220 is obtained by searching. Next, the BD-J module 1645 reads the orgID and the discID from the ID file (id.bdmv) 212C in the CERTIFICATE directory 212. For example, if the orgID is "1", and the discID is "1", the BD-J module 1645 creates the BUDA directory 251, the orgID directory 252 whose directory name is "1", and the discID directory 253 whose directory name is "1" in the local storage 120. Next, the BD-J module 1645 causes the optical disc drive 110 to transfer the file group 220 in the VFS Data directory 218 on the BD-RE disc, as is, to the discID directory 253 of the local storage 120. In this way, the binding unit 220 is transferred to the local storage 120, and the directory structure 205 shown in Fig.12 is formed.

The description returns to Fig.14. The AV playback library 1646 transmits the command COM to the virtual file system 163 according to an instruction from one of the modules 1644 or 1645, and instructs an AV playback process or a playlist playback process. Here, the "AV playback process" is a basic process for an optical disc playback apparatus that follows a playback process of general DVD players and CD players. Specifically, the AV playback process includes the starting and stopping of playback, pausing and resuming after a pause, fast-forwarding and rewinding, switching between sound options, switching between subtitle options, and switching between angle options. Meanwhile, the "playlist playback process" includes, in addition to a process to play back a playlist indicated by the current static scenario information SS, a process to construct a virtual package, and a process to transfer the current scenario information DS and SS from the virtual package to the scenario memories 1641 and 1642.

The AV playback library 1646 further includes registers 1646A, and uses the registers 1646A to provide the modules 1644 and 1645 with functions of selecting/monitoring the operation states of the recording/playback apparatus. Fig.17 shows a schematic view of values stored in the registers 1646A. As shown in Fig.17, the registers 1646A include playback state registers 461 and general-purpose registers 462. The playback state registers 461 have 128 types. The playback state registers 461 store parameters representing current settings, selectable settings, and initial settings. The parameter expressing the current settings, for example, stream selection numbers of an audio stream, PG stream, or text subtitle stream to be decoded, and identifiers of current playlist information and playitem information. The parameters representing selectable settings include, for example, selectable language types of sound and subtitles, and selectable methods of encoding audio data. By referencing the registers 1646A in accordance with an instruction from the module 1644 or 1645, the AV playback library 1646 detects elementary streams that can be played back by both the recording/playback apparatus 101 and the display apparatus 102 from among the elementary streams registered in the stream selection table of the playitem information. The AV playback library 1646 further selects the elementary stream having the smallest stream selection number from among the detected elementary streams, and stores the stream selection number in the playback state register 461. Additionally, the AV playback library 1646 specifies, to the playback unit 170, the PID written in the stream identification information of the selected elementary stream as the PID of the elementary stream to be decoded. The general-purpose registers 462 have 4096 types. The general-purpose registers 462 are used by the modules 1644 and 1645 to hold parameters that application programs use, and to specify parameters to the AV playback library 1646.

The description returns to Fig.14. When the operation signal UO from the user operation detection module 162 indicates a request to remove the optical disc 104 from the optical disc drive 110, or to append the binding unit on the optical disc 104, the determination unit 165 determines whether the optical disc 104 inserted in the optical disc drive 110 is the BD-RE disc 104B shown in Fig.3. When the optical disc 104 is the BD-RE disc 104B, the determination unit 165 further checks whether the binding unit for the original data stored in the BD-RE disc 104B is stored in the local storage 120. Specifically, the determination unit 165 reads the orgID and the discID from the ID file 212C in the CERTIFICATE directory 212 in the BD-RE disc 104B (see Fig.2), and searches the local storage 120 for the orgID directory and the discID directory of the directory name represented by the IDs. If these directories are not found, that is, if the binding unit is not stored in the local storage 120, the determination unit 165 reads a content ID from the index file 212A of the BD-RE disc 104B. The determination unit further 165 instructs the network interface 140 to transmit the content ID to the server apparatus 106. The determination unit 165 next instructs the network interface 140 to download, o the local storage 120, a binding unit transmitted from the server apparatus 106 in response to the content ID.

As shown in Fig.12, if the binding unit 220 is currently stored in the local storage 120, the determination unit 165 reads the mapping information file 20A from the binding unit 220. Here, if the binding unit 220 has been downloaded from the server apparatus 106 immediately previously, the determination unit 165 verifies the mapping information file 220A in a manner similar to the verification by the virtual file system 163.

The determination unit 165 performs a path collation with use of the read mapping information file 220A. To perform the path collation, the path in the virtual package to each of the updated AV stream files in the binding unit 220 are collated with the path in the BD-RE disc 104B to each of the original AV stream files. When both paths match, the determination unit 165 notifies the recording control unit 166 of the path in the BD-RE disc 104B to one of the original AV stream files. For example, in Figs.13 and 15, the virtual package path 711 "BDMV/STREAM/02000.m2ts" of the first updated AV stream file (Apr2005.m2t) 225A is equivalent to the path in the BD-RE disc 104B of the original second AV stream file (02000.m2ts) 215B. Accordingly, the determination unit 165 notifies the recording control unit 166 of the path "BDMV/STREAM/02000.m2ts" on the BD-RE disc 104B to the original second AV stream file 215B.

The determination unit 165 further performs a missing data determination with use of the mapping information file 220A. To perform the missing data determination, the determination unit 165 determines whether the updated AV stream files are missing data, from the progressive playlist information 702 in the mapping information file 220A (see Fig.13). The determination unit 165 notifies the recording control unit 166 of the path in the local storage 120 to the missing data among the updated AV stream files. For example, in Figs.13 and 15, the second updated AV stream file (Apr05_1.m2t) 225B and the third updated AV stream file (Apr05_2.m2t) 225C are both missing data. Accordingly, the determination unit 165 notifies the recording control unit 166 of the paths in the local storage 120 to the updated AV stream files 225B, 225C.

First, the recording control unit 166 instructs the optical disc drive 110 to delete, from the BD-RE disc 104B, any of the original AV stream files whose paths have been notified from the determination unit 165.

Next, the recording control unit 166 instructs the writing of the updated AV stream files onto the BD-RE disc 104B. Specifically, the recording control unit 166 instructs the local storage 120 to provide the updated AV stream files to the optical disc drive 110, and instructs the optical disc drive 110 to write the updated AV stream files in the trailer directory 221 in the VFSData directory 218 on the BD-RE disc 104B. Note that the recording control unit 166 disables an instruction to write, on the BD-RE disc 104B, any updated AV stream files whose paths in the local storage 120 have been notified from the determination unit 165.

The recording control unit 166 further instructs that the files in the binding unit 220 other than updated AV stream files be written onto the BD-RE disc 104B. Specifically, the recording control unit 166 instructs the local storage 120 to provide the files to the optical disc drive 110. Meanwhile, the recording control unit 166 instructs the optical disc drive 110 to write the files into the VFSData directory 218 on the BD-RE disc 104B.

Fig.18 shows a schematic view of appending the binding unit 220 by the recording control unit 166. In the examples shown in Figs.13 and 15, the recording control unit 166 is notified of the path "BDMV/STREAM/02000.m2ts" on the BD-RE disc 104B to the original second AV stream file (02000.m2ts) by the determination unit 165. Accordingly, the recording control unit 166 instructs the optical disc drive 110 to delete, from the BD-RE disc 104B, the original second AV stream file 215B located in the path of which the recording control unit 166 has been notified, as shown by a cross in Fig. 18. In the examples shown in Fig.13 and 15, the recording control unit 166 is further notified of paths in the local storage 120 to the second updated AV stream file (Apr05_l.m2t) 225B and third updated AV stream file (Apr05_2.m2t) 225C by the determination unit 165. This notification indicates that the files 225B and 225C are missing data. Accordingly, the recording control unit 166 disables the instruction to write these files 225B and 225C onto the BD-RE disc 104B. By doing this, for example as shown in Fib.18, the second updated AV stream file 225B is not written onto the BD-RE disc 104B, even if the second updated AV stream file 225B is already stored in the local storage 120. The recording control unit 166 further instructs that the files 220A-B, 223A-B and 224A-C in the binding unit 220 other than the updated AV stream files 225A-C be written into the VFSData directory 218 in the BD-Re disc 104B. In this way, the binding unit 220 is appended on the BD-RE disc 104B.

### [Details of the Inner Structure of the Playback Unit 170]

Fig.19 is a functional block diagram of the playback unit 170. As shown in Fig.19, the playback unit 170 includes a bus interface 171, a pair of track buffers 172A and 172B, a pair of demultiplexers 173A and 173B, a primary video decoder 174A, a secondary video decoder 174B, a PG decoder 174C, an IG decoder 174D, a primary audio decoder 174E, a secondary audio decoder 174F, a text subtitle decoder 174G, a BD-J processor 175, a primary video plane 176A, a secondary video plane 176B, a PG plane 176C, an IG plane 176D, a BD-J plane 176E, an adder 177, and a mixer 178. These functional parts may be implemented on a single chip. Alternatively, several of the functional parts may be implemented on different chips.

The bus interface 171 connects the functional parts in the playback unit 170 via the bus 150 so as to be capable of communicating with the optical disc drive 110, the local storage 120, and the control unit 160 shown in Fig.2. In particular, the bus interface 171, in accordance with an instruction from the virtual file system 163, reads the original AV stream file on the optical disc 104 from the optical disc drive 110, and reads the AV stream file in the binding unit from the local storage 120. The bus interface 171 further transmits the AV stream files to the destination instructed by the virtual file system 163, which is one of the two track buffers 172A and 172B. For example, if there is an instruction from the virtual file system 163 that the AV stream files are to be played back with use of the main path, the bus interface 171 transmits the AV stream file MCL to the first track buffer 172, and if there is an instruction that the AV stream files are to be played back with use of the sub-path, transmits the AV stream file SCL to the second track buffer 172. Here, according to an instruction from the virtual file system 163, the bus interface 171 can transmit different AV stream files to each of the track buffers 172A and 172B in parallel.

Both of the track buffers 172A and 172B are First In, First Out (FIFO) memories in the playback unit 170. The track buffers 172A and 172B read the AV stream files MCL and SCL from the bus interface 171 and temporarily store the AV stream files MCL and SCL. Here, by the bus interface 171 selecting destinations for the AV stream files MCL and SCL according to an instruction from the virtual files system 163, the AV stream file MCL is stored in the first track buffer 172A, and the AV stream file SCL of the sub-path is stored in the second track buffer 172B.

The first demultiplexer 173A receives, from the AV playback library 1646, PIDs of elementary streams to be decoded from the AV stream file MCL of the main path. Meanwhile, the first demultiplexer 173A reads each source packet of the AV stream file MCL from the first track buffer 172A, , and extracts a TS packet from the source packet. The first demultiplexer 173A further reads the PID from the TS header of the TS packet and collates the read PID with the PID of each elementary stream to be decoded. If both the PIDs match, the first demultiplexer 173A extracts the TS packet. From the TS packets collected in this way, the first demultiplexer 134A reconstructs a PES packet, and transmits the reconstructed PES packet to one of six types of decoder 174A-F depending on the PID of the elementary stream to be decoded. For example, if the PID of the TS packets is 0x1011, the PES packet reconstructed from the TS packets is transmitted to the primary video decoder 174A. If the PID is between 0x1B00 and 0x1B1F, the PES packet is transmitted to the secondary video decoder 174B. If the PID is between 0x1100 and 0x111, the PES packet is transmitted to the primary audio decoder 174E. If the PID is between 0x1A00 and 0x1A1F, the PES packet is transmitted to the secondary audio decoder 174F. If the PID is between 0x1200 and 0x121F, the PES packet is transmitted to the PG decoder 174C. If the PID is between 0x1400 and 0x141F, the PES packet is transmitted to the IG decoder 174D.

Similarly, the secondary demultiplexer 173B receives, from the AV playback library 1646, the PIDs of elementary streams to be decoded from the AV stream file SCL of the sub-path. Meanwhile, the secondary demultiplexer 173B reads each source packet of the AV stream file SCL from the second track buffer 172B, and extracts the TS packet from the source packet. The second demultiplexer 173B furthermore reconstructs a PES packet from the TS packets that have the same PID as the PID of an elementary stream to be decoded, and transmits the reconstructed PES packet to one of the seven types of decoder 174A-G depending on the PID. Note that the text subtitle stream is only included in the AV stream file SCL of the sub-path. Accordingly, the PES packet reconstructed from the TS packets of the text subtitle stream is transmitted to the text decoder 174G from the second demultiplexer 173B.

Here, there are cases in which the information multiplexed in the AV stream files MCL and SCL includes information used as dynamic scenario information by the application program, for example, information pertaining to GUI graphics parts such as navigation buttons, etc. included in an IG stream. When the demultiplexers 173A and 173B demultiplex that type of information from the AV stream files MCL and SCL, the information SYS is transferred to the dynamic scenario memory 1641 in the control unit 160 via the bus interface 171.

The decoders 174A-G alternately perform a process of decoding the elementary streams of the main path received from the first demultiplexer 173A, and a process of decoding the elementary streams of the sub-paths received from the second demultiplexer 173B. In particular, when the sub-path type of the AV stream file SCL of the sub-path is a synchronous type, the decoders 174A-G synchronize the processes of decoding the elementary streams. Meanwhile, when the sub-path type of the AV stream file SCL of the sub-paths is an asynchronous type, the decoders 174A-G asynchronously perform the processes of decoding the elementary streams. Note that the sub-path types of the AV stream files SCL of the sub-paths are instructed in advance from the virtual file system 163 to the decoders 174A-G.

The primary video decoder 174A receives the PES packets of the primary video stream from the demultiplexers 173A and 173B, and accumulates the PES packets in an internal buffer. In parallel with this, the primary video decoder 174 reads the PES packets from the buffer and removes the PES headers, extracts encoded pictures from the remaining PES payloads, and decodes the encoded pictures. The primary video decoder 174A further writes the decoded uncompressed pictures into the primary video plane 176A at the times indicated by the PTSs written in the respective PES headers. Here, the primary video decoder 174A interprets a type of encoding format written as a stream attribute from the primary video stream to be decoded, and selects the decoding method depending on the type of encoding format.

The secondary video decoder 174B includes the same structure as the primary video decoder 174A. The secondary video decoder 174B, with use of this structure, receives the PES packets of the secondary video stream from the demultiplexers 173A and 173B, extracts and decodes encoded pictures from the PES packets. The secondary video decoder 174B further writes the decoded uncompressed pictures into the secondary video plane 176B at the times indicated by the PTSs written in the respective PES packets.

The PG decoder 174C receives the PES packets of the PG stream from the demultiplexers 173A and 173B, extracts and decodes encoded graphics data from the PES packets. The PG decoder 174 further writes the decoded uncompressed graphics data into the PG plane 176C at the times indicated by the PTSs written in the respective PES packets.

The IG decoder 174D receives the PES packets of the IG stream from the demultiplexers 173A and 173B, extracts and decodes the encoded graphics data from the PES packets. The IG decoder 174 further writes the decoded uncompressed graphics data into the IG plane 176D at the times indicated by the PTSs written in the respective PES packets.

The primary audio decoder 174E receives the PES packets of the primary audio stream from the demultiplexers 173A and 173B, and accumulates the PES packets in the buffer. In parallel with this, the primary audio decoder 174E reads the PES packets from the buffer, removes the PES headers from the PES packets, extracts and decodes the LPCM-encoded audio data. The primary audio decoder 174E further outputs the decoded uncompressed audio data to the mixer 178 at the times indicated by the PTSs written in the respective TS packets. Here, the primary audio decoder 174E interprets, in advance, the type of coding format written as a stream attribute from the primary audio stream to be decoded, and selects a decoding method depending on the type of coding format.

The secondary audio decoder 174F includes the same structure as the primary video decoder 174E. The secondary audio decoder 174E, with use of this structure, receives the PES packets of the secondary audio stream from the demultiplexers 173A and 173B, extracts and decodes LPCM-encoded audio data from the PES packets. The secondary audio decoder 174F further outputs the decoded uncompressed audio data to the mixer 178.

The text subtitle decoder 174G receives the PES packets of text subtitle stream from the second demultiplexer 173B, and extracts text strings from the PES packets. The text subtitle decoder 174G further, with use of internal font data, generates raster data of fonts corresponding to the text strings, and writes the raster data into the PG plane 176C at the times indicated by the PTSs written in the respective PES packets.

The BD-J processor 175 receives graphics data GD from the BD-J module 1645 of the control unit 164, and decodes the graphics data GD. The BD-J processor 175 further writes the decoded uncompressed graphics data into the BD-J plane 176E at the times indicated by the respective PTSs that the BD-J module 1645 has specified according to the BD-J application program. The BD-J processor 175 is further equipped with software such as Java 2D or OPEN-GL, and according to instructions from the BD-J module 1645, creates CG video images and writes data of the CG video images onto the BD-J plane 176E.

The planes 176A-E are areas in an internal memory in the playback unit 170, and the size of each plane is equivalent to the size of one video plane. In the primary video plane 176A, one video plane representing a main video of a movie is formed from uncompressed pictures written by the primary video decoder 174A. In the secondary video plane 176B, one video plane representing a secondary video to be displayed together with the main video is formed from uncompressed pictures written by the secondary video decoder 174B. In the PG plane 176C, one video plane representing graphics to be displayed together with the main video, particularly subtitles, is formed from uncompressed graphics data written by the PG decoder 174C. Also, in the PG plane 174C, one video plane representing subtitles to be displayed together with the main video is formed from raster data written by the text subtitle decoder 174G. In the IG plane 176D, one video plane representing graphics to be displayed together with the main video, particularly interactive GUI screens, are formed from uncompressed graphics data written by the IG decoder 174D. In the BD-J plane 176E, one video plane representing graphics to be displayed together with the main video is formed from uncompressed graphics data written by the BD-J processor 175.

The adder 177 composites the video planes formed in the planes 176A-E into one video plane, and outputs the video plane as the video data VD. In particular, in BD-J mode, video planes of graphics images formed in the BD-J plane 176E can be composited in the video plane of the main video formed in the primary video plane 176A. By doing this, for example as shown in Fig.4B, a video SCN, a title TL of the video, and an owl animation video CR can be displayed in one video plane.

The mixer 178 mixes the uncompressed audio data output from the primary audio decoder 174E and the uncompressed audio data output from the secondary audio decoder174F into one audio data AD. That is to say, the audio data AD represents audio from both the decoders 174E and 174F which have been superimposed together.

### [Process to Play Back Playlist by the Recording/Playback Apparatus 101]

Fig.20 is a flowchart of a process to play back a playlist by the recording/playback apparatus 101 immediately after the optical disc 104 is inserted into the optical disc drive 110. Here, it is assumed that, for example at the time of applying power to the recording/playback apparatus 101, the control unit 160 initializes the functional units according to the firmware, in particular, the playback control unit 164 has organized the execution environment of the application program. The following will describe the playback process in the order of the steps shown in Fig.20.

Step S1 : the operation unit 130 detects that the optical disc 104 is inserted in the optical disc drive 110, and transmits the notification INT to this effect to the user operation detection module 162 (see Figs.1 1, 14). The user operation detection module 162 transmits an operation signal UO to the playback control unit 164 according to the notification INT. In the playback control unit 164, the dispatcher 1643, according to the operation signal UO, notifies the insertion to the BD-J module 1645. Meanwhile, the dispatcher 1643A transmits the command COM to the virtual file system 163 via the AV playback library 1646, and the index file IF is transmitted from the optical disc 104 to the user operation detection module 162.

Step S2: according to the notification from the dispatcher 1643A, the BD-J module 1645 causes the optical disc drive 110 to determine whether the optical disc 104 is the BD-RE disc 104B shown in Fig.3. When the optical disc 104 is the BD-RE disc 104B, the BD-J module 1645 searches for the VFSData directory 218 in the directory structure 204B on the BD-RE disc 104B. When this directory is detected, the BD-J module 1645 further searches in the directory for the mapping information file 220A. When the mapping information file 220A is detected, the process proceeds to step S3. When the VFSData directory 218 or the mapping information file 220A is not detected, the process proceeds to step S4.

Step S3: first, the BD-J module 1645 reads an orgID and a discID from the ID file 212C of the BD-RE disc 104B. Next, the BD-J module 1645 creates the BUDA directory 251 in the local storage 120, and under the BUDA directory 215, creates the orgID directory 252 and the discID directory 253 for directory names representing the read ID numbers, in order. The BD-J module 1645 further causes the optical disc drive 110 to transfer the binding unit 220 from the VFSData directory 218 on the BD-RE disc 104B to the discID directory 253 in the local storage 120. Meanwhile, the BD-J module 1645 requests the virtual file system 163 to construct a virtual package via the AV playback library 1646. Thereafter, the process proceeds to step S7.

Step S4: the BD-J module 1645 confirms whether the construction of the virtual package by the virtual file system 163 has already been requested according to the operation signal UO from the user operation detection module 162 or the BD-J application program being executed. If the construction has already been requested, the process proceeds to step S5, and if the construction has not been requested, the process proceeds to step S9.

Step S5: the BD-J module 1645 reads a content ID in the index file IF from the mode management module 1643, causes the network interface 140 to transmit the content ID to the server apparatus 106, and receives a corresponding reply from the server apparatus 106. The BD-J module 1645 further determines, based on the content of the reply, whether the binding unit 220 corresponding to the original data on the optical disc 104 is stored in the server apparatus 106 or not. When that determination is positive, the process proceeds to step S7, and if the determination is negative, the process proceeds to step S6.

Step S6: the BD-J module 1645 causes the network interface 140 to download the binding unit 220 from the server apparatus 106. The BD-J module 1645 further requests the virtual file system 163 to construct the virtual package via the AV playback library 1646. Thereafter, the process proceeds to step S7.

Step S7: the virtual file system 163, in accordance with the request to construct the virtual package, first reads the orgID and the discID from the ID file 212C on the optical discl 04, and searches in the local storage 120 for the orgID directory 252 and the discID directory 253 of the directory names indicated by the IDs (see Fig.16). Next, the virtual file system 163 reads the mapping information file 220A and the signature information file 220B from the disc ID directory 253, and reads the merge certificate 212B from the CERTIFICATE directory 212 on the optical disc 104. Next, the virtual file system 163 decrypts the signature information file 220B with use of the public key included in the merge certificate 212B, and collates the result of the decryption with the mapping information file 220A. By doing this, the mapping information file 220A is verified.

Step S8: After the verification of the mapping information file 220A succeeds, the virtual file system 163 searches in the virtual package 701 in the mapping information file 220A for the mapping information 710 corresponding to the virtual package 206 (see Fix. 13). Next, the virtual file system 163 correlates the paths in the files 223A-225C existing in the trailer directory 221 in the local storage with the paths in the virtual package 206 according to the mapping information 710 (see Fig.15). In this way, the virtual package 206 is constructed.

Step S9: when the virtual package 206 is constructed, the dispatcher 1643A transmits a command COM to the virtual file system 163 via the AV playback library 1646, and causes the index file IF to be read from the virtual package 206. Here, if a new index file is included in the binding unit 220, the index file stored in the mode management module 1643 is updated with the new index file. Thereafter, the mode management module 1643 references the first play of the index table in the index file IF, and depending on the type of object specified in the item, assigns the current dynamic scenario information DS to the HDMV module 1644 or the BD-J module 1645. By doing this, the module 1644 or 1645 to which the current dynamic scenario information DS is to be assigned reads the object for the first play from the dynamic scenario information DS, and then executes programs in accordance with the object.

In particular, when the process by the object for the first play is a process of playing back a playlist, the modules 1644 and 1645 instruct the AV playlist library 1646 to perform the playback process. According to the instruction, the AV playback library 1646 first requests the virtual file system 163 to read the current playlist file with use of a command COM. In response to the command COM, the virtual file system 163 reads the playlist file from the virtual package 206, and stores the playlist file into the static scenario memory 1642 as current static scenario information SS. The AV playback library 1646 reads the playlist information from the current static scenario information SS, and according to the read playlist information, causes the virtual file system 163 to transfer the AV stream file to be played back from the virtual package 206 to the playback unit 170. The playback unit 170 decodes elementary streams from the AV stream file into video data VD and audio data AD. Furthermore, the video output unit 180 converts the video data VD to a video signal VS and transmits the video signal VS to the display apparatus 102. The audio output unit 190 converts the audio data AD to an audio signal AS and outputs the audio signal AS to the speaker 108. In this way, the current playlist is played back.

### [Process to Append Binding Unit by the Recording/Playback Apparatus 101]

Figs.21 and 22 are flowcharts of appending the binding unit to the BD-RE disc 104B by the recording/playback apparatus 101. Here, assume that the control unit 160 has initialized the functional units according to the firmware, for example, when power is applied to the recording/playback apparatus 101, or has finished processing to play back a playlist from the optical disc 104. The following will describe the appending process in the order of the steps shown in Figs.21 and 22.

Step S11: the operation unit 130 detects a request to remove the optical disc 104 from the optical disc drive 110, or a request to append the binding unit to the optical disc 104, through an operation by a user on the remote control 103 or a button on the front panel, and then transmits the notification INT indicating the request to the user operation detection module 162 (see Figs.1 1 and 14). In response to the notification INT, the user operation detection module 162 transmits the operation signal UO indicating the request to the determination unit 165.

Step S12: the determination unit 165, in response to the operation signal UO, determines whether the optical disc 104 inserted in the optical disc drive 110 is the BD-RE disc 104B shown in Fig.3 or not. The process repeats step S12 until the optical disc 104 is determined to be the BD-RE disc 104B, that is, until the BD-RE disc 104B is inserted in the optical disc drive 110. When the optical disc 104 is determined to be the BD-RE disc 104B, the process proceeds to step S 13.

Step S13: the determination unit 165 checks whether the binding unit corresponding to the original data recorded on the BD-RE disc 104B is stored in the local storage 120. Specifically, the determination unit 165 reads the orgID and the discID from the ID file 212C in the CERTIFICATE directory 212 on the BD-RE disc 104B (see Fig.2), and then searches in the local storage 120 for the orgID directory and the discID directory of the directory names represented by the IDs. When these directories are detected, that is, when the binding unit is stored in the local storage 120, the process proceeds to step S14. When the directories are not detected, that is, when the binding unit is not stored in the local storage 120, the process proceeds to step S15.

Step S14: the determination unit 165 reads the mapping information file 220A from the detected discID directory 253 (see Fib.12). Thereafter, the process proceeds to step S17.

Step S15: the determination unit 165 reads a content ID from the index file 212A on the BD-RE disc 104B. The determination unit 165 further instructs the network interface 140 to transmit the content ID to the server apparatus 106. Next, the determination unit 165 instructs the network interface 140 to download the binding unit replied from the server apparatus 106 to the local storage 120 in response to the content ID.

Step S16: similarly to step S13, first, the determination unit 165 searches for the orgID directory 252 and the discID directory 253 in the local storage 120. By doing this, the binding unit 220 downloaded to the local storage 120 is detected. Next, the determination unit 165 reads the mapping information file 220A and the signature information file 220B from the binding unit 220, and performs a verification that is similar to the verification by the virtual file system 163. That is to say, the determination unit 165 acquires a public key from the merge certificate 212B on the BD-RE disc 104B, decrypts the signature information file 220B with use of the key, and collates the decryption result with the mapping information file 220A.

Step S17: the determination unit 165 performs a path collation with use of the mapping information file 220A. That is to say, the determination unit 165 selects one of the updated AV stream files in the binding unit 220, and collates the path thereof in the virtual package with a path on the BD-RE disc 104B to each of the original AV stream files. When the paths match, the process proceeds to step S18. When the paths do not match, the process proceeds to step S20.

Step S18: the determination unit 165 notifies the recording control unit 166 of the path on the BD-RE disc 104B to the original AV stream file. The recording control unit 166 instructs the optical disc drive 110 to delete the AV stream file indicated by that path from the BD-RE disc 104B. The optical disc drive 110 deletes the AV stream file indicating the path from the BD-RE disc 104B according to the instruction. Thereafter, the process proceeds to step S20.

Step S20: the determination unit 165 performs the missing data determination with use of the mapping information file 220A. That is to say, the determination unit 165 determines whether the updated AV stream file selected in step S17 is missing data or not, from the progressive playlist information 702 in the mapping information file 220A (see Fig.13). If the updated AV stream file is missing data, the process proceeds to step S22. If the updated AV stream file is not missing data, the process proceeds to step S24.

Step S22: the determination unit 165 notifies the recording control unit 166 of the path in the local storage 120 of the updated AV stream file. The recording control unit 166 disables the instruction to write the AV stream file onto the BD-RE disc 104B. By doing this, the updated AV stream file is not written on the BD-RE disc 104B.

Step S24: the recording control unit 166 instructs the writing of the updated AV stream file onto the BD-RE disc 104B. Specifically, the recording control unit 166 instructs the local storage 120 to provide the updated AV stream file to the optical disc drive 110. Meanwhile, the recording control unit 166 instructs the optical disc drive 110 to write the updated AV stream file into the VFSData directory 218 on the BD-RE disc 104B. By doing this, the updated AV stream file is written onto the BD-RE disc 104B.

Step S26: with reference to the mapping information file 220A, the determination unit 165 searches in the updated AV stream files in the binding unit 220 for a file which has not yet undergone the path collation and missing data determination. If there remains such an unprocessed updated AV stream file , the process is repeated from step S17. If there remain no unprocessed updated AV stream files, the process proceeds to step S30.

Step S30: the recording control unit 166 instructs that the updated data files other than the updated AV stream files 225A-C, that is, the updated playlist files 223A-B and the updated clip information files 224A-C, be written onto the BD-RE disc 104B. Specifically, the recording control unit 166 instructs the local storage 120 to provide such files to the optical disc drive 110. Meanwhile, the recording control unit 166 instructs the optical disc drive 110 to write such files into the VFSData directory 218 on the BD-RE disc 104B. By doing this, such files are written onto the BD-RE disc 104B.

Step S40: the recording control unit 166 instructs that the mapping information file 220A and the signature information file 220B be written onto the BD-RE disc 104B. Specifically, the recording control unit 166 instructs the local storage 120 to provide such files to the optical disc drive 110. Meanwhile, the recording control unit 166 instructs the optical disc drive 110 to write such files into the VFSData directory 218 on the BD-RE disk 104B. By doing this, the files are written onto the BD-RE disc 104B. In this way, as shown in Fig.18, the binding unit 220 is appended on the BD-RE disc 104B.

By the above process, the recording playback apparatus 101 according to embodiment I of the present invention deletes an original AV stream file from the BD-RE disc 104B when the path in the virtual package 206 of an updated AV stream file matches the path on the BD-RE disc 104B to the original AV stream file. By doing this, original AV stream files that are replaced with updated AV stream files at the time when the virtual package is constructed are deleted from the BD-RE disc 104B. Accordingly, the total amount of data recorded on the BD-RE disc 104B can be deleted. As a result, the recording/playback apparatus 101 according to embodiment 1 of the present invention can improve the reliability of the process to append the binding unit 220 on the BD-RE disc 104B.

Also, the binding unit 220 can be deleted from the local storage 120 after being appended on the BD-RE disc 104B. This enables the reduction in the amount of data to be continuously stored in the local storage 120 by the recording/playback apparatus 101, thus enabling the improvement in the use efficiency of the local storage 120.

### [Modifications]

(1) As described above, the recording/playback apparatus 101 according to embodiment 1 of the present invention deletes, from the BD-RE disc 104B, any original AV stream files that have been replaced with updated AV stream files at the time of constructing the virtual package. Similarly, when other original data such as original playlist files and clip information files are replaced with updated data files at the time of constructing the virtual package, such original files may also be deleted from the BD-RE disc 104B. By doing this, the total amount of data recorded on the BD-RE disc 104B can further be reduced.

(2) Error handling has been omitted in each step of the flowcharts of Fig.20 to 22; such as the error handling when there is a failure to download a binding unit from the server apparatus 106 in step S6, and the error handling when the BD-RE disc 104B is kept from being placed in the optical disc drive 110 for a predetermined time in step S12. However, a person skilled in the art could easily apply appropriate error handling to each step in the flowcharts of Figs.20 to 22.

(3) In the process to append the binding units shown in Figs.21 and 22, the determination unit 165 or the recording control unit 166 may cause the optical disc drive 110 to investigate the size of space available for writing on the BD-RE disc 104B, for example, before the path collation (step S17) or during each of steps S24, S30, and S40. By doing this, when it is found that the entirety of the binding unit cannot be written onto the BD-RE disc 104B even if the original AV stream file is deleted in step S18, the control unit 160 preferably stops the process to append the binding unit. Preferably, the control unit 160 further causes the display apparatus 102 to display an error message indicating that the process has been stopped, or causes the speaker 108 to output a sound warning that the process has been stopped.

(4) In embodiment 1 of the present invention, it is assumed that the original data of the directory structure 204B shown in Fig.3 has already been copied from the BD-ROM disc 104A to the BD-RE disc 104B. In addition, the recording/playback apparatus 101 may write, on the BD-RE disc, the original data from the BD-ROM disc together with the binding unit from the local storage. For example, first, the recording/playback apparatus 101 causes the entirety of the original data to be read from the BD-ROM disc inserted in the optical disc drive 110 to the local storage. Next, the original data and the binding unit from the local storage are transferred to the BD-RE disc which has been inserted in the optical disc drive 110 replacing the BD-ROM disc. Additionally, the recording/playback apparatus 101 may have two optical disc drives, and original data may be transferred from a BD-ROM disc inserted in one optical disc drive to the BD-RE disc inserted in the other optical disc drive, or the binding unit may be transferred from the local storage. Here, the recording/playback apparatus 101 may write the binding unit on the BD-RE disc before writing the original data, or at the same time as writing the original data. In this case, instead of the process in step S18 to delete the original AV stream file, the recording/playback apparatus 101 performs a process to remove the AV stream file from data to be transferred to the BD-RE disc.

### [Embodiment 2]

A recording/playback apparatus according to embodiment 2 of the present invention is different from the recording/playback apparatus of embodiment 1 in the process to append the binding unit, and in particular in writing the missing data onto the BD-RE disc. Other features are similar to those in embodiment 1, for example, the data structure on the optical disc to be played back, the hardware structure of the recording/playback apparatus, and the structures of the control unit and the playback unit. Accordingly, the following will describe the features in embodiment 2 that are different from those in embodiment 1. A description of other features in embodiment 2 that are similar to those in embodiment 1 can be found above in the description of embodiment 1.

The recording control unit 166 instructs that the updated AV stream files be written onto the BD-RE disc 104B. Note that, when having been notified from the determination unit 165 of one or more paths in the local storage 120 to one or more of the updated AV stream files, the recording control unit 166 checks in advance whether such files are already stored in the local storage 120. If such files are not stored, the recording control unit 166 instructs the network interface 140 to download such files from the server apparatus 106 to the local storage 120. If the updated AV stream files that are missing data are all stored in the local storage 120, the recording control unit 166 instructs the local storage 120 to provide the updated AV stream files to the optical disc drive 110. Meanwhile, the recording control unit 166 instructs the optical disc drive 110 to write the updated AV stream files into the trailer directory 221 in the VFSData directory 218 on the BD-RE disc 104B.

Fig.23 shows a schematic view of the process to append the binding unit 220 by the recording control unit 166. Similarly to the case shown in Fib.18, the recording control unit 166 is notified of the paths in the local storage to the second updated AV stream file (Apr05_2.m2t) 225B and the third AV stream file (Apr05_2.m2t) 225C to from the determination unit 165. This notification indicates that the files 225B and 225C are missing data. Accordingly, the recording control unit 166 first checks whether the updated AV stream files 225B and 225C are already stored in the local storage 120. As shown by a distinction between broken lines and solid lines in the example of Fig.23, the second updated AV stream file 225B is stored, but the third updated AV stream file 225C is not stored. In this case, the recording control unit 166 instructs the network interface 140 to download the third updated AV stream file 225C from the server apparatus 106 to the local storage 120. After the download is finished, the recording control unit 166 instructs the local storage 120 to provide the updated AV stream files 225B and 225C to the optical disc drive 110, and instructs the optical disc drive 110 to write the updated AV stream files into the trailer directory 221 in the VFSData directory 218 on the BD-RE disc 104B. Therefore, the updated AV stream files are written onto the BD-RE disc 104B even when some of them are missing data.

Fig.24 is a flowchart of a portion of the process to append the binding unit to the BD-RE disc 104B by the recording/playback apparatus 101, the portion indicating a missing data determination and steps thereafter. The steps S11 to S18 that are performed prior to the missing data determination are the same as the steps S11 to S18 shown in Fig.21 according to embodiment 1. Also, steps S30 and S40 are the same as the steps shown in Fig.22. Accordingly, details of the steps can be found above in the description of embodiment 1. The following will describe steps S20 to S26 shown in Fig.24 in order.

Step S20: the determination unit 165 performs a missing data determination. When an updated AV stream file is missing data, the process proceeds to step S21. If the updated AV stream file is not missing data, the process proceeds to step S24.

Step S21: the determination unit 165 notifies the recording control unit 166 of the path of the updated AV stream file in the local storage 120. The recording control unit 166 checks whether the updated AV stream file is already stored in the local storage 120. If the updated AV stream file is already stored, the process proceeds to step S23. If the updated AV stream file is not yet stored, the process proceeds to step S24.

Step S23: the recording control unit 166 instructs the network interface 140 to download the updated AV stream file from the server apparatus 106 to the local storage 120. Thereafter, the process proceeds to step S24.

Step S24: the recording control unit 166 instructs that the updated AV stream file be written onto the BD-RE disc 104B. By doing this, the updated AV stream file is written onto the BD-RE disc 104B.

Step S26: the determination unit 165, with reference to the mapping information file 220A, searches for an updated AV stream file in the binding unit 220 which has not yet undergone path collation and missing data determination. If there remains such an unprocessed updated AV stream file, the process is repeated from step S17. If there are no unprocessed updated AV stream files, the process proceeds to step S30.

By repeating steps S17 to S26, all the updated AV stream files, including missing data, are written onto the BD-RE disc 104B.

Similarly to the recording/playback apparatus according to embodiment 1, the recording/playback apparatus according to embodiment 2 deletes, from the BD-RE disc 104B, any original AV stream files that are to be replaced by updated AV stream files at the time of constructing a virtual package. Accordingly, the total amount of data recorded on the BD-RE disc 104B can be reduced, and thus the reliability of the process to append the binding unit 220 can be improved.

The recording/playback apparatus according to embodiment 2 of the present invention writes all the updated AV stream files, including missing data, onto the BD-RE disc 104B, in contrast to the recording/playback apparatus in embodiment 1. Accordingly, the binding unit 220 can be reliably read from the BD-RE disc 104B even by a playback apparatus that is not connected to an external network, or a playback apparatus that is relatively difficult to maintain a connection to an external network, such as a car navigation system or in-car display.

### [Modifications]

In step S24, the determination unit 165 or the recording control unit 166 may cause the optical disc drive 110 to investigate the size of space available for writing on the BD-RE disc 104B. The determination unit 165 or the recording control unit 166 may further select files to be written onto the BD-RE disc 104B from among the updated AV stream files that are missing data, depending on the size. For example, the determination unit 165 or the recording control unit 166 may write such updated AV stream files in the order in which the files are specified in the playlist information. In this case, the determination unit 165 or the recording control unit 166 stops the writing of such updated AV stream files at the time when the size of space available for writing on the BD-RE disc 104B falls below a sufficient level. The updated AV stream files that have not been written will be downloaded from the server apparatus 106 during or before playback of the files by a playback apparatus, similarly to normal missing data.

### [Embodiment 3]

The recording/playback apparatus according to embodiment 3 of the present invention is different from embodiment 1 in the process to append the binding unit. In particular, each file in the binding unit is written into the same directory as that in which the corresponding file in the original data is contained, excluding the updated AV stream files to be played back in parallel with the original AV stream files. Other features in embodiment 3 are similar to those in embodiment 1, for example, the data structure on the optical disc to be played back, the hardware structure of the recording/playback apparatus, and the structures of the control unit and the playback unit. Accordingly, the following will describe the features in embodiment 3 that are different from those in embodiment 1.A description of other features in embodiment 3 that are similar to those in embodiment 1 can be found above in the description of embodiment 1.

When the path of an updated AV stream file in the virtual package does not match any of the paths on the optical disc to the original AV stream files, that updated AV stream file is added to the original AV stream files in the virtual package. For example, in Figs.13 and 15, the virtual package paths 711 of the second updated AV stream file (Apr05_1.m2t) 225B and the third updated AV stream file (Apr05-2.m2t) 225C do not match any of the paths on the optical disc to the AV stream files in the original data 204. Accordingly, such updated AV stream files 225B and 225C are added into the STREAM directory of the virtual package 206 as the third AV stream file (03000.m2ts) 265C and the fourth AV stream file (03001.m2ts) 265D. Such updated AV stream files include files to be played back in parallel with the original AV stream files and files that are not to be played back in parallel.

Fig.25 shows a schematic view of a case when a playback section of the updated AV stream file 225B is parallel to a playback section of the original AV stream file 215A. For example, it is assumed that the second updated playlist file (Apr05.mpl) 223B shown in Fig.12 includes a playlist information piece 801 shown in Fig.25. According to the playlist information piece 801, elementary streams are played back from a portion CL1 of the first AV stream file (01000.m2ts) 215A during a playback section PI of the main path MP. Meanwhile, elementary streams are played back from a portion CL2 of the second updated AV stream file (Apr05_1.m2t) 225B during a playback section SPI of the sub-path SP. The playback section SPI of the sub-path SP is parallel with one part of the playback section PI of the main path MP. Accordingly, the playback unit 170 is required to perform a process to play back elementary streams from the portion CL1 of the first AV stream file 215A in parallel with a process to play back elementary streams from the portion CL2 of the second AV stream file 225B. To maintain stable synchronization between both processes, it is preferable to maintain stable synchronization between transferring the first AV stream file 215A to the first track buffer 172A, and transferring the second updated AV stream file 225B to the second track buffer 172B. To do this, it is preferable to transfer the AV stream files 215A and 215B from different recording media to the respective track buffers 172A and 172B in parallel.

Fig.26 shows a schematic view of a case when a playback section of the updated AV stream file 225B is separated from a playback section of the original AV stream file 215A. For example, suppose that the second updated playlist file 223B includes the playlist information 802 shown in Fig.26. According to this playlist information 802, elementary streams are played back from a portion CL1 of the first AV stream file 215A during a playback section PI1 of the main path MP. Meanwhile, elementary streams are played back from a portion CL2 of the second updated AV stream file 225B during another playback section P12 of the main path MP. The two playback sections PI1 and P12 are separated on the main path MP. Accordingly, the playback unit 170 need only perform the process to play back elementary streams from the portion CL1 of the first AV stream file 215A for a period different from the period of the process to play back elementary streams from the portion CL2 of the second updated AV stream file 225B. That is to say, the first AV stream file 215A and the second updated AV stream file 225B need only be transferred to the first track buffer 172A for different periods. For this reason, the AV stream files 215A and 225B may be transferred from the same recording medium to the first track buffer 172A.

In the process to append the binding unit, the recording/playback apparatus according to embodiment 3 of the present invention determines whether the updated AV stream files are to be played back in parallel with the original AV stream files. Depending on the result of the determination, the recording/playback apparatus further writes the updated AV stream files into different directories on the BD-RE disc. Specifically, the updated AV stream files to be played back in parallel with the original AV stream files as shown in Fig.25, are written into the VFSData directory 218 on the BD-RE disc 104B shown in Fig.3 together with the corresponding updated clip information files. Accordingly, the updated AV stream files, when played back by a playback apparatus, are first read from the BD-RD disc 104B to the local storage as shown in Fir.16, and thereafter played back from the local storage. This enables the maintenance of stable synchronization between the playback processes of the updated AV stream files and the original AV stream files. Meanwhile, the updated AV stream files that are to be played back during periods different from the periods of the playback of the original AV stream files as shown in Fig.26 are written into the BDMV directory 211 on the BD-RD disc 104B. Accordingly, the updated AV stream files, when played back by a playback apparatus, are played back directly from the BD-RD disc 104B, similarly to the original AV stream files. This enables the reduction in the amount of data transferred in advance from the BD-RE disc 104B to the local storage during the playback process by the playback apparatus.

The recording/playback apparatus according to embodiment 3 of the present invention realizes the above-described functions of appending the binding unit with use of the following elements.

When the path collation for an updated AV stream file is negative, the determination unit 165 further performs a parallel playback determination for the AV update stream file. To perform the parallel playback determination, a determination is made, from the playlist information, whether the updated AV stream file is to be played back in parallel with one of the original AV stream files or not. Here, the determination unit 165 reads the playlist information from the playlist file in the binding unit 220. When the parallel playback determination is affirmative, the determination unit 165 notifies the recording control unit 166 of the path of the updated AV stream file in the local storage 120. For example, in Fig.25, the determination unit 165 determines, from the playlist information 801 in the second updated playlist file 223B, that the second updated AV stream file 225B is to be played back in parallel with the first AV stream file 215A. The determination unit 165 further notifies the recording control unit 166 of the path of the second updated AV stream file 225B in the local storage 120.

Depending on the result of the parallel playback determination, the recording control unit 166 determines a destination on the BD-RE disc 104B to write the updated AV stream file and the corresponding updated clip information file. Specifically, the destination to write an updated AV stream file is determined to be the trailer directory 221 in the VFSData directory 218, along with the destination to write the corresponding updated clip information file, when the recording control unit 166 has been notified of the path in the local storage 120 to the updated AV stream file from the determination unit 165. Meanwhile, the paths of destinations to write other updated AV stream files and the corresponding updated clip information files are determined to be the paths in the BDMV directory 211 equivalent to the virtual package paths 711 written in the mapping information file 220A.

The recording control unit 166 further instructs that the updated AV stream files be written onto the BD-RE disc 104B. Note that, when having been notified of the paths of the updated AV stream files in the local storage 120 from the determination unit 165 as the result of the missing data determination, the recording control unit 166 first checks whether these updated AV stream files have already been stored in the local storage 120, similarly to the recording control unit according to embodiment 2. If the updated AV stream files have not yet been stored, the recording control unit 166 instructs the network interface 140 to download the updated AV stream files from the server apparatus 106 to the local storage 120. When all the updated AV stream files that are missing data have been stored in the local storage 120, the recording control unit 166 instructs the local storage 120 to provide the updated AV stream files to the optical disc drive 110. Meanwhile, the recording control unit 166 instructs the optical disc drive 110 to write the updated AV stream files into the destination on the BD-RE disc 104B determined in advance.

Next, the recording control unit 166 instructs that the files in updated data other than the updated AV stream files be written onto the BD-RE disc 104B. Specifically, the recording control unit 166 instructs the local storage 120 to provide the files to the optical disc drive 110. Here, the paths of destinations to write the files are determined to be the same paths as the virtual package paths 711 written in the mapping information file 220A. Note that the VFSData directory 218 is specified as the destination to write the updated clip information files corresponding to the updated AV stream files written in the VFSData directory 218.

When the determination unit 165 has detected an updated AV stream file to be played back in parallel with the original AV stream files, the recording control unit 166 creates an identification information file. Among paths to the updated data, paths on the BD-RE disc 104B to the files written in the BDMV directory on the BD-RE disc 104B are recorded in the identification information file. A playback apparatus uses the identification information file when constructing the virtual package 206 from the BD-RE disc 104B, and thus can disable the correspondences between a virtual package path 711 specified in the mapping information file 220A and the BUDA path 712, the virtual package path 711 matching the path written in the identification information file (see the description about embodiment 4). This enables the playback apparatus to correctly construct the virtual package. The recording control unit 166 further instructs the optical disc drive 110 to write the identification information file into the VFSData directory 218 on the BD-RE disc 104B, along with the mapping information file 220A and the signature information file 220B.

When the determination unit 165 has not detected updated AV stream files to be played back in parallel with the original AV stream files, the updated data does not include files to be written into the VFSData directory 218 on the BD-RE disc 104B. Accordingly, the recording control unit 166 does not instruct that the mapping information file 220A and the signature information file 220B be written onto the BD-RE disc 104B.

Fig.27 shows a schematic view of the process to append the binding unit 220 by the recording control unit 166 in a case that updated data includes the updated AV stream file shown in Fig.25.

First, the recording control unit 166 is notified of the path in the local storage 120 to the second updated AV stream file (Apr05_1.m2t) 225 from the determination unit 165 as the result of the parallel playback determination. At this time, the recording control unit 166 determines the trailer directory 221 in the VFSData directory 218 to be the destination to write the second updated AV stream file 225B, together with the destination to write the corresponding second updated clip information file (Apr05_1.clp) 224B. Meanwhile, the recording control unit 166 assigns the STREAM directory 215 in the BDMV directory 211 as the destination to write the other updated AV stream files 225A and 225C, and assigns the CLIPINF directory 214 in the BDMV directory 211 as the destination to write the corresponding updated clip information files 224A and 224C.

Next, the recording control unit 166 are notified of the paths in the local storage 120 to the second updated AV stream file 225B and the third updated AV stream file (Apr05_2.m2t) 225C from the determination unit 165, similarly to the case in Fig.18. At this time, first, the recording control unit 166 instructs the network interface 140 to download the third updated AV stream file 225C from the server apparatus 106 to the local storage 120, similarly to the recording control unit according to embodiment 2. After this download, the recording control unit 166 instructs the local storage 120 to provide the updated AV stream files 225A, 225B, and 225C to the optical disc drive 110, and instructs the optical disc drive 110 to write the updated AV stream files 225A-C into the destinations on the BD-RE disc 104B that have been determined in advance. By doing this, the first updated AV stream file (Apr2005.m2t) 225A is written into the STREAM directory 214 in the BDMV directory 211 as a new second AV stream file (02000.m2ts) 215B. The second updated AV stream file 225B is written into the trailer directory 221 in the VFSData directory 218. The third updated AV stream file 225C is written into the STREAM directory 215 as a new fourth AV stream file (03001.m2ts) 215D.

Furthermore, the recording control unit 166 instructs the local storage 120 to provide the files 223A-B and 224A-C of the updated data other than the updated AV stream files 225A-C to the optical disc drive 110. Meanwhile, the recording control unit 166 instructs the optical disc drive 110 to write the files 223A-B and 224A-C onto the BD-RE disc 104B. Here, the paths of destinations to write the files except for the second updated clip information file 224B, are determined to be the same paths as the virtual package paths 711 written in the mapping information file 220A. By doing this, the bodies of the playlist files (00000.mpls, 0001.mpls) 213A-B are replaced by the bodies of the updated playlist files (Apr2004.mpl, Apr05.mpl) 223A-B, and the body of the second clip information file (02000.clpi) 214B is replaced by the body of the first updated clip information file (Apr2005.clp) 224A. Also, the third updated clip information file (Apr05_2.clp) 224C is added as the fourth clip information file (03001.clpi) 214D. Meanwhile, the trailer directory 221 in the VFSData directory 218 is specified as the destination to write the second updated clip information file 224B. By doing this, the second updated clip information file 224B is written into the trailer directory 221.

Next, the recording control unit 166 creates an identification information file 230. Fig.28 shows a schematic view of the data structure of the identification information file 230. As shown in Fig.28, the paths on the BD-RE disc 104B to the playlist files 213A-B, the second clip information file 214B, the fourth clip information file 214D, the second AV stream file 215B, and the fourth AV stream file 215D are recorded in the identification information file 230. This indicates that these files are files of updated data written in the BDMV directory 211. The recording control unit 166 further instructs the optical disc drive 110 to write the identification information file 230 into the VFSData directory 218, together with the mapping information file 220A and the signature information file 220B.

By doing this, only the second updated AV stream file 225B to be played back in parallel with the original AV stream file, and the corresponding second updated clip information file 224B are written into the VFSData 218, as shown in Fig.27. Meanwhile, other updated data is written into the BDMV directory 211. Accordingly, in the playback process by the playback apparatus, the data amount transferred in advance from the BD-RE disc 104B to the local storage can be reduced than that shown in Fig.23. Also, among such updated data, the files that replace the original files in the virtual package 206 as shown in Fig.15, actually replace the original files on the BD-RE disc 104B as shown in Fig.27. This increases the amount of updated data that can be written onto the BD-RE disc 104B.

Fig.29 shows a schematic view of the process to append the binding unit 220 by the recording control unit 166 when all the updated AV stream files included in the updated data are similar to those shown in Fig.26.

As a result of the parallel playback determination, the recording control unit 166 is not notified of paths of any updated AV storage files in the local storage 120 from the determination unit 165. Accordingly, the recording control unit 166 assigns the STREAM directory 215 as the destination to write all the updated AV stream files 225A-C, and assigns the CLIPINF directory file as the destination to write all the updated clip information files 224A-C.

Next, the recording control unit 166 is notified of the paths in the local storage 120 to the second updated AV stream file 225B and the third updated AV stream file 225C from the determination unit 165, as the result of the missing data determination, similarly to the case in Fig.18. By doing this, the recording control unit 166 instructs the local storage 120 to provide the updated AV stream files 225A-C to the optical disc drive 110, and instructs the optical disc drive 110 to write the updated AV stream files 225A-C on the predetermined BD-RE disc 104B, similarly to the case in Fig.27. By doing this, the first updated AV stream file 225A is written into the STREAM directory 215 as the new second AV stream file 215B. The second updated AV stream file 225B is written into the STREAM directory 215 as the new third AV stream file (03000.m2ts) 215C. The third updated AV stream file 225C is written into the STREAM directory 215 as the new fourth AV stream file 215D.

Furthermore, the recording control unit 166 instructs the local storage 120 to provide the files 223A-B and 224A-C of the updated data other than the updated AV stream files 225A-C to the optical disc drive 110. Meanwhile, the recording control unit 166 instructs the optical disc drive 110 to write the files 223A-B and 224A-C onto the BD-RE disc 104B. By doing this, the original files are replaced with the files of updated data, or the files of the updated data are added to the original files, similarly to the case in Fig.27. Furthermore, the second updated clip information file 224B is added as the third clip information file (03000.clpi) 214C.

In the case of Fig.29, the updated AV stream files 225A-C include no files to be written into the VFSData directory 218. Accordingly, the recording control unit 166 does not instruct that the mapping information file 220A and the signature information file 220B be written onto the BD-RE disc 104B. In this way, all the updated data is written into the BDMV directory, as shown in Fig.29. Accordingly, a playback apparatus, when playing back a playlist from the BD-RE disc 104B, need not construct a virtual package.

### [Process to Append Binding Unit by Recording/Playback Apparatus]

Figs.30 to 32 are flowcharts showing portions of the process to append a binding unit, according to embodiment 3, the portions including the path collation and steps thereafter. This appending process is different from that according to embodiment I shown in Figs.21 and 22, mainly in that a parallel playback process has been added. This appending process is further different from that according to embodiment 2 shown in Fig.24, mainly in that the destination to write updated data has been changed, and that a process to create an identification information file has been added. The following will describe the appending process in the order of the steps shown in Figs.30 to 32. Note that the same steps as those shown in Figs.21, 22, and 24 are marked by the same reference symbols. Also, details of the same steps according to the present embodiment can be found above in the description of embodiments 1and 2.

Step S11 : the operation unit 130 transmits a notification INT to the user operation detection module 162, the notification INT indicating, for example, a request for an ejection of the optical disc 104 from the optical disc drive 110. In response to the notification INT, the user operation detection module 162 transmits an operation signal UO to the determination unit 165.

Step S12: in response to the operation signal UO, the determination unit 165 determines whether the optical disc 104 is the BD-RE disc or not. When the optical disc 104 is determined to be the BD-RE disc 104B, the process proceeds to step S13.

Step S 13: the determination unit 165 confirms whether the binding unit for the original data recorded on the BD-RE disc 104B is stored in the local storage 120. If the binding unit is stored, the process proceeds to step S14. If the binding unit is not stored, the process proceeds to step S 15.

Step S14: the determination unit 165 reads the mapping information file 220A from the detected discID directory 253. Thereafter, the process proceeds to step S17.

Step S15: the determination unit 165 reads a content ID from the index file 212A on the BD-RE disc 104B, and instructs the network interface 140 to download the binding unit with use of the content ID from the server apparatus 106 to the local storage 120.

Step S16: the determination unit 165 reads the mapping information file 220A and the signature information file 220B from the binding unit 220, and performs verification similar to that by the virtual file system 163.

Step S17: the determination unit 165 collates a path of an updated AV stream file in the virtual package with a path of each original AV stream files on the BD-RE disc 104B. When the paths match, the process proceeds to step S18. When the paths do not match, the process proceeds to step S50.

Step S 18: the determination unit 165 notifies the recording control unit 166 of the path of the original AV stream file on the BD-RE disc 104B. In response to the notification, the recording control unit 166 instructs that the AV stream file be deleted. The optical disc drive 110, in response to the instruction, deletes the AV stream file from the BD-RE disc 104B. Thereafter, the process proceeds to step S52.

Step S50: the determination unit 165 performs a parallel playback determination on the updated AV stream file. That is to say, the determination unit 165 first reads the playlist information from the playlist file in the binding unit 220. Next, the determination unit 165 determines, from the playlist information, whether or not the updated AV stream file is to be played back in parallel with one of the original AV stream files. If this determination is affirmative, the process proceeds to step S51. If the determination is negative, the process proceeds to step S52.

Step S51: the determination unit 165 notifies the recording control unit 166 of the path of the updated AV stream file in the local storage 120. The recording control unit 166 determines the trailer directory 221 in the VFSData directory 218 as the destination to write the updated AV stream file and the corresponding updated clip information file. Thereafter, the process proceeds to step S20.

Step S52: the recording control unit 166 determines the path of the destination to write the updated AV stream file and the corresponding updated clip information file to be the same path in the BDMV directory 211 as the virtual package path 711 written in the mapping information file 220A. Thereafter, the process proceeds to step S20.

Step S20: the determination unit 165 performs a missing data determination. When the updated AV stream file is missing data, the process proceeds to step S21. When the updated AV stream file is not missing data, the process proceeds to step S24.

Step S21: the determination unit 165 notifies the recording control unit 166 of the path of the updated AV stream file in the local storage 120. The recording control unit 166 checks whether the updated AV stream file is already stored in the local storage 120. If the updated AV stream file is already stored, the process proceeds to step S23. If the updated AV stream file is not stored, the process proceeds to step S24.

Step S23: the recording control unit 166 instructs the network interface 140 to download the updated AV stream file from the server apparatus 106 to the local storage 120. Thereafter, the process proceeds to step S24.

Step S24: the recording control unit 166 instructs that the updated AV stream file be written onto the BD-RE disc 104B. By doing this, the updated AV stream file is written into the destination on the BD-RE disc 104B determined in step S51 or step S52.

Step S26: the determination unit 165 searches for an unprocessed updated AV stream file with reference to the mapping information file 220A. If there remains an unprocessed updated AV stream file, the process is repeated from step S17. If there remains no unprocessed updated AV stream file, the process proceeds to step S31.

Step S31: the recording control unit 166 instructs that the files of updated data other than the updated AV stream files be written onto the BD-RE disc 104B. Specifically, the recording control unit 166 instructs the local storage 120 to provide the files to the optical disc drive 110. Meanwhile, the recording control unit 166 instructs the optical disc drive 110 to write the files into the BDMV directory 211 on the BD-RE disc 104B. Here, the same paths as the virtual package paths 711 written in the mapping information file 220A are assigned as the paths of the destinations to write the files. Note that the VFS directory 218 is assigned as the destination to write the updated clip information files corresponding to the updated AV stream files written in the VFSData directory 218.

Step S32: the recording control unit 166 checks whether an updated AV stream file to be played back in parallel with an original AV stream file has been detected by the determination unit 165. Specifically, the recording control unit 166 checks whether the unit 166 has a path in the local storage 120 of which the unit 166 has been notified from the determination unit 165 in step S51. If the unit 166 has the path, the process proceeds to step 533. If the unit 166 does not have the path, the process to append a binding unit ends.

Step S40: the recording control unit 166 instructs that the mapping information file 220A and the signature information file 220B be written onto the BD-RE disc 104B. By doing this, the files are written into the VFSData directory 218.

The recording/playback apparatus according to embodiment 3 of the present invention deletes, from the BD-RE disc 104B, original AV stream files to be replaced with updated AV stream files at the time of constructing the virtual package 206, similarly to the apparatus according to embodiment 1. Accordingly, the total amount of data written in the BD-RE disc 104B can be reduced, and thus the reliability of the processing to append the binding unit 220 can be improved.

The recording/playback apparatus according to embodiment 3 of the present invention writes all the updated AV stream files, including missing data, onto the BD-RE disc 104B, similarly to the apparatus according to embodiment 2. Accordingly, the binding unit 220 can be reliably read from the BD-RE disc 104B even by a playback apparatus that is not connected to an external network, or a playback apparatus that is relatively difficult to maintain a connection to the external network.

The recording/playback apparatus according to embodiment 3 of the present invention writes only the updated AV stream files to be played back in parallel with the original AV stream files and the corresponding updated clip information files into the VFSData directory 218 on the BD-RD disc 104B, in contrast to the apparatuses according to embodiments I and 2. Meanwhile, the recording/playback apparatus according to embodiment 3 writes other updated data into the BDMV directory 211. This enables a recording apparatus, in a playback process, to transfer a smaller amount of data in advance from the BD-RE disc 104B to the local storage, than the BD-RE disc 104B according to embodiment 2. As a result, the use efficiency of the local storage can be improved. This further enables the recording apparatus to shorten the time between the insertion of the BD-RE disc 104B into the optical disc drive and the start of playing back a playlist.

### [Modifications]

(1) When an updated AV stream file to be played back in parallel with an original AV stream file are detected by the determination unit 165, the recording control unit 166 according to embodiment 3 of the present invention creates the identification information file 230. Additionally, the recording control unit 166 may rewrite the mapping information file 220A. Other features are the same as those according to embodiment 3. Accordingly, the following will describe the features that are different from those in embodiment 3, and the description of the same features as those in embodiment 3 can be found above in the description of embodiment 3.

Fig.33 shows a schematic view of a process to rewrite the mapping information file 220A by the recording control unit 166. The recording control unit 166 rewrites the content of the mapping information file 220A shown in Fig.13, for example, as shown in Figs.33A to 33B according to the procedure described below. First, the recording control unit 166 searches, in the pairs of virtual package paths 711 and BUDA paths 712 written in the virtual package information 701, for the pair corresponding to the path of a file of the updated data written into the BDMV directory 211 of the BD-RE disc 104B. Shaded areas in Fig.33A show the detected pairs of the virtual package paths 711 and the BUDA paths 712. Next, the recording control unit 166 deletes, from the mapping information file 220A, the detected pairs of the virtual package paths 711 and the BUDA paths 712. The recording control unit further searches, in the mapping information written in the progressive playlist information 702, for the information 720 that the determination unit 165 has used for the missing data determination. Shaded areas in Fig.33A show the detected mapping information 720. Next, the recording control unit 166 deletes the detected mapping information 720 from the mapping information file 220A. As a result, the pairs of virtual package paths 711 and BUDA paths 712 left in the rewritten mapping information file 220C are only assigned to the updated AV stream files to be played back in parallel with the original AV stream files and the corresponding updated clip information files, as shown in Fig.33B.

The recording control unit 166 calculates the hash values in the rewritten mapping information file 220C, and encrypts a predetermined private key. By doing this, the recording control unit 166 creates a new electronic signature. The recording control unit 166 further rewrites the signature information file 220B, and replaces the original electronic signature with a new electronic signature. Next, the recording control unit 166 rewrites the merge certificate 212B, and replaces the original public key with a new public key. The new public key corresponds to the private key used in creating the new digital signature. That is to say, the new digital signature can be decrypted with use of the new digital signature. Thereafter, the recording control unit 166 instructs the optical disc drive 110 to write over the original merge certificate 212B with the rewritten merge certificate. The recording control unit 166 also instructs the optical disc drive to write the rewritten mapping information file 220C and the signature information file in the VFSData directory 218 on the BD-RE disc 104B.

Fig.34 shows a schematic view of a process to append a binding unit by the recording control unit when updated data includes the updated AV stream file shown in Fig.25. In Fig.34, the rewritten mapping information file 220C and the signature information file 220D are written into the VFSData directory 218 on the BD-RE disc 104B, instead of the identification information file 230, in contrast to Fig.27. Furthermore, the original merge certificate 212B is rewritten to the new merge certificate 212D. The content of the mapping information file 220C shown in Fig.33B matches the content of the VFS data directory 218 on the BD-RE disc 104B shown in Fig.34. Also, the rewritten signature information file 220D and the merge certificate 212D correctly correspond to the rewritten mapping information file 220C. Accordingly, the playback apparatus, with use of these files, can correctly construct the virtual package 206 from the BD-RE disc 104B.

Similarly to embodiment 1, the recording/playback apparatus according to embodiment 3 of the present invention need not write the updated AV stream file on the BD-RE disc 104B when the updated AV stream file is missing data. In this case, the recording control unit 166 does not record the virtual package path of the updated AV stream file. Additionally, when the recording control unit 166 rewrites the mapping information file 220A instead of the identification information file, unlike the case shown in Fig.33, the pair of the virtual package path of the updated AV stream file and the BUDA path remain and are not deleted from either the virtual package information 701 or the progressive playlist information 702.

Fig.35 shows a schematic view of a rewritten mapping information file 220D. In the mapping information file 220D shown in Fig.35, furthermore, a URL (Uniform Resource Locator) 723 is added to the progressive playlist information by the recording control unit 166. The URL 723 indicates a storage location in the server apparatus 106 for the updated AV stream files to be downloaded from the server apparatus 106 in the corresponding BUDA path 722. For example as shown in Fig.20, when the BD-RE disc 104B is inserted in the playback apparatus, the first file read from the BD-RE disc 104B is the mapping information file 220D. At this time, the playback apparatus references the progressive playlist information 702 of the mapping information file 220D, and acquires the URL 723 written therein. By doing this, the playback apparatus accesses the URL 723 before reading the dynamic scenario information from the BD-RE disc 104B, and can begin downloading the corresponding updated AV stream file.

### [Embodiment 5]

Fig.36 shows a schematic view of a usage configuration of a playback apparatus 901 according to embodiment 4 of the present invention. In Fig.36, the playback apparatus 901 is incorporated into a car navigation system along with a display apparatus 102 and a remote control 103. Similarly to the recording/playback apparatus 101 according to embodiment 1 shown in Fig.1 the playback apparatus 901 can play back data from a BD-ROM disc and a BD-RE disc. In particular, the virtual package can be correctly constructed from the BD-RE disc 104B on which the binding unit 220 and the identification information file 230 have been written as shown in Fig.27. However, the playback apparatus 901 have neither the function of connecting to a network, nor the function of recording data on the optical disc 104, in contrast to the recording/playback apparatus 101 of embodiment 1. In Fig.36, the same elements as those shown in Fig.1 are marked by the same reference symbols as those shown in Fig.1 Furthermore, details of the same elements can be found above in the description of embodiment 1.

Fig.37 is a block diagram showing a hardware structure of the playback apparatus 901. As shown in Fig.37, the playback apparatus 901 is different from the playback apparatus 101 according to embodiment 1 shown in Fig.1 1 in that the network interface 140 is not included, and that a control unit 960 does not have the function of recording data on the optical disc 104. However, other elements are the same as those in embodiment 1. In Fig.37, the same elements as those shown in FIG. 11 are marked by the same reference symbols as those shown in Fig. 11. Furthermore, details of the same elements can be found above in the description of embodiment 1.

Fig.38 is a functional block diagram of the control unit 960. As shown in Fig.38, the control unit 960 is different from the control unit 160 according to embodiment 1 shown in Fig. 14 in that neither the determination unit 165 nor the recording control unit 166 is included. However, other elements are the same as those in embodiment 1. In Fig.38, the same elements as those shown in FIG. 14 are marked by the same reference symbols as those shown in Fig. 14. Furthermore, details of the same elements can be found above in the description of embodiment 1.

Upon receiving a notification from the dispatcher 1643 that the optical disc 104 has been inserted in the optical disc drive 110, first, the BD-J module 1645 causes the optical disc drive 110 to identify whether the optical disc 104 is the BD-RE disc 104B. When the optical disc 104 is the BD-RE disc 104B, the BD-J module 1645 searches for the binding unit 220 on the BD-RE disc 104B. The BD-J module 1645 further instructs the optical disc drive 110 to transfer the binding unit 220 from the optical disc 104 to the local storage 120.

Fig.39 shows a schematic view of a process to transfer the binding unit 220. First, the BD-J module 1645 searches for the VFS directory 218 from the directory structure 204B on the BD-RE disc 104B, and furthermore searches for the mapping information file 220A therein. Next, the BD-J module 1645 reads the orgID and the discID from the ID file 212C, and creates the BUDA directory 251, the orgID directory 252, and the discID directory 253 in the local storage 120. Next, the BD-J module 1645 causes the optical disc drive 110 to transfer the file group 220 to the discID directory 253. In this way, the binding unit 220 is transferred to the local storage 120.

The BD-J module 1645 requests the virtual file system 163 to construct the virtual package. First, the virtual file system 163, with use of the mapping information file 220A, the signature information file 220B, and the merge certificate 212B, performs a verification of the mapping information file 220A. When this verification succeeds, the mapping file system 163 notifies the BD-J module 1645 to this effect. According to this notification, the BD-J module 1645 searches the discID directory 253 for the identification file 230. For example, as shown in Fig.28, the path, on the BD-RE disc 104B, of the updated data written in the BDMV directory 211 on the BD-RE disc 104B is recorded in the identification information file 230. The BD-J module 1645 further disables the correspondences between the paths that match the paths written in the identification information file 230 and the BUDA path 712, among the virtual package paths 711 written in the mapping information file 2201. Specifically, similarly to the rewriting of the mapping information file 220A shown in Fig.33 for example, the BD-J module 1645 deletes, from among the pairs of the virtual package paths 711 written in the virtual package information 701 and the BUDA paths 712, paths that match the paths written in the identification information file 230. As a result, as shown in Fig.33B, the pairs of the virtual package paths 711 of the files 224B and 225B in the trailer directory 221 shown in Fig.39 and the BUDA paths 712 remain in the rewritten mapping information file 220C. The BD-J module 1645 transfers the rewritten mapping information file 220C to the virtual file system 163. The virtual file system 163, in accordance with the mapping information file 220C, correlates the paths in the local storage 120 of the files 224B and 225B existing in the trailer directory 221 with the paths in the virtual package 206. In this way, the control unit 960 can correctly construct the virtual package 206 even from the BD-RE disc 104B on which updated data has been written together with original data in the BDMV directory 211 by the recording playback apparatus of embodiment 3.

Fig.40 is a flowchart of a process to play back a playlist by the playback apparatus 901 immediately after the BD-RE disc 104B is inserted in the optical disc drive 110. The playback process by the playback apparatus 901 is different from the playback process according to embodiment 1 shown in Fig.20, in that a step of rewriting the mapping information file according to the identification information is included, instead of the step of downloading the binding unit from the server apparatus. However, the description of embodiment 1 is applicable to the details of the steps that are the same as embodiment 1. The following describes the steps shown in Fig.40 in order.

Step S1: the operation unit 130 notifies the user operation detection module 162 that the optical disc 104 has been inserted in the disc drive 110. The user operation detection module 162 transmits the operation signal UO to the dispatcher 1643A. In accordance with the operation signal UO, the dispatcher 1643A notifies the BD-J module 1645 that the optical disc has been inserted.

Step S2: in response to the notification from the dispatcher 1643A, the BD-J module 1645 causes the optical disc drive 110 to identify whether the optical disc 104 is the BD-RE disc 104B. If the optical disc 104 is the BD-RE disc 104B, the BD-J module 1645 searches for the VFSData directory 218 on the BD-RE disc 104B, and furthermore searches for the mapping information file 220A therein. If the mapping information file 220A is detected, the process proceeds to step S3. If the VFSData directory 218 or the mapping information file 220A is not detected, the process proceeds to step S9.

Step S3: first, the BD-J module 1645 reads the orgID and the discID from the ID file 212C on the BD-RE disc 104B. Next, the BD-J module 1645 creates, in the local storage 120, the BUDA directory 251, the orgID directory 252, and the discID directory 253 in order. The BD-J module 1645 further causes the optical disc drive 110 to transfer the binding unit 220 from the VFSData directory 218 to the discID directory 253. Meanwhile, the BD-J module 1645 requests the virtual file system 163 to construct the virtual package in the virtual file system 163. Thereafter, the process proceeds to step S7.

Step S7: according to the request to construct the virtual package, the virtual file system 163 performs verification of the mapping information file 220A, with use of the mapping information file 220A, the signature information file 220B, and the merge certificate 212B. When the verification has succeeded, the virtual file system 163 notifies the BD-J module 1645 to that effect.

Step S60: according to the notification, the BD-J module 1645 searches for the identification information file 230 in the disc ID directory 253. When the identification information file 230 has been detected, the process proceeds to step S61. When the identification information file 230 has not been detected, the process proceeds to step S8.

Step S61: among the virtual package paths 711 written in the mapping information file 220A, the BD-J module 1645 disables the correspondences between the paths matching paths written in the identification information file 230 and the BUDA paths 712. The BD-J module 1645 further transfers the rewritten mapping information file 220C to the virtual file system 163.

Step S8: the virtual file system 163, in accordance with the virtual package information 701 in the rewritten mapping information file 220C, correlates the paths of the files 224B and 225B existing in the trailer directory 221 of the local storage 120 with the paths in the virtual package 206. In this way, the virtual package 206 is constructed.

Step S9: the dispatcher 1643A causes the virtual file system 163 to read the index file IF from the virtual package 206. The mode management module 1643 references the first play of the index table in the index file IF, and depending on the type of object specified in the item, assigns the current dynamic scenario information DS to the HDMV module 1644 or the BD-J module 1645. By doing this, the module 1644 or 1645 to which the current dynamic scenario information DS is to be assigned reads the object for the first play from the dynamic scenario information DS, and then executes programs according to the object, and in particular, performs a process to play back a playlist.

The recording/playback apparatus according to embodiment 3 of the present invention writes the updated data in the BDMV directory 211 on the BD-RE disc 104B together with the original data. By doing this, the mapping information file includes a path in the virtual package for data that is not actually included in the VFSData directory 218. The playback apparatus 901 according to embodiment 4 of the present invention can also correctly construct the virtual package with use of the identification information, as described above, even from this type of mapping information. In this way, the playback apparatus 901 can construct the virtual package merely from the BD-RE disc 104B even when not connected to a network.

### [Industrial Applicability]

The present invention pertains to technology for recording stream data on a recording medium, and playing the data back from the recording medium, and as described above, when the paths of the updated stream data in the virtual package match the paths on the recording medium of the stream data, the original stream data is deleted from the recording medium. In this way, the invention clearly has industrial applicability.

### [Reference Signs List]

- 204B: Directory structure on BD-RE disc
- 210: Root directory
- 211: BD movie directory
- 211 A: Index file
- 211 B: Movie object file
- 212: Playlist directory
- 213A: First playlist file
- 213B: Second playlist file
- 214: Clip information directory
- 214A: First clip information file
- 214B: Second clip information file
- 215: Stream directory
- 215A: First AV stream file
- 215B: Second AV stream file
- 218: Virtual file system data directory
- 220: Binding unit
- 220: Mapping information file
- 220B: Signature information file
- 221: Trailer directory
- 223A: First updated playlist file
- 224A: First updated clip information file
- 225A: First updated AV stream file
- 223B: Second updated playlist file
- 224B: Second updated clip information file
- 224C: Third updated clip information file
- 205: Directory structure of binding unit
- 251: BUDA directory
- 252: orgID directory
- 253: discID directory
- 225B: Second updated AV stream file
- 225C: Third updated AV stream file

## Claims

1. A recording apparatus for recording updated data onto a rewritable portable recording medium on which original data has been copied from a read-only recording medium, the original data including first stream data, the updated data including second stream data, and the updated data to be combined virtually with the original data to form a virtual package, the recording apparatus comprising:
a data storage unit that stores therein the updated data and mapping information indicating a path of the updated data in the virtual package;
a determination unit operable to perform path collation to determine, from the mapping information, whether a path to the second stream data in the virtual package matches a path to the first stream data on the portable recording medium;
a recording control unit operable to issue an instruction to write the updated data onto the portable recording medium, and when a result of the path collation is affirmative, to issue an instruction to delete the first stream data from the portable recording medium, and
a data recording unit operable to write and delete data in response to the instructions from the recording control unit.

2. The recording apparatus of claim 1 wherein
the mapping information includes information indicating whether the second stream data is missing data that is data to be downloaded from a server apparatus on a network during or before playback of the data by a playback apparatus,
the determination unit performs a missing data determination to determine, from the mapping information, whether the second stream data is the missing data, and
when a result of the missing data determination is affirmative, the recording control unit disables an instruction to write the second stream data onto the portable recording medium.

3. The recording apparatus of claim 1 I further comprising:
a communication unit operable to communicate with a server apparatus, wherein
the mapping information includes information indicating whether the second stream data is missing data that is data to be downloaded from a server apparatus on a network during or before playback of the data by a playback apparatus,
the determination unit performs a missing data determination to determine, from the mapping information, whether the second stream data is the missing data, and when a result of the missing data determination is affirmative, checks whether the second stream data is currently stored in the data storage unit, and
when a result of the missing data determination is affirmative, and the second stream data is not currently stored in the data storage unit, the recording control unit instructs the communication unit to download the second stream data from the server apparatus to the data storage unit.

4. The recording apparatus of claim 1 wherein
the original data further includes first playback path information indicating a path for playing back the first stream data,
the updated data further includes second playback path information and clip information, the second playback path information being updated from the first playback path information with information indicating a playback path of the second stream data, the clip information indicating a correspondence between the playback path of the second stream data and an address thereof, and
the recording control unit assigns a path on the portable recording medium as a path of a destination to write each portion of the updated data other than the second stream data and the clip information, the path on the portable recording medium being equivalent to a path in the virtual package to the portion of the updated data, and the recording control unit assigns predetermined paths on the portable recording medium as paths of destinations to write identification information of the updated data and to write the mapping information.

5. The recording apparatus of claim 1 wherein
the original data further includes first playback path information indicating a path for playing back the first stream data,
the updated data further includes second playback path information and clip information, the second playback path information being updated from the first playback path information with information indicating a playback path of the second stream data, the clip information indicating a correspondence between a playback path of the second stream data and an address thereof, and
the recording control unit assigns a path on the portable recording medium as a path of a destination to write each portion of the updated data other than the second stream data and the clip information, the path on the portable recording medium being equivalent to a path of the portion of the updated data in the virtual package, and the recording control unit deletes, from the mapping information, information indicating the path of the portion of the updated data in the virtual package, and then issues an instruction to write the mapping information.

6. The recording apparatus of claim 1 wherein
the original data further includes a first playback path information indicating a path for playing back the first stream data,
the updated data further includes second playback path information and clip information, the second playback path information being updated from the first playback path information with information indicating a playback path of the second stream data, the clip information indicating a correspondence between a playback path of the second stream data and an address thereof,
when a result of the path collation is negative, the determination unit further performs a parallel playback determination to determine, from the second playback path information, whether the first stream data is to be played back by the playback apparatus in parallel with the second stream data,
when a result of the parallel playback determination is affirmative, the recording control unit assigns predetermined paths in the portable recording medium as paths of destinations to write the second stream data, the clip information, and the mapping information, and
when a result of the parallel playback determination is negative, the recording control unit assigns paths on the portable recording medium as paths of destinations to write the second stream data and the clip information, the paths on the portable recording medium being equivalent to the paths in the virtual package to the second stream data and the clip information.

7. The recording apparatus of claim 6 wherein,
when a result of the parallel playback determination is negative, the recording control unit assigns predetermined paths on the portable recording medium as paths of destinations to write the identification information of the second stream data, the identification information of the clip information, and the mapping information.

8. The recording apparatus of claim 6 wherein,
when a result of the parallel playback determination is negative, the recording control unit deletes, from the mapping information, information indicating the paths in the virtual package to the second stream data and the clip information.

9. A method for recording updated data onto a rewritable portable recording medium on which original data has been copied from a read-only recording medium, the updated data including second stream data, and the updated data to be combined virtually with the original data to form a virtual package, the method comprising:
performing path collation to determine, from mapping information indicating a path of the updated data in the virtual package, whether a path to the second stream data in the virtual package matches a path to the first stream data on the portable recording medium;
when a result of the path collation is affirmative, deleting the first stream data from the portable recording medium, and
writing the updated data on the portable recording medium.

10. A program for causing a recording apparatus to write updated data onto a rewritable portable recording medium on which original data has been copied from a read-only recording medium, the updated data including second stream data, and the updated data to be combined virtually with the original data to form a virtual package, the program for causing the recording apparatus to:
perform path collation to determine, from mapping information indicating a path of the updated data in the virtual package, whether a path to the second stream data in the virtual package in the virtual package matches a path to the first stream data on the portable recording medium;
when a result of the path collation is affirmative, delete the first stream data from the portable recording medium, and
write the updated data on the portable recording medium.

11. A playback apparatus for playing back data from a rewritable portable recording medium which stores thereon
original data copied from a read-only recording medium,
updated data to be combined virtually with the original data to form a virtual package,
mapping information indicating a path of the updated data in the virtual package, and
identification information indicating a portion of the original data specified in the mapping information as a portion of the updated data,
the playback apparatus comprising:
a data reading unit operable to read data from the portable recording medium in response an instruction;
an updated data transfer unit operable to detect the mapping information from the portable recording medium, and issue the instruction to the data reading unit to read the update data and the mapping information from the portable recording medium;
a data storage unit that stores therein the updated data and the mapping information read from the portable recording medium;
a mapping information rewriting unit operable to detect the identification information from the portable recording medium, and delete, from the mapping information, information indicating a path in the virtual package to data indicated by the identification information;
a virtual file system operable to construct the virtual package in accordance with the mapping information rewritten by the mapping information rewriting unit, issue the instruction to the data reading unit to read the data from the portable recording medium when receiving an instruction to read, from the virtual package, data included in the original data, and read the data from the data storage unit when receiving an instruction to read, from the virtual package, data included in the updated data;
a playback target instruction unit operable to select, from at least one of the original data and the updated data, stream data to be played back, and to instruct the virtual file system to read from the virtual package the stream data to be played back, and
a playback unit operable to play back the stream data to be played back.

12. A playback method for playing back data from a rewritable portable recording medium which stores thereon
original data copied from a read-only recording medium,
updated data to be combined virtually with the original data to form a virtual package,
mapping information indicating a path of the updated data in the virtual package, and
identification information indicating a portion of the original data specified in the mapping information as a portion of the updated data,
the playback method comprising:
detecting the mapping information from the portable recording medium, and transferring the updated data and the mapping information from the portable recording medium to the data storage unit;
detecting the identification information from the portable recording medium, and deleting, from the mapping information, information indicating a path in the virtual package to data indicated by the identification information,
constructing the virtual package by a virtual file system according to the mapping information;
selecting, from at least one of the original data and the updated data, stream data to be played back, and instructing the virtual file system to read from the virtual package the stream data to be played back,
reading by the virtual file system the stream data to be played back, from the portable recording medium and the data storage unit, respectively, when the stream data to be played back is included in the original data and the updated data, and
playing back the stream data to be played back.

13. A program for causing a playback apparatus to play back data from a rewritable portable recording medium which stores thereon
original data copied from a read-only recording medium,
updated data to be combined virtually with the original data to form a virtual package,
mapping information indicating a path of the updated data in the virtual package, and
identification information indicating a portion of the original data specified in the mapping information as a portion of the updated data,
the playback program for causing the playback apparatus to:
detect the mapping information from the portable recording medium, and transfer the updated data and the mapping information from the portable recording medium to the data storage unit;
detect the identification information from the portable recording medium, and delete, from the mapping information, information indicating a path in the virtual package to data indicated by the identification information;
construct the virtual package by a virtual file system according to the mapping information;
select, from at least one of the original data and the updated data, stream data to be played back, and instruct the virtual file system to read from the virtual package the stream data to be played back;
read by the virtual file system the stream data to be played back, from the portable recording medium and the data storage unit, respectively, when the stream data to be played back is included in the original data and the updated data, and
play back the stream data to be played back.
